# EUROPEAN PATENT APPLICATION

(11) **EP 4 546 087 A1**
(43) Date of publication of application: **30.04.2025**
(21) Application number: 24725391.7
(22) Date of filing: 10.05.2024
(51) Int. Cl.: G06F 1/16

(54) **ELECTRONIC DEVICE COMPRISING HINGE ASSEMBLY**

(30) Priority: 30.08.2023 KR 20230114762; 23.10.2023 KR 20230141901
(71) Applicant: Samsung Electronics Co., Ltd., Suwon-si, Gyeonggi-do 16677 (KR)
(72) Inventor: KIM, Jongkeun, Suwon-si, Gyeonggi-do 16677 (KR); KANG, Jaeho, Suwon-si, Gyeonggi-do 16677 (KR); BAIK, Jinwook, Suwon-si, Gyeonggi-do 16677 (KR); HAN, Yonghwa, Suwon-si, Gyeonggi-do 16677 (KR)
(74) Representative: HGF
(86) International application number: PCT/KR2024/006381
(87) International publication number: WO 2025/048120

(57) **Abstract**

Disclosed is a portable electronic device including a housing, in which at least a portion of a display is disposed, and a hinge assembly coupled to the housing, and including a pressing structure that presses at least one shaft included in the hinge assembly in one direction, and modifications thereof.

## Description

### [TECHNICAL FIELD]

Various embodiments of the disclosure relate to electronic devices that include at least one hinge assembly.

### [BACKGROUND ART]

Portable electronic devices, such as smartphones, tablets, laptops, or slate PCs, may support call functions and various content provision functions based on various types of applications. A portable electronic device may output at least one screen corresponding to each function during a function support process. When using the above-described functions, the user may desire to use a wider screen. When a display for displaying a screen in a typical portable electronic device is attempted to be enlarged, an overall size of the electronic device has to be increased, which may deteriorate portability. Accordingly, a portable electronic device with a foldable display are being provided so that a size of the screen may be increased while the portability is maintained. A portable electronic device may provide a plurality of housings to support respective areas of the display in an unfolded state, and may include a hinge structure (or a hinge assembly) that connects the plurality of housings. The hinge structure may connect the plurality of housings while the plurality of housings are in a folded or unfolded state, and may help the housings to be held at a specific angle.

The above information may be provided as a related art to help understanding of the disclosure. None of the foregoing contents may not be used to be claimed as a prior art related to the disclosure, or to determine a prior art.

### [DETAILED DESCRIPTION OF THE INVENTION]

### [TECHNICAL SOLUTION]

An electronic device of the disclosure according to one of the above-described embodiment may include a flexible display, a housing accommodating the flexible display, and a hinge assembly coupled to the housing, the hinge assembly may include a first gear shaft, a second gear shaft, a first support member including a first opening and a second opening, and a second support member including a third opening and a fourth opening, the first support member and the second support member may be disposed to be adjacent to each other in a state, in which the first gear shaft is inserted through the first opening and the third opening, and a state, in which the second gear shaft inserted through the second opening and the fourth opening, the first opening partially may overlap the third opening whereby the first gear shaft contacts a peripheral portion defining the first opening in a first direction and contacts a peripheral portion defining the third opening in a second direction being different from the first direction, and the second opening may partially overlap the fourth opening whereby the second gear shaft contacts a peripheral portion defining the second opening in the first direction and partially contacts a periphery defining the fourth opening in the second direction.

The disclosure discloses other various embodiments.

### [ADVANTAGEOUS EFFECTS OF THE INVENTION]

### [DESCRIPTION OF THE DRAWINGS]

FIG. 1 is a view illustrating an example of a perspective view of unfolded and folded states of a portable electronic device according to an embodiment.
FIG. 2 is a view illustrating an example of an exploded perspective view of some components of a portable electronic device in an unfolded state according to an embodiment.
FIG. 3 is a view illustrating an example of an exploded perspective view of a hinge structure according to an embodiment.
FIG. 4 is a view illustrating an example of formation of irregular gaps due to movement of shafts.
FIG. 5 is a view illustrating a perspective view of a gear bracket according to an embodiment.
FIG. 6 is a view illustrating an example of a separated form of a gear bracket according to an embodiment.
FIG. 7 is a view illustrating an example of a contact state and a pushed form of a first sub gear bracket and a second sub gear bracket.
FIG. 8 is a view illustrating an example of a cross-section of a first interlocking gear and a gear bracket in a coupled state according to an embodiment.
FIG. 9 is a view illustrating an example of a disposition state of shafts and gear shafts according to an embodiment.
FIG. 10 is a view illustrating an example of a modified gear bracket according to an embodiment.
FIG. 11 is a view illustrating an example of another structure of a gear bracket according to an embodiment.
FIG. 12 is a view illustrating another example of another structure of a gear bracket according to an embodiment.
FIG. 13 is a view illustrating an example of at least some components of a hinge structure according to an embodiment.
FIG. 14 is a view illustrating an example of a cross-section taken along line A3-A3' of FIG. 13.
FIG. 15 is a view illustrating an example of a shaft pressing structure according to an embodiment.
FIG. 16 is a view illustrating an example of a cross-section taken along line A4-A4' of FIG. 15.
FIG. 17 is a view illustrating another example of a shaft pressing structure according to an embodiment.
FIG. 18 is a view illustrating an example of a cross-section cut along the line A5-A5' of FIG. 17.
FIG. 19 is a view illustrating an example of another disposition form of a gear bracket according to an embodiment.
FIG. 20 is a block diagram of an electronic device 2001 in a network environment 2000 according to various embodiments.

### [Mode for Invention]

Hereinafter, various embodiments of the disclosure will be described with reference to the accompanying drawings.

For example, hereinafter, a portable electronic device (or a portable communication device or a foldable electronic device) according to various embodiments of the disclosure may include a hinge structure (or a hinge assembly) having at least one gear, a shaft, in which the gear is formed, an interlocking structure that uses a gear bracket for fixing the shaft. When a user holds a plurality of housings coupled by the hinge structure and performs a folding or unfolding operation, differences in movement of the plurality of housings may occur depending on a form of presses applied during the folding or unfolding operation. A foldable electronic device including a plurality of housings may experience an interlocking error during the folding or unfolding process. The interlocking error may cause the user to feel loose or degrade a level quality due to movement during a free-play operation or a multi-stage operation (e.g., an operation of maintaining a plurality of holding angles or a holding angle of a certain range) of the foldable electronic device. As an example, the gear bracket that fixes a gear (or a main gear) that is formed on the shaft and an interlocking gear (or an idle gear) that is connected to the gear requires rotation of the gear, and thus, may include holes (or gaps or openings) having gaps with the shafts, in which the gears are formed. This gap may cause movement of the gears. In one embodiment, a device that may support more robust gear operation by reducing the above-mentioned gap or reducing the movement of the shaft, on which the gear is formed, is presented.

Other purposes according to embodiments of the disclosure will be mentioned as necessary in a process of describing the embodiments.

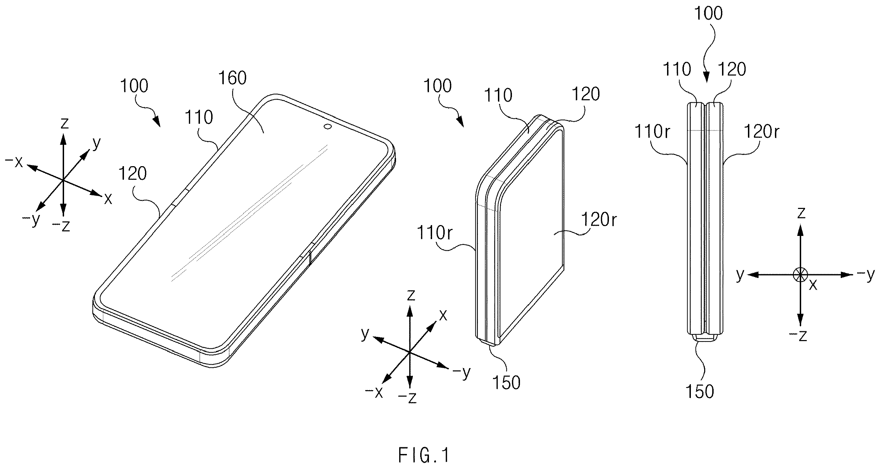

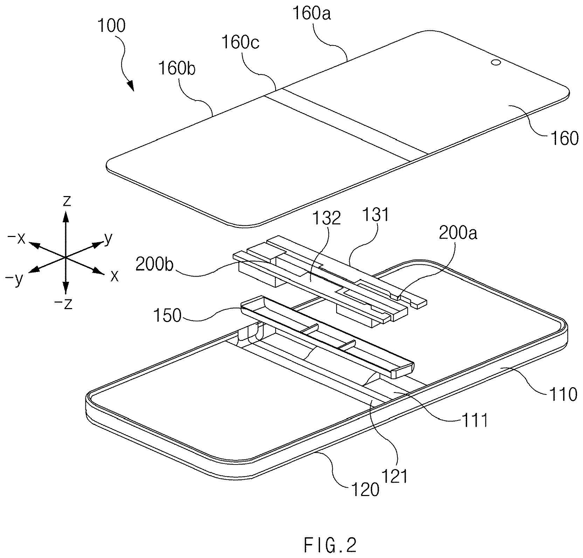

FIG. 1 is a view illustrating an example of a perspective view of unfolded and folded states of a portable electronic device according to an embodiment, and FIG. 2 is a view illustrating an example of an exploded perspective view of some components of the portable electronic device in the unfolded state according to an embodiment.

Referring to FIGS. 1 and 2, a portable electronic device 100 (or a foldable electronic device or an electronic device, a mobile electronic device) according to an embodiment may include a housing (e.g., housings including a first housing 110 and a second housing 120), a display 160 (e.g., a flexible display), hinge structures 200a and 200b (or a hinge structure, a hinge, a hinge assembly, a gear assembly), and a hinge housing 150, in which at least a portion of the hinge structures 200a and 200b is disposed on an inside thereof. For example, the first housing 110 and/or the second housing 120 of the portable electronic device 100 may include at least one of a modem, a transceiver, an antenna for cellular communication, an antenna for short-distance communication, and a wireless charging coil.

FIG. 1 illustrates a perspective view of the portable electronic device 100 in a flat state, an unfolding state, or an unfolded state, and a perspective view of the folded state, and FIG. 2 is a perspective view illustrating an exploded state of some components of the portable electronic device 100 in the unfolded state. Additionally or alternatively, the portable electronic device 100 may further include a first cover 110r that covers a rear part of the first housing 110 and a second cover 120r that covers a rear part of the second housing 120. Alternatively, a separate auxiliary display may be further disposed on a rear surface of at least one of the rear part of the first housing 110 or the rear part of the second housing 120. When the separate auxiliary display is disposed, at least one of the first cover 110r and the second cover 120r may be disposed or formed to surround the auxiliary display.

According to an embodiment, the hinge housing 150 may be a part of the first housing 110 or the second housing 120. According to an embodiment, the first housing 110, the second housing 120, and the hinge housing 150 may be parts of one housing. According to an embodiment, the first cover 110r, the second cover 120r, and the hinge housing 150 may be parts of one housing. According to an embodiment, the first housing 110 may be disposed continuously with the second housing 120 depending on a disposition state thereof (e.g., when a central portion 160c of the display 160 is unfolded flat or the housings are in the unfolded state), or may be disposed in parallel to the second housing 120. Alternatively, when the central portion 160c of the display 160 is folded, one surface of the first housing 110 may be disposed to face one surface of the second housing 120.

For example, at least a portion of the first housing 110 may be formed of a metal material (or entirely of a metal material), or at least a portion thereof may be formed of a non-metal material (or entirely of a non-metal material). For example, the first housing 110 may be formed of a material having a certain rigidity to support at least a portion of the display 160. One area (e.g., an upper portion 160a) (or an area in the x-axis direction or a first area of the display 160 and a portion of a central portion 160c) may be disposed at at least a portion of a front surface of the first housing 110. At least a portion of the first housing 110 may be coupled (or adhered) to an upper portion 160a of the display 160 (e.g., a rear surface (e.g., a surface in an opposite direction to a direction that faces the display 160) of an upper portion 160a). Alternatively, at least a portion of a periphery of a front surface (e.g., one surface that faces the z-axis direction) of the first housing 110 may be coupled to (disposed in or adhered to) at least a portion of the upper portion 160a of the display 160 while surrounding a periphery of the upper portion 160a of the display 160. Furthermore, one side of an upper portion of the front surface of the first housing 110 may be coupled to (or adhered to or disposed adjacent to) one side of an upper portion 160a of the display 160. In this regard, an adhesion layer (or adhesive member, adhesive material, or adhesive tape) may be disposed at least partially between the first housing 110 and the upper portion 160a of the display 160. At least a portion of an inside of the first housing 110 may be provided in a hollow form or may be provided in a hollow form while being coupled to the first cover, electronic elements (e.g., elements, such as a printed circuit board, at least one processor that is disposed in the printed circuit board, at least one memory, or a battery) that is required for driving the display 160 may be disposed.

According to an embodiment, peripheral ends of the first housing 110 (e.g., the remaining three peripheral ends except for a periphery that faces the second housing 120) of the first housing 110 may protrude from a bottom surface of a central portion of the housing by a specific height to surround a periphery of at least one side of the display 160. Alternatively, side walls, portions of which face the peripheries of the display 160 may be disposed at at least one portion of an end of a periphery of the first housing 110. The side walls formed at at least some of the peripheries of the first housing 110 may be formed to have a specific height at the peripheries of the remaining three sites except for the periphery that faces the second housing 120. The peripheral portion of the first housing 110, which faces the second housing 120, may include a recessed portion, a portion of which has a specific curvature such that at least a portion of the hinge housing 150 or at least a portion of the hinge structures 200a and 200b (or hinge structures) that are adjacent to (or seated on) the hinge housing 150 may be disposed therein. For example, when the portable electronic device 100 is in the unfolded state, the first housing 110 may include at least a first stepped portion 111, in which at least portions of the first hinge structure 200a and the second hinge structure 200b are disposed to be adjacent to (or seated on) a peripheral portion that faces the second housing 120.

According to various embodiments, the second housing 120 may be disposed in parallel to the first housing 110, or at least one surface thereof may be disposed to face one surface (a surface, on which the display 160 is disposed) of the first housing 110. The second housing 120 may be formed of the same material as that of the first housing 110. For example, at least a portion of the second housing 120 may be formed of a metal material, and at least some of the remaining portions may be formed of a non-metal material (e.g., an injection-molded material). Alternatively, the entire second housing 120 may be formed of a metal material or a non-metal material. Because the second housing 120 is disposed to be symmetrical leftward and rightward or upward and downward to the first housing 110, at least a portion (e.g., a lower portion 160b) (or a second area in the -x-axis direction) and an opposite side of the central portion 160c of the display 160) of an area of the remaining areas of the display 160, which is disposed in the first housing 110 may be disposed on the front surface. At least a portion of the second housing 120 may be adhered to the lower portion 160b of the display 160 (or adhered to at least a portion of a rear surface (a surface in -z-axis direction) of the lower portion 160b). Alternatively, a periphery of a front surface of the second housing 120 may be adhered to a periphery of the lower portion 160b of the display 160. Alternatively, one side of the front surface of the second housing 120 (or at least a portion of a lower portion of the front surface of the second housing 120) may be adhered to one side (or at least a portion of the lower portion 160b of the display 160) of the lower portion 160b of the display 160. In this regard, an adhesive layer may be disposed at at least a portion between the second housing 120 and the lower portion 160b of the display 160. At least a portion of an inside of the second housing 120 may be provided in a hollow form that is similar to that of the first housing 110, or may be provided in a hollow form while being coupled to the second cover 120r such that electronic elements that are required for driving the display 160 may be disposed.

According to various embodiments, peripheral ends (e.g., peripheral ends of the remaining three sites except for a periphery that faces the first housing 110) of the second housing 120 may protrude from a bottom surface of the second housing 120 by a specific height to surround a periphery of an opposite side of the display 160. Alternatively, similar to the side walls formed in the first housing 110, side walls, at least portions of which face the periphery of the display 160 may be disposed at at least portions of the peripheral ends of the second housing 120. The side walls formed at at least some of the peripheries of the second housing 120 may be formed to have a specific height at the peripheries of the remaining three sites except for the periphery that faces the first housing 110.

When the portable electronic device 100 is in the unfolded state, at least a portion of a part of the second housing 120, which faces the first housing 110, may include a recessed portion having a specific curvature such that the hinge housing 150 and the hinge structures 200a and 200b, at least portions of which are disposed adjacent to (or seated on) the hinge housing 150 are located therein. For example, the second housing 120 may include at least one second step portion 121, in which at least portions of the first hinge structure 200a and the second hinge structure 200b are disposed to be adjacent to (or seated on) the peripheral portion that faces the first housing 110.

According to an embodiment, the portable electronic device 100 may include at least one sensor that is disposed on one side of the first housing 110 or the second housing 120 and is related to an operation of a specific function of the portable electronic device 100. For example, the sensor may include at least one of a proximity sensor, an illumination sensor, an iris sensor, an image sensor (or a camera), or a fingerprint sensor. According to an embodiment, different components may be disposed in the first housing 110 and the second housing 120, respectively. For example, the camera may be disposed only in the first housing 110, and the short-distance communication antenna may be disposed only in the second housing 120.

According to an embodiment, the hinge housing 150 may be covered (e.g., the unfolded state of the housings) by one side of the first housing 110 and the second housing 120 depending on the folded or unfolded state of the portable electronic device 100 or may be exposed to an outside (e.g., the folded state of housings). For example, as illustrated in FIG. 1, when the first housing 110 and the second housing 120 are disposed in parallel to each other (or when the housings 110 and 120 are in the unfolded state), the hinge housing 150 may be covered by the first housing 110 and the second housing 120. When one surface of the first housing 110 and one surface of the second housing 120 are disposed to face each other (or when the housings 110 and 120 are in the folded state), at least a portion of the hinge housing 150 may be disposed to be exposed to an outside at a periphery (e.g., a periphery, at which the first housing 110 and the second housing 120 face each other in the unfolded state) of one side of the first housing 110 and the second housing 120.

According to an embodiment, at least a portion of the display 160 may be flexible. According to an embodiment, the display 160 may include the upper portion 160a or a first area that is disposed on the first housing 110, the lower portion 160b or a second area that is disposed on the second housing 120, and a central portion 160c or a central area, in which the first housing 110 and the second housing 120 are adjacent to each other. According to an embodiment, the entire display 160 may be flexible. Alternatively, at least a portion of the central portion 160c of the display 160 may be configured to be flexible. The central portion 160c of the display 160 may be disposed such that the first housing 110 and the second housing 120 are not adhered to each other. For example, the central portion 160c of the display 160 may be disposed to be spaced apart from front surfaces of the first housing 110 and the second housing 120 at a specific interval. The upper portion 160a of the display 160 may be coupled to (or adhered to, disposed to be adjacent to, or disposed to contact) at least a portion of the first housing 110, and the lower portion 160b of the display 160 may be coupled to at least a portion of the second housing 120. In this regard, an adhesive layer may be disposed in at least a partial area between the display 160 and the first housing 110, and an adhesive layer (an adhesive layer that is disposed at a different position from the adhesive layer that contacts the first housing 110 and at least a portion of the upper portion 160a of the display 160) may be disposed in at least a partial area between the display 160 and the second housing 120. The adhesive layer that is disposed in the first housing 110 and the adhesive layer that is disposed in the second housing 120 may be disposed only on the peripheries of the first housing 110 and the second housing 120.

According to an embodiment, the hinge structures 200a and 200b may include a first hinge structure 200a and a second hinge structure 200b. In the drawings, two hinge structures of the first hinge structure 200a and the second hinge structure 200b are disposed in the hinge housing 150, but the disclosure is not limited thereto, and as necessary, three or more hinge structures may be disposed in the hinge housing 150.

According to one embodiment, several hinge structures 200a and 200b may be disposed along the central portion 160c of the display 160. According to an embodiment, among the plurality of hinge structures 200a and 200b disposed along the central portion 160c of the display 160, at least some hinge structures 200a and 200b may include shape/structures or components that are different from those of the other hinge structures 200a and 200b.

The first hinge structure 200a may be disposed on one side (e.g., a left side of a longitudinal center line of the foldable electronic device in the drawing) of the hinge housing 150. The first hinge structure 200a may be coupled to one side (e.g., opposite sides of the first housing 110 and the second housing 120 in the area, in which the first housing 110 and the second housing 120 are disposed adjacent to each other when the foldable electronic device is in the unfolded state) of the first housing 110 and the second housing 120, and may be rotated within a specific range with respect to a long axis (or at least a portion of the central portion 160c, at which the display 160 is folded) of the hinge housing 150. The first hinge structure 200a may be disposed to be symmetrical to the second hinge structure 200b with respect to the central portion of the hinge housing 150. The first hinge structure 200a may include at least one shaft according to an embodiment of the disclosure, and may include a fixing structure that fixes the shaft temporarily or based on an elastic force. Additionally or alternatively, a gear may be disposed on the at least one shaft, and accordingly, the first hinge structure 200a may include at least a shaft, a gear that is disposed in the shaft, and a fixing structure for fixing the shaft.

The second hinge structure 200b may be disposed on an opposite side (e.g., on a left side of the longitudinal center line of the foldable electronic device in the drawing) of the hinge housing 150. The second hinge structure 200b may be coupled to an opposite side of the first housing 110 (e.g., a left side of a longitudinal center line (e.g., an imaginary line that crosses the center of the display 160 while running from the x-axis to the -x-axis) of the foldable electronic device, and an opposite side (e.g., a left side of the vertical center line of the foldable electronic device) of the second housing 120, and may be rotated within a specified range with respect to a transverse axis of the hinge housing 150. The second hinge structure 200b may be disposed to be symmetrical to the first hinge structure 200a with respect to the central portion of the hinge housing 150. The second hinge structure 200b has the same structure and configuration as those of the first hinge structure 200a, but the positions thereof may be different. The second hinge structure 200b may include at least one shaft according to an embodiment of the disclosure, and may include a fixing structure that fixes the shaft temporarily or based on an elastic force. Additionally or alternatively, a gear may be disposed in the at least one shaft, and accordingly, the second hinge structure 200b may include at least a shaft, a gear disposed in the shaft, and a fixing structure for fixing the shaft. According to an embodiment, the shaft pressing structure according to an embodiment of the disclosure may be disposed in at least one of the first and second hinge structures 200a and 200b (or all the hinge structures). Alternatively, when the portable electronic device 100 includes a plurality of hinge structures, the shaft pressing structure may be applied only to some of the plurality of hinge structures.

According to an embodiment, in the portable electronic device 100, wing plates 131 and 132 may be positioned on at least one hinge structure 200a and 200b or be coupled to the at least one hinge structure 200a and 200b, and is disposed to cover at least one surface of the hinge structures 200a and 200b in the z-axis direction when the portable electronic device 100 is in the unfolded state. The wing plates 131 and 132 may be provided separately from the housings 110 and 120. Accordingly, gaps may be formed between the wing plates 131 and 132 and the housings 110 and 120. According to an embodiment, the housings 110 and 120 may be provided with grooves, in which the wing plates 131 and 132 may be disposed. The wing plates 131 and 132 may be disposed to correspond to at least a portion of a lower surface (e.g., a surface in the -z-axis direction) of the third area 160c (or a central portion) of the display 160. The wing plates 131 and 132 may be rotated clockwise or counterclockwise according to a hinge operation of at least one hinge structure 200a and 200b. For example, while the first wing plate 131 is rotated counterclockwise, the second wing plate 132 may be rotated clockwise, and while the first wing plate 131 is rotated clockwise, the second wing plate 132 may be rotated counterclockwise. The first wing plate 131 may support the flat first surface of the third area 160c of the display 160, which is folded into a dumbbell shape (or a water drop shape), and the second wing plate 132 may support the flat second surface (a surface that is symmetrical to the first surface with respect to the z axis) of the third area 160c of the display 160, which is folded into a dumbbell shape. According to an embodiment, the structure including the first hinge structure 200a, the second hinge structure 200b, the first wing plate 131, and the second wing plate 132 may be referred to as a hinge structure, a hinge, a hinge assembly, or a gear assembly.

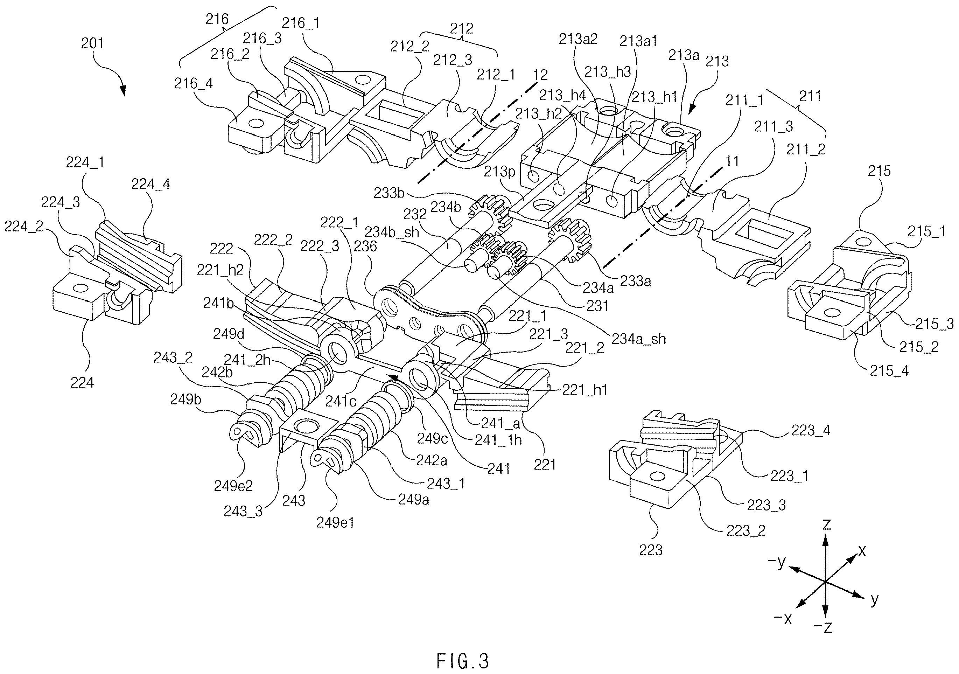

FIG. 3 is a view illustrating an example of an exploded perspective view of the hinge structure according to an embodiment. A hinge structure 201 illustrated in FIG. 3 may correspond to any one or both of the first hinge structure 200a or the second hinge structure 200b described above in FIG. 2.

Referring to FIGS. 1 to 3, the hinge structure 201 (or the gear assembly) may include a fixed bracket 213, a first rotation member 211, a second rotation member 212, a first arm member 221, a second arm member 222, a first link member 215, a second link member 216, a third link member 223, and a fourth link member 224.

For example, the fixed bracket 213 may include a first rail 213a1 (or a first rail structure that is inserted into the rail) and a second rail 213a2 (or a second rail structure that is inserted into the rail).

The first rotation member 211 may be rotated about a first axis 11 (e.g., an imaginary axis in the x-axis direction that is different from a first shaft 231). For example, the first rotation member 211 (or a first rotation structure, a first rotation part, a first rotation body) may include a first rotation body 211_3, a first rail structure 211_1 (or a first rail), into which the rail structure is inserted), and a second rail structure 211_2 (or a second rail, into which the rail structure is inserted).

The second rotation member 212 may be rotated about a second axis 12 (or a second imaginary axis that is different from a second shaft 232 and is formed in parallel to the first axis 11). For example, the second rotation member 212 (or a second rotation structure, a second rotation part, a second rotation body) may include a second rotation body 212_3, a third rail structure 212_1 (or a third rail that is inserted into the rail), and a fourth rail structure 212_2 (or a fourth rail that is inserted into the rail).

The first arm member 221 may be rotated about a center of the first shaft 231 (or a first central axis or the third axis of the shaft). For example, the first arm member 221 (or a first arm part, a first arm structure, or a first arm) may include a first arm body 221_3, a first arm part 221_1, and a second arm part 221_2.

The second arm member 222 may be rotated about a center of the second shaft 232 (or the second central axis or the fourth axis of the second shaft). For example, the second arm member 222 (or a second arm part, a second arm structure, or a second arm) may include a second arm body 222_3, a third arm part 222_1, and a fourth arm part 222_2.

The first link member 215 may support the rotation (or the sliding operation) of the first rotation member 211 while fixing the first rotation member 211 to the first housing 110 of FIG. 2. For example, the first link member 215 may include a first link body 215_3, an 11-th link side wall 215_1, a 12-th link side wall 215_2, and a first link connecting part 215_4.

The second link member 216 may support the rotation (or the sliding operation) of the second rotation member 212 while fixing the second rotation member 212 to the second housing 120 of FIG. 2. For example, the second link member 216 may include a second link body 216_3, a 21-st link side wall 216_1, a 22-nd link side wall 216_2, and a second link connecting part 216_4.

The third link member 223 may support the rotation (or the sliding operation) of the first arm member 221 while fixing the first arm member 221 to the first housing 110 of FIG. 2. For example, the third link member 223 may include a third link body 223_3, a 31-st link side wall 223_1, a 32-nd link side wall 223_2, and a third link connecting part 223_4. The first link member 215 and the third link member 223 may be integrally formed.

The fourth link member may support the rotation (or the sliding operation) of the second arm member 222 while fixing the second arm member 222 to the second housing 120 of FIG. 2. For example, the fourth link member 224 may include a fourth link body 224_3, a 41-st link side wall 224_1, a 42-nd link side wall 224_2, and a fourth link connecting part 224_4. The second link member 216 and the fourth link member 224 may be integrally formed.

At least some of the components (e.g., at least some of the first to fourth link members 215, 216, 223, and 224) of the hinge structure 201 described above may be omitted. For example, the first rotation member 211 and the second rotation member 212 may be directly coupled to the housings 110 and 120 of FIG. 2, the arm members 221 and 222 may be rotated in correspondence to the rotation of the rotation members 211 and 212 while being coupled to the rotation members 211 and 212. According to an embodiment, at least some of the first to fourth link members 215, 216, 223, and 224 may be integrally formed. As an example, the first link member 215 and the third link member 223 may be integrally formed, and the second link member 216 and the fourth link member 224 may be integrally formed. Alternatively, at least some of the first to fourth link members 215, 216, 223, and 224 may be integrally formed with the housing.

The hinge structure 201 according to an embodiment of the disclosure may include a first main gear 233a (or a first gear or a first shaft gear) that is formed (or disposed) in the first shaft 231, a second main gear 233b (or a second gear or a second shaft gear) that is formed (or disposed) in the second shaft 232, at least one interlocking gear 234a and 234b (or an idle gear or an auxiliary gear) that is disposed between the first main gear 233a and the second main gear 233b. The at least one interlocking gears 234a and 234b may include gear shafts 234a_sh and 234b_sh (or shafts), respectively. For example, the first interlocking gear 234a may be disposed (or formed) in the first gear shaft 234a_sh (or a first interlocking gear shaft, a first interlocking shaft, a first gear shaft, a first auxiliary shaft, a third shaft). The second interlocking gear 234b may be disposed (or formed) in the second gear shaft 234b_sh (or a second interlocking gear shaft, a second gear shaft, a second auxiliary shaft, or a fourth shaft).

In the embodiments of the disclosure, the shaft may refer to a bar-shaped portion, in which a gear body including gear teeth is disposed. Furthermore, the shaft may refer to a shaped portion that protrudes from the gear body portion along the rotation axis of the gear.

The hinge structure 201 according to an embodiment may include a gear bracket 236 (or a stopper, an arm support structure, a shaft support structure, a gear frame, a gear support member, or a support member) that is used to fix the first main gear 233a, the second main gear 233b, and at least one interlocking gear 234a and 234b and prevents the first arm member 221 and the second arm member 222 from being rotated by a specific angle or more, a shaft fixing part 243 that is used to fix the first shaft 231 and the second shaft 232, a cam member 241 that is cam-coupled to the cam structures formed on the first arm member 221 and the second arm member 222, a first cam elastic body 242a (or a third elastic body or a third elastic member) and a second cam elastic body 242b (or a fourth elastic body or a fourth elastic member) that provide an elastic force to the cam member 241, a plurality of engagement members 249e1 and 249e2, and washer rings 249a and 249b. The elastic bodies or members may also be described as resilient bodies or members, i.e. bodies or members that are able to recoil or spring back into shape after bending, stretching, or being compressed. According to an embodiment, the gear bracket 236 may include a fixed structure that fixes at least one of the first shaft 231, the second shaft 232, the first gear shaft 234a_sh, and the second gear shaft 234b_sh.

According to an embodiment, at least a portion of a shape of a lower surface (e.g., a surface in the -z-axis direction) of the fixed bracket 213 may include a curved surface. For example, at least a portion of the lower surface of the fixed bracket 213 may be formed to correspond to an inner shape of the hinge housing 150 of FIG. 2. At least a portion of an upper surface (e.g., a surface in the z-axis direction) of the fixed bracket 213 may be provided in a flat shape, and rails 213a2 and 213a1 are formed such that the rotation members 211 and 212 may be coupled. According to an embodiment, at least a portion of a cross-section of the fixed bracket 213 from the upper surface (e.g., a surface in the z-axis direction) to the lower surface (e.g., a surface in the -z-axis direction) may include an arc shape (or a curved surface). The fixed bracket 213 may include a bracket extension part 213p that protrudes from one side (e.g., a periphery of an upper surface of the fixed bracket body 213a in the -x-axis direction) in the -x-axis direction. The fixed bracket body 213a may include a first rail 213a1, into which the first rail structure 211_1 of the first rotation member 211 having the first rail structure 211_1 and the second rail structure 211_2 is inserted from one direction (e.g., the -x-axis direction) to an opposite direction (e.g., the x-axis direction), and a second rail 213a2, into which the third rail structure 212_1 of the second rotation member 212 having the third rail structure 212_1 and the fourth rail structure 212_2 is inserted from the opposite direction (e.g., the x-axis direction) to the one direction (e.g., the -x-axis direction). With respect to the first axis 11 or the second axis 12 (or with respect to the x axis that crosses a center between the first rotation member 211 and the second rotation member 212), the first rail 213a1 and the second rail 213a2 may be disposed (or formed) at the same position. The first rail structure 211_1 of the first rotation member 211, which is inserted into the first rail 213a1, may be rotated about the first axis 11, and the third rail structure 212_1 of the second rotation member 212, which is inserted into the second rail 213a2, may be rotated with respect to the second axis 12. The first axis 11 and the second axis 12 may be formed on an upper side (air) of an upper surface (e.g., a surface in the z-axis direction) of the fixed bracket 213. Alternatively, the first axis 11 and the second axis 12 may be formed between the upper surface of the display 160 of FIG. 2 and the lower surface (e.g., surface in the -z-axis direction) of the fixed bracket body 213a. As an example, the first axis 11 and the second axis 12 may be formed in the air above the upper surface (e.g., a surface in the -z-axis direction) of the fixed bracket body 213a.

According to an embodiment, one side (e.g., a side that faces the -x-axis direction) of the fixed bracket 213 may include a first groove 213_h1 (or a first hole, a first socket, a first opening, or a first opening portion), into which one side or one end (e.g., a periphery of an end edge in the x-axis direction) of the first shaft 231, in (or on) which the first main gear 233a is formed (or disposed), may be inserted, and a second groove 213_h2 (or a second hole, a second socket, a second opening, or a second opening portion), into which one side or one end (e.g., a periphery of an end edge in the x-axis direction) of a second shaft 231, in (or on) which a second main gear 233a is formed (or disposed), may be inserted. According to an embodiment, one side (e.g., a side that faces the -x-axis direction) of the fixed bracket 213 may include a third groove 213_h3 (or a third hole, a third socket, a third opening, or a third opening portion), into which one side or one end (e.g., one side of the first gear shaft 234a_sh formed at the central portion of the first interlocking gear 234a) (e.g., a periphery of an end edge in the x-axis direction) of the first interlocking gear 234a may be inserted, and a fourth groove 213_h4 (or a fourth hole, a fourth socket, a fourth opening, or a fourth opening portion), into which one side or one end (e.g., one side of the second gear shaft 234b_sh formed at the central portion of the second interlocking gear 234b) (e.g., a periphery of an end edge in the x-axis direction) of the second interlocking gear 234b may be inserted. The third groove 213_h3 and the fourth groove 213_h4 may be disposed between the first groove 213_h1 and the second groove 213_h2. Diameters (or cross-sectional sizes in the z-axis direction) of the third groove 213_h3 and the fourth groove 213_h4 may be smaller than diameters (or cross-sectional sizes in the z-axis direction) of the first groove 213_h1 and the second groove 213_h2. The hinge structure may include a first gear elastic body and a second gear elastic body. At least a portion of the first gear elastic body may be mounted on (or inserted into) the first gear shaft 234_sh, and at least a portion of the second gear elastic body may be mounted on(or inserted into) the second gear shaft 234b_sh.

According to an embodiment, the first axis 11 and the second axis 12 may be formed to be spaced apart from each other by a specific interval. According to an embodiment, the interval between the first axis 11 and the second axis 12 may be formed to be different from an interval between the first shaft 231 and the second shaft 232. As an example, the interval between the first axis 11 and the second axis 12 may be smaller than the interval between the first shaft 231 and the second shaft 232. According to an embodiment, the first axis 11 and the second axis 12 may be formed on an upper side of the first shaft 231 and the second shaft 232 with respect to the z-axis. Alternatively, the first axis 11 and the second axis 12 may be formed closer to the upper surface of the display 160 of FIG. 2 than the first shaft 231 and the second shaft 232 with respect to the z-axis. According to an embodiment, the fixed bracket body 213a may include at least one fixing hole that is used to fix the fixed bracket 213 to the hinge housing 150 of FIG. 2. In the portable electronic device 100, the fixed bracket 213 may be fixed to the hinge housing 150 of FIG. 2 by using an engagement member (e.g., a screw, a rivet, or welding).

Insertion grooves 213_h1 and 213_h2 (or shaft insertion grooves or shaft holes or shaft sockets), in which one end (e.g., an end in the y-axis direction) of one side of the first shaft 231 and one end (e.g., an end in the y-axis direction) of one side of the second shaft 232 are held, may be formed on a side wall of the fixed bracket body 213a in the -x-axis direction. According to an embodiment, the insertion grooves 213_h3 and 213_h4 (or gear shaft insertion grooves or gear shaft holes or gear shaft sockets), in which one side of the at least one interlocking gear 234a and 234b (e.g., the gear shafts 234a_sh and 234b_sh formed at the centers of the interlocking gears 234a and 234b) may be held, may be formed between the insertion grooves 213_h1 and 213_h2 of the side wall of the fixed bracket 213a in the -x-axis direction. As an example, the third insertion groove 213_h3 and the fourth insertion groove 213_h4 may be disposed between the first insertion groove 213_h1 and the second insertion groove 213_h2. The bracket extension part 213p may protrude from one side of the fixed bracket body 213a in the -x-axis direction. The bracket extension part 213p may be disposed to support or cover a gear (e.g., at least one of the first main gear 233a, the second main gear, the first interlocking gear 234a, and the second interlocking gear 234b.

According to an embodiment, the first rotation member 211 may include a first rotation body 211_3, a first rail structure 211_1 (or may be provided in a first rail shape, into which the first rail structure 211_1 is inserted) that extends to one end (e.g., an end in the x-axis direction) of one side of the first rotation body 211_3, and a second rail structure 211_2 (or may be provided in a second rail shape, into which the second rail structure 211_2 is inserted) that extends to one end (e.g., an end in the -x-axis direction) of an opposite side of the first rotation body 211_3. The first rotation body 211_3 may be disposed between the first rail structure 211_1 and the second rail structure 211_2. At least a portion of the first rotation body 211_3 may be fastened to one side of the fixed bracket body 213a. The first rail structure 211_1 and the second rail structure 211_2 may be formed to be stepped with respect to the first rotation body 211_3. The first rail structure 211_1 of the first rotation member 211 may be fastened to one side (e.g., the first rail 213a1) of the fixed bracket 213 to allow a hinge movement. The second rail structure 211_2 of the first rotation member 211 may be coupled to one side of the first link member 215 in correspondence to a hinge operation (or a rotation operation, or a sliding operation) of the first rail structure 211_1 to perform a sliding operation (or a rotation or an arc movement). While the first link member 215 coupled to the first housing 110 of FIG. 2 is moved according to the movement of the first housing 110 of FIG. 2, the first rail structure 211_1 of the first rotation member 211, which is coupled to the fixed bracket 213, may be rotated in place about the first axis 11. As an example, the second rail structure 211_2 of the first rotation member 211 perform a rotation (or sliding) operation in relation to the first link member 215 while being moved in one direction (e.g., counterclockwise while the portable electronic device 100 is folded from the unfolded state or clockwise while the portable electronic device 100 is unfolded from the folded state). At least a portion of, among the wing plates 131 and 132, the first wing plate 131 of FIG. 2 may be fixed to the first rotation member 211. As an example, when the hinge structure 201 is the first hinge structure 200a of FIG. 2, the first rotation member 211 may be coupled to the first wing plate 131 of FIG. 2, and when the hinge structure 201 is the second hinge structure 200b of FIG. 2, the first rotation member 211 may be coupled to the second wing plate 132 of FIG. 2. In this regard, the first rotation body 211_3 may include at least one hole or groove that is used to be coupled to the first wing plate 131 of FIG. 2.

According to an embodiment, the second rotation member 212 may include a part (e.g., the third rail structure 212_1) that is fastened to an opposite side (e.g., the second rail 213a2) of the fixed bracket 213 and fastened to allow a hinge movement, and a part (e.g., the fourth rail structure 212_2) that is coupled to a second link member 222, and a second rotation body 212_3 that is disposed between the third rail structure 212_1 and the fourth rail structure 212_2. When the rail shape of the fixed bracket 213 is replaced with a rail structure, the third rail structure 212_1 and the fourth rail structure 212_2 may be replaced with a rail shape, in which the rail structure is accommodated. The third rail structure 212_1 and the fourth rail structure 212_2 may be formed to be stepped with respect to the second rotation body 212_3. While the second link member 222 coupled to the second housing 120 of FIG. 2 is moved according to the movement of the second housing 120 of FIG. 2, the third rail structure 212_1 of the second rotation member 212, which is fastened to the fixed bracket 213, may be rotated in place about the second axis 12. The fourth rail structure 212_2 coupled to the second link member 222 may perform a rotation (or sliding) operation in the second link member 222 while being moved in one direction (e.g., counterclockwise while the portable electronic device 100 is folded from the unfolded state or clockwise while the portable electronic device 100 is unfolded from the folded state). The third rail structure 212_1 may include a rail structure that is similar to or the same as that of the first rail structure 211_1. The fourth rail structure 212_2 coupled to the second link member 222 may perform a rotation (or sliding) operation in the second link member 222 while being moved in one direction (e.g., counterclockwise while the portable electronic device 100 is folded from the unfolded state or clockwise while the portable electronic device 100 is unfolded from the folded state). In this regard, similar to the first link member 215, the second link member 222 may include rail wings, each of which has an empty space formed in the central portion and include a curved surface disposed in opposite sides thereof.

According to an embodiment, the second rotation member 212 may experience frictions with the fixed bracket 213 and the second link member 222 while the hinge operation is repeated, similar to the first rotation member 211, and may be formed of a material (e.g., a metal material) having a specific strength or higher that may endure them. For example, the second rotation member 212 may be formed of the same material as that of the first rotation member 211. A portion of, among the wing plates 131 and 132 of FIG. 2, the second wing plate 132 of FIG. 2 may be fixed to the second rotation member 212. As an example, when the hinge structure 201 is the first hinge structure 200a of FIG. 2, the second rotation member 212 may be coupled to the second wing plate 132 of FIG. 2, and when the hinge structure 201 is the second hinge structure 200b of FIG. 2, the second rotation member 212 may be coupled to the first wing plate 132 of FIG. 2. In this regard, the second rotation body 212_3 may include at least one hole or groove that is used to be coupled to the second wing plate 132 of FIG. 2. The second rotation member 212 may be moved in an opposite direction to that of the first rotation member 211. For example, while the first rail structure 211_1 of the first rotation member 211 is rotated counterclockwise, the third rail structure 212_1 of the second rotation member 212 may be rotated clockwise in place.

According to an embodiment, while the portable electronic device 100 is folded, the first rail structure 211_1 of the first rotation member 211 may be rotated counterclockwise, and the first link member 215 inserted into the second rail structure 211_2 may be slid (the sliding operation is relative, and the first link member 215 may be slid clockwise with respect to the second rail structure 211_2) clockwise along the second rail structure 212_2. While the portable electronic device 100 is folded, the third rail structure 212_1 of the second rotation member 212 may be rotated clockwise along the second rail 213a2 of the fixing bracket 213, and the second link member 222 inserted into the fourth rail structure 212_2 may be slid (the sliding operation is relative, and the second link member 222 is slid clockwise with respect to the fourth rail structure 212_2) counterclockwise.

According to an embodiment, the first link member 215 may include a structure that is coupled to and fixed to one side of the first housing 110 of FIG. 2. The first link member 215 may include an 11-th link side wall 215_1 (or a first side wall of the first link member 215) and a 12-th link side wall 215_2 (or second side wall of the first link member 215) that extend in the z-axis direction from opposite sides (e.g., the x-axis and -x-axis peripheries) of the first link body 215_3, and a first link connecting part 215_4 that connects the first link body 215_3 to the third link member 223. The first link member 215 may include a structure (e.g., the 11th link side wall 215_1 and the 12-th link side wall 215_2), in which a portion (e.g., the second rail structure 211_2) of the first rotation member 211 is disposed (or coupled, fastened, or seated). A rail wing that protrudes in a direction of the 12-th link side wall 215_2 may be formed in the 11-th link side wall 215_1, and a rail wing that protrudes in a direction of the 11th link side wall 215_1 may be formed in the 12-th link side wall 215_2. The rail wings may be fastened to the second rail structure 211_2. At least one structure (e.g., a hole, a socket, a slot, or a groove) that is used to fix the first link member 215 to the first housing 110 of FIG. 2 may be formed on at least one side wall of the 11-th link side wall 215_1 and the 12-th link side wall 215_2. The first link member 215 may be disposed in parallel to or integrally formed with the third link member 223 in the -x-axis (or the x axis) direction. The first link connecting part 215_4 may protrude from the 12-th link side wall 215_2 in a direction of the third link member 223.

According to an embodiment, the second link member 216 may include a structure that is coupled to and fixed to one side of the second housing 120 of FIG. 2. The second link member 216 may include a 21-st link side wall 216_1 and a 22-nd link side wall 216_2 that extend in the z-axis direction from opposite sides (e.g., the y-axis and -y-axis peripheries) of the second link body 216_3, and a second link connecting part 216_4 that is used to connect the second link member 216 to the fourth link member 224. The second link member 216 may include a structure (e.g., the 21-st link side wall 216_1 and the 22-nd link side wall 216_2), in which a portion (e.g., the fourth rail structure 212_2) of the second rotation member 212 is seated (or coupled, fastened, or disposed). A rail wing that protrudes in a direction of the 22-nd link side wall 216_2 may be formed on the 21-st link side wall 216_1, and a rail wing that protrudes in the direction of the 21-st link side wall 216_1 may be formed on the 22-nd link side wall 216_2. The rail wings may be fastened to the fourth rail structure 212_2. A structure (e.g., a hole, a socket, a slot, or a groove) that is used to fix the second link member 216 to the second housing 120 of FIG. 2 may be formed in the 21-st link side wall 216_1 and the 22-nd link side wall 216_2. The above-described second link member 216 may be disposed to be symmetrical to the first link member 215 with respect to the y-axis direction. The second link member 216 may be disposed in parallel to or integrally formed with the fourth link member 224 in the -x-axis (or the x axis) direction. The second link connecting part 216_4 may protrude from the 22nd link side wall 216_2 in a direction of the fourth link member 224.

According to an embodiment, the third link member 223 may include a structure, in which a portion of the first arm member 221 is disposed (or fastened, coupled, or seated). The third link member 223 may include a third link body 223_3, and a 31-st link side wall 223_1 and a 32-nd link side wall 223_2 that extend in the -z-axis direction from opposite sides (e.g., the y-axis and -y-axis peripheries) of the third link body 223_3. A rail wing that protrudes in a direction of the 32-nd link side wall 223_2 may be formed in the 31-st link side wall 223_1, and a rail wing that protrudes in a direction of the 31-st link side wall 223_1 may be formed in the 32-nd link side wall 223_2. The rail wings may be fastened to one side (e.g., the rail groove formed in the y-axis direction) and an opposite side (a rail groove formed in the -y-axis direction) of the second arm part 221_2 of the first arm member 221 including the first arm part 221_1 and the second arm part 221_2, respectively. A structure (e.g., at least one hole, socket, slot, or groove) that is used to fix the third link member 223 to the first housing 110 of FIG. 2 may be formed in the 31-st link side wall 223_1 and the 32-nd link side wall 223_2. An empty space may be formed between the 31-st link side wall 223_1 and the 32-nd link side wall 223_2, and the second arm part 221_2 of the first arm member 221 may be disposed in the empty space to guide a sliding operation of the second arm part 221_2. The third link member 223 may include a third link connecting part 223_4 that protrudes in the x-axis direction from one side (e.g., the 31-st link side wall 223_1) of the third link body 223_3. In a process of fixing the first link member 215 and the third link member 223 to the first housing 110 of FIG. 2, the third link connecting part 223_4 may be formed to overlap the first link connecting part 215_4 of the first link member 215 or be integrally formed therewith.

According to an embodiment, the fourth link member 224 may include a structure, in which a portion of the second arm member 222 is disposed (or coupled, fastened, or seated). In this regard, the fourth link member 224 may include a fourth link body (e.g., a link body that has the same shape as that of the third link body 223_3 and is disposed to a position that is symmetrical thereto with respect to the y-axis direction), a 41-st link side wall 224_1 and a 42-nd link side wall 224_2 that extend in the -z-axis direction from opposite sides (e.g., the y-axis and -y-axis peripheries) of the fourth link body, and a fourth link connecting part. A rail wing that protrudes in a direction of the 42-nd link side wall 224_2 may be formed in the 41-st link side wall 224_1, and a rail wing that protrudes in a direction of the 41-st link side wall 224_1 may be formed in the 42-nd link side wall 224_2. The rail wings may be fastened to one side (e.g., the rail groove of the fourth arm part 222_2 in the y-axis direction) and an opposite side (e.g., the rail groove of the fourth arm part 222_2 in the -y-axis direction) of the fourth arm part 222_2 of the second arm member 222 including the third arm part 222_1 and the fourth arm part 222_2. A structure (e.g., at least one hole, socket, slot, or groove) that is used to fix the fourth link member 224 to the second housing 120 of FIG. 2 may be formed in the 41-st link side wall 224_1 and the 42-nd link side wall 224_2. An empty space may be formed between the 41-st link side wall 224_1 and the 42-nd link side wall 224_2, and the empty space may be used to guide the fourth arm part 222_2 while one side (e.g., the fourth arm part 222_2) of the second arm member 222 is slid. The fourth link member 223 may include a fourth link connecting part 224_4 that protrudes in the x-axis direction from one side (e.g., the 41-st link side wall 224_1) of the fourth link body. In a process of fixing the second link member 216 and the fourth link member 224 to the second housing 120 of FIG. 2, the fourth link connecting part 224_4 may be formed to overlap the second link connecting part 216_4 of the second link member 216 or be integrally formed therewith.

At least one of the first to fourth link members 215, 216, 223, and 224 may be formed of the same material. Alternatively, they may be formed at least partially of different structures (e.g., an injection-molded material). Meanwhile, it has been exemplified in the above description that the link members 215, 216, 223, and 224 are separated from each other, the disclosure is not limited thereto. For example, the first link member 215 and the third link member 223 may be connected to each other or integrally formed with each other, and the second link 216 and the fourth link member 224 may be connected to each other or integrally formed with each other.

According to an embodiment, the first arm member 221 may be disposed to be symmetrical to the second arm member 222 with respect to the x axis or the -x axis (or the x axis). Accordingly, a part of a structure of the first arm member 221 described below, which may be difficult to be observed in the illustrated drawings, will be described with reference to a structure of the second arm member 222. The first arm member 221 may be rotated from the y axis in the z-axis direction while the portable electronic device 100 is changed from the unfolded state to the folded state with respect to a center of the first shaft 231, and may be rotated from the z axis in the y-axis direction while the portable electronic device 100 is changed from the folded state to the unfolded state. Alternatively, the first arm member 221 may be rotated counterclockwise (e.g., a direction, in which the portable electronic device 100 is operated from the unfolded state to the folded state) or clockwise (e.g., the portable electronic device 100 is operated from the folded state to the unfolded state) with respect to the x-axis direction. The first arm member 221 may include a first arm body 221_3, a first arm part 221_1, and a second arm part 221_2. The first arm body 221_3 may be disposed between the first arm part 221_1 and the second arm part 221_2. The first arm part 221_1 may include a first through-hole 221_h1 that is formed to extend in the x-axis direction from the first arm body 221_3, and is configured such that the first shaft 231 passes therethrough, and a first cam structure that performs a cam operation while contacting one side (e.g., a cam part that is disposed in the -x-axis direction) of the cam member 241 may be provided in a peripheral structure that defines the first through-hole 221_h1. At least a portion of the first through-hole 221_h1 may have a crushed form or a portion thereof in a z-axis cross-section may have a "D" shape to be rotated according to rotation of the first shaft 231. A first cam structure of the first arm part 221_1 may be formed on a surface (a surface of the first arm member 221 in the -y-axis direction, or a central direction of the hinge housing 150 of FIG. 2) that faces the cam member 241. The first arm part 221_1 that faces the gear bracket 236 may include a hook or a step that is configured to be stopped by one side (e.g., a stopper portion of an area, in which the first main gear 233a is disposed) of the gear bracket 236 when the portable electronic device 100 is to be rotated by a predetermined angle or more. According to an embodiment, the gear bracket 236 may include a plurality of sub brackets. The first arm part 221_1 coupled to the first shaft 231 may be disposed between the gear bracket 236 and one side of the cam member 241. The second arm part 221_2 may be formed to extend in the -x-axis direction from the first arm body 221_3. The second arm part 221_2 may be fastened to the third link member 223 to be slid along the rail wings formed in the third link member 223 while the portable electronic device 100 performs a hinge operation. In this regard, the second arm part 221_2 may include rail grooves that may be fastened to the rail wings formed in the third link member 223.

According to an embodiment, the second arm member 222 may be disposed to be symmetrical to the first arm member 221 with respect to the y axis or the -y axis. The second arm member 222 may be rotated from the -y axis in the z-axis direction while the portable electronic device 100 is changed from the unfolded state to the folded state with respect to the x axis, and may be rotated from the z axis in the -y-axis direction while the portable electronic device 100 is changed from the folded state to the unfolded state. Alternatively, the second arm member 222 may be rotated clockwise while the portable electronic device 100 is folded with respect to a center of the second shaft 232, and may be rotated counterclockwise while the portable electronic device 100 is unfolded. The second arm member 222 may be rotated in an opposite direction to a movement direction of the first arm member 221. The second arm member 222 may include a second arm body 222_3, a third arm part 222_1, and a fourth arm part 222_2. The second arm body 222_3 may be disposed between the third arm part 222_1 and the fourth arm part 222_2. The third arm part 222_1 may include a second through-hole 221_h2 that is formed to extend in the -x-axis direction from the second arm body 222_3, and is configured such that the second shaft 232 passes therethrough, and a second cam structure that performs a cam operation while contacting an opposite side (e.g., a cam part that is disposed in the x-axis direction) of the cam member 241 may be provided in a peripheral structure that defines the second through-hole 221_h2. Similar to or in the same way as the structure of the first through-hole 221_h1, at least a portion of the second through-hole 221_h2 may have a crushed form or a portion thereof in a z-axis cross-section may have a "D" shape to be rotated according to rotation of the second shaft 231. A second cam structure of the third arm part 222_1 may be formed on a surface (e.g., a surface of the second arm member 222 in the -y-axis direction, or a central direction of the hinge housing 150 of FIG. 2) that faces the cam member 241. The third arm part 222_1 that faces the gear bracket 236 (which may also be described as a gear bracket structure, module, or assembly, or a shaft (or gear shaft) support, support structure, support module, or support assembly) may include a hook or a step that is configured to be stopped by an opposite side (e.g., a stopper portion of an area, in which the second main gear 233b is disposed) of the gear bracket 236. The step of the third arm part 222_1 may be supported by the gear bracket 236 such that the portable electronic device 100 is prevented from being folded by a specific angle or more when an external pressure is applied by not less than an angle (e.g., an angle that is more than 180 degrees), by which the portable electronic device 100 is unfolded. The third arm part 222_1 coupled to the second shaft 232 may be disposed between the gear bracket 236a and one side of the cam member 241. The fourth arm part 222_2 may be formed to extend in the x-axis direction from the second arm body 222_3. The fourth arm part 222_2 may be fastened to the fourth link member 224 to be slid along the rail wings formed in the fourth link member 224 while the portable electronic device 100 performs a hinge operation. In this regard, the fourth arm part 222_2 may include rail grooves that may be fastened to the rail wings formed in the fourth link member 224.

According to various embodiments, the rail structure (or an arc-shaped rail structure) formed in the first rotation member 211, the second rotation member 212, the first arm member 221 and the second arm member 222, the first to fourth link members 215, 216, 223, and 224, and the fixed bracket 213 may have any one of a rail groove or a rail protrusion, and another configuration that is coupled thereto may have a shape of a rail protrusion or a rail groove. As an example, the second rail structure 211_2 of the first rotation member 211 may have a shape of a rail groove, but may be changed in a shape of a rail protrusion, and correspondingly, the first link member 215 may have a structure of a rail protrusion that may be inserted into the rail groove of the second rail structure 211_2, and may be changed to a shape of a rail groove correspondingly when the first rotation member 211 is changed to a shape of a rail protrusion. Similarly, when one side of the rail structure between the second rotation member 212 and the second link member 216, the first arm member 221 and the third link member 223, and the second arm member 222 and the fourth member 224 has a structure of a groove or a protrusion such that they are engaged with each other, the other side thereof may be designed to have a structure of a protrusion or a groove.

According to an embodiment, the first shaft 231 may have a rod shape, of which a length in the x-axis or -x-axis direction is greater than a length in the y-axis or z-axis direction. The first shaft 231 may be formed of a metal material to support configurations that are mounted thereon. The first main gear 233a may be coupled to or formed in or on (e.g., integrally formed with the first main gear 233a) an end of one side of the first shaft 231. At least a portion of a z-axis cross-section of the first shaft 231 may include a flat area and a curved surface. As an example, an upper surface and a lower surface of the z-axis of the first shaft 231 may be formed to be flat, and the opposite surfaces may include a curved surface. Alternatively, the z-axis cross-section of the first shaft 231 may have a polygonal shape (e.g., a triangle, a rectangle, a pentagon, a hexagon, or the like). Accordingly, the through-hole having a shape of a cylindrical structure may be maintained in a current state while not being rotated while the first shaft 231 is rotated, and when the through-hole is a structure including an angled shape that is similar to the first shaft 231, it may be rotated together with the first shaft 231 while the first shaft 231 is rotated. For example, a first arm part 221_1 of the first arm member 221, a first fixed cam part 241a of the cam member 241, at least one washer ring (e.g., a first washer ring 249a, a third washer ring 249c, a first cam elastic body 242a, a first fixed part 243_1 of the shaft fixing part 243, or a first engagement member 249e1 (e.g., a first E-ring) may be mounted on the first shaft 231. According to an embodiment, one side of the gear bracket 236 may be mounted on the first shaft 231.

According to an embodiment, the second shaft 232 may have a shape that is the same as or similar to that of the first shaft 231. For example, the second shaft 232 may have a rod shape, of which a length in the x-axis or -x-axis direction may be greater than a length in the y-axis or z-axis direction. The second shaft 232 may be formed of a metal material having a strength of a specific magnitude to support the configurations that are mounted thereon. The second main gear 233b may be coupled to or formed in or on (e.g., integrally formed with the second main gear 233b) an end of one side of the second shaft 232. As an example, an upper surface and a lower surface of the second shaft in the z-axis cross-section may be formed flat, and opposite surfaces thereof may include a curved surface. Alternatively, the z-axis cross-section of the second shaft 232 may have a polygonal shape. Accordingly, the through-hole having a shape of a cylindrical structure may be maintained in a current state while not being rotated while the second shaft 232 is rotated, and when the through-hole is a structure including an angled shape that is similar to the second shaft 232, it may be rotated together with the second shaft 232 while the second shaft 232 is rotated. For example, a third arm part 222_3 of the second arm member 222, a second fixed cam part 241b of the cam member 241, at least one washer ring (e.g., a second washer ring 249b, a fourth washer ring 249d, a second cam elastic body 242b, a second fixed part 243_2 of the shaft fixing part 243, or a second engagement member 249e2 (e.g., a second E-ring) may be mounted on the second shaft 232. According to an embodiment, an opposite side of the gear bracket 236 may be mounted on one side of the second shaft 231.

The cam member 241 may include a cam body 241c, a first fixed cam part 241a, and a second fixed cam part 241b. Additionally or alternatively, the cam member 241 may include a first cam hole 241_1h that passes in the y-axis or -y-axis direction, in which at least a portion of the first shaft 231 is held after the first shaft 231 is inserted thereinto, and that is formed at a central portion of the first fixed cam part 241a, and a second cam hole 241_2h that passes in the y-axis or -y-axis direction, in which at least a portion of the second shaft 232 is held after the second shaft 232 is inserted thereinto, and that is formed at a central portion of the second fixed cam part 241b. The cam body 241 may have a specific length, and the first cam part 241a and the second cam part 241b may be disposed on opposite peripheries thereof. One surface (e.g., a surface in the x-axis direction) of the cam body 241c in one direction may be disposed to face one surface (e.g., a surface in the -x-axis direction) of the gear bracket 236s in one direction.

The first fixed cam part 241a may be disposed at a y-axis periphery from a center of the cam body 241c. The first fixed cam part 241a may have a cylindrical shape that surrounds the first cam hole 241_1h formed to pass in the x-axis or -x-axis direction, at a center thereof as a whole. The first cam part 241a may include a pattern, in which mountains and valleys are repeatedly disposed to be engaged with the cam structure formed in the first arm part 221_1 of the first arm member 221. A central portion of the first cam hole 241_1h may have a specific shape, such that the first shaft 231 passes therethrough. For example, the central portion of the first cam hole 241_1h may be circular. The second fixed cam part 241b may be disposed at a -y-axis periphery (or a position that is opposite to or symmetrical to a position, at which the first fixed cam part 241a is formed, with respect to the cam body 241c) from a center of the cam body 241c. The second fixed cam part 241b may have a cylindrical shape that surrounds the second cam hole 241_2h formed to pass in the x-axis or -x-axis direction, at a center thereof as a whole. The second cam hole 241_2h may be formed in parallel to the first cam hole 241_1h. The second fixed cam part 241b may include a repeated pattern of mountains and valleys to be engaged with a cam structure formed in the third arm part 222_1 of the second arm member 222. A central portion of the second cam hole 241_2h may have a specific shape such that the second shaft 232 passes therethrough. For example, similar to the first cam hole 241_1h, the central portion of the second cam hole 241_2h may be circular.

According to an embodiment, the cam member 241 may retreat in one direction (e.g., the -x-axis direction) in correspondence to cam operations of the cam structure of the first arm member 221 and the cam structure of the second arm member 222 while the first arm member 221 and the second arm member 222 are rotated within a specific angle range, and may be moved to an opposite direction (e.g., the x-axis direction) to one direction by elasticity of the first cam elastic body 242a (or the third elastic member) and the second cam elastic body 242b (or the fourth elastic member) to return to an original position.

According to an embodiment, the hinge structure 201 may include a plurality of ring structures (e.g., a first washer ring 249a, a second washer ring 249b, a third washer ring 249c, and a fourth washer ring 249d). One end (e.g., an end in the -x-axis direction) of the first shaft 231 may be inserted into the first washer ring 249a, and the first washer ring 249a may be disposed between the shaft fixing part 243 and the first engagement member 249e1. One end (e.g., an end in the -x-axis direction) of the second shaft 231 may be inserted into the second washer ring 249b, and the second washer ring 249b may be disposed between the shaft fixing part 243 and the second engagement member 249e2. The first washer ring 249a and the second washer ring 249b may support the first engagement member 249e1 and the second engagement member 249e2, or may prevent or restrain the first shaft 231 and the second shaft 232 from being separated from the fixed parts of the shaft fixing part 243, respectively. A hole may be formed at a central portion of the third washer ring 249c such that the first shaft 231 passes therethrough, and the third washer ring 249c may be disposed between the first cam elastic body 242a and the first fixed cam part 241a. The third washer ring 249c may receive a pressure applied to the first fixed cam part 241a by the first cam elastic body 242a preferentially and transmit it to the cam member 241, and thus, may eliminate a direct contact of the cam member 241 and the first cam elastic body 242a to prevent or restrain wear of the cam member 241 by the first cam elastic body 242a. The fourth washer ring 249d may perform the same role as that of the third washer ring 249c. For example, a hole may be formed at a central portion of the fourth washer ring 249d such that the second shaft 232 passes therethrough, and the fourth washer ring 249d may be disposed between the second cam elastic body 242b and the second fixed cam part 241b. The fourth washer ring 249d may preferentially uniformly receive a pressure applied to the second fixed cam part 241b by the second cam elastic body 242b, and may perform a role of transmitting it to the second fixed cam part 241b. Central portions of the plurality of ring structures (the first washer ring 249a, the second washer ring 249b, the third washer ring 249c, and the fourth washer ring 249d) may be circular, and may be maintained in a current state even through the first shaft 231 and the second shaft 232 are rotated. Meanwhile, at least some of the plurality of ring structures (e.g., the first washer ring 249a, the second washer ring 249b, the third washer ring 249c, and the fourth washer ring 249d) may be removed. Furthermore, at least some of the configurations of the other hinge structures 201 may be removed or modified.

According to an embodiment, a central portion of the first cam elastic body 242a (or a first elastic member) may have a hollow spring shape. At least a portion of the body of the first shaft 231, which passes through the first fixed cam part 241a, may be disposed at the central portion of the first cam elastic body 242a. The first cam elastic body 242a may be disposed between the cam member 241 and the shaft fixing part 243, and may be operated to push the cam member 241 in one direction (e.g., the x-axis direction) as the shaft fixing part 243 is fixed.

According to an embodiment, the second cam elastic body 242b (or a second elastic member) may be disposed to be spaced apart from the first cam elastic body 242a by a specific interval, and may be disposed to contact one surface of the second fixed cam part 241b. The second cam elastic body 242b may exert an elastic force to the second fixed cam part 241b of the cam member 241 through the fourth washer ring 249d. The elastic force generated by the second cam elastic body 242b may be similar to the elastic force generated by the first cam elastic body 242a within a specific range.

The shaft fixing part 243 may include a shaft body 243_3, a first fixed part 243_1, in which the first shaft hole is formed, and a second fixed part 243_2, in which the second shaft hole is formed. The shaft body 243_3 may include a through-hole that passes in an upward/downward direction (e.g., the -z-axis direction at one point in the z axis) and is used to fix the shaft fixing part 243 to the hinge housing 150 of FIG. 2. The first shaft hole formed in the first fixed part 243_1 may be formed to pass in the x-axis or -x-axis direction, and the first shaft may pass therethrough or be disposed therein. A shape of the first shaft hole may be provided in a cylindrical shape differently from a z-axis cross-section of the first shaft 231. The first fixed part 243_1 may support one side of the first cam elastic body 242a. The second shaft hole formed in the second fixed part 243_2 may be disposed in parallel to the first shaft hole with respect to the x axis and may be formed to pass in the x-axis or -x-axis direction, and the second shaft 232 may pass therethrough and be disposed therein. A shape of the second shaft hole may be provided in a cylindrical shape differently from a z-axis cross-section of the second shaft 231. The second fixed part 243_2 may support one side of the second cam elastic body 242b.

In various embodiments, at least some gears (e.g., at least one of the first main gear 233a, the second main gear 233b, the first interlocking gear 234a, and the second interlocking gear 234b) provided in the portable electronic device 100 may include one or more gear teeth, widths (thicknesses) of which are changed. As an example, the widths of the gear teeth may become gradually smaller or larger by a specific angle along a rotation axis of the gear. As an example, the gear teeth may be formed to include both of a section, in which the widths thereof are changed, and a section, in which the widths thereof are not changed. According to an embodiment, each of the gear teeth may include a lower end that protrudes from the gear body and is close to the gear body, and an upper end that extends from the lower end. For example, the lower end may correspond to a height to a pitch circle diameter in the gear structure. For example, the upper end may correspond to a height from the pitch circle diameter to an addendum circle in the gear structure. For example, the lower end and the upper end of the gear tooth may be configured such that tooth surfaces thereof are inclined at different angles with respect to the gear body. A distal end (e.g., an addendum surface) of the upper end may be formed flat. In an embodiment, the gear tooth, to which a gradient is applied, may have a gear shape, in which the lower end has a constant width and only the upper end has a width that is gradually changed. As an example, the gear tooth may have a gear tooth shape, in which both of the widths of the lower end and the upper end are changed. For example, the gear tooth may have a gear tooth shape, the width of which is changed at different angles at the lower end and the upper end. According to an embodiment, a height (a height from the gear body) of the gear tooth may not be changed to be constant in a section, in which the width of the tooth is changed. In an embodiment, the gear tooth may be formed in a gear tooth shape, in which the height (e.g., a height of the upper end) of the gear tooth also is changed such that the addendum circle diameter becomes gradually smaller in the section, in which the width of the tooth is changed.

According to various embodiments of the disclosure, the first main gear 233a and the second main gear 233b may be rotated while interlocking with each other through the first interlocking gear 234a and the second interlocking gear 234b located therebetween. The first interlocking gear 234a may transmit rotation of the first main gear 233a to the second interlocking gear 234b, between the first main gear 233a and the second interlocking gear 234b. The second interlocking gear 234b may transmit rotation of the first interlocking gear 234a to the second main gear 233b, between the first interlocking gear 234a and the second main gear 233b. As an example, one or more (e.g., two or four) interlocking gears may be provided between the first main gear 233a and the second main gear 233b. According to an embodiment, the number of the gear teeth of the first interlocking gear 234a and/or the second interlocking gear 234b may be different from that of the first main gear 233a and/or the second main gear 233b. For example, the number of the gear teeth of the first interlocking gear 234a and/or the second interlocking gear 234b may be smaller than that of the first main gear 233a and/or the second main gear 233b.

According to an embodiment, a length of the first interlocking gear 234a and/or the second interlocking gear 234b may be different from that of the first main gear 233a and/or the second main gear 233b. For example, the length of the first interlocking gear 234a and/or the second interlocking gear 234b may be greater than that of the first main gear 233a and/or the second main gear 233b. As an example, a width of the gear teeth of the first interlocking gear 234a and/or the second interlocking gear 234b may be changed in a section corresponding to the length of the first main gear 233a and/or the second main gear 233b. As an example, the widths of the gear teeth of the first interlocking gear 234a and/or the second interlocking gear 234b may not be changed in a section, in which they correspond to a length that is greater than those of the first main gear 233a and/or the second main gear 233b. For example, the first interlocking gear 234a and/or the second interlocking gear 234b may be coupled to the first main gear 233a and/or the second main gear 233b in a section, in which the widths of the gear teeth thereof are changed. For example, the first interlocking gear 234a and the second interlocking gear 234b may be coupled to each other in a section, in which the widths of the gear teeth thereof are not changed.

According to an embodiment, the number of the gear teeth of the first interlocking gear 234a and/or the second interlocking gear 234b may be different in the sections, in which the widths of the gear teeth are changed and not changed. According to an embodiment, the first interlocking gear 234a and/or the second interlocking gear 234b may be attached to the first main gear 233a and/or the second main gear 233b by using forces of the elastic body mounted on the first gear shaft 234a_sh and the elastic body mounted on the second gear shaft 234b_sh. According to an embodiment, due to the gradients that are formed in the gear teeth and the elasticity of the elastic body when the first or second main gear 233a or 234b and the first or second interlocking gear 234a or 234b are engaged with each other to be rotated, the intervals between the engaged gear teeth may be reduced. For example, the first or second main gear 233a or 233b and the first or second interlocking gear 234a or 234b may be maintained in a contact state while they are engaged with each other to be rotated. According to an embodiment, the first interlocking gear 234a and the second interlocking gear 234b may be in a noncontact state while being engaged with each other to be rotated.

According to an embodiment, the gear bracket 236 (e.g., the support member 236) including a plurality of sub brackets may function to support or fix the shafts (e.g., at least one of the first shaft 231, the second shaft 232, the first gear shaft 234a_sh, and the second gear shaft 234b_sh) inserted into the gear bracket 236 temporarily or semi-permanently in one direction due to the characteristics of being pushed in the z-axis or -z-axis direction by the forces pressed by the first cam elastic body 232a and the second cam elastic body 232b. As the gear bracket 236 presses the at least one shaft in the z-axis (or - z axis) direction, movement of the at least one shaft may be restrained while the portable electronic device 100 is changed to the folded or unfolded state whereby the at least one shafts may be prevented or restrained from being loosened, due to the prevention of the movement thereof. In other words, the gear bracket 236 (which may also be described as a gear bracket structure, module, or assembly, or a shaft (or gear shaft) support, support structure, support module, or support assembly) in certain embodiments comprises two components and a structure arranged such that, as the two components are compressed (or urged or forced) together by means of at least one resilient, elastic, or biasing member or component in a first direction (e.g. the X direction, or an axial direction), this results in the two components being pushed (or urged, or forced) apart in a second direction (e.g. a lateral direction, the Y direction, the Z direction, or a direction having both Y and Z components) perpendicular to the first direction such that surfaces of the two components are urged into contact with at least one shaft (e.g. a gear shaft). The arrangement may thus enable the two components effectively to grip the shaft or shafts and/or maintain contact with the shaft or shafts and eliminate gaps and or slackness in the hinge structure as the device is folded and unfolded (i.e. changed between folded and unfolded states), and when in an intermediate (partially folded or unfolded) state.

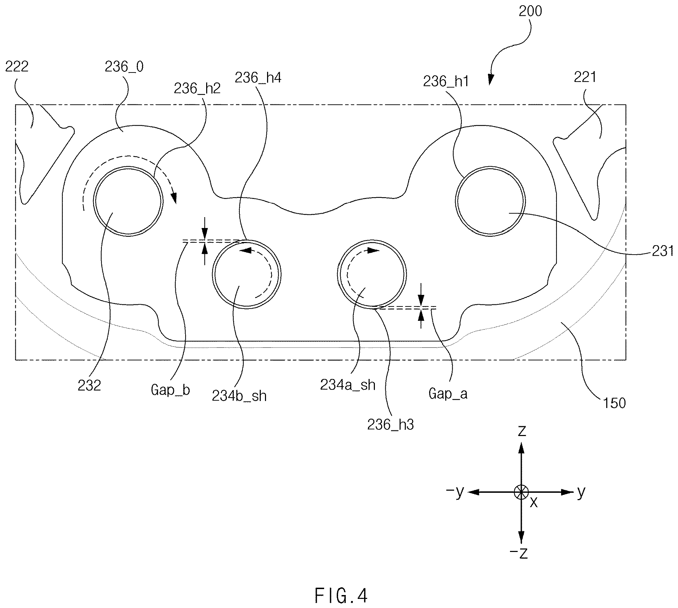

FIG. 4 is a view illustrating an example of formation of irregular gaps due to movement of shafts.

Referring to FIGS. 3 and 4, when the portable electronic device includes a basic gear bracket 236_0 of FIG. 4 that has no separate elastic structure or has a pressing function of pushing out the at least one shafts 231, 232, 234a_sh, and 234b_sh in one direction, the first shaft 231 may be temporarily in a stop state and the second shaft 232 may start to be rotated clockwise in correspondence to rotation of the second arm member 222 while the first housing 110 and the second housing 120 are folded. The basic gear bracket 236_0 may include a first shaft hole 236_h1, into which the first shaft 231 is inserted, a second shaft hole 236_h2, into which the second shaft 232 is inserted, a first gear shaft hole 236_h3, into which the first gear shaft 234a_sh is inserted, and a second gear shaft hole 236_h4, into which the second gear shaft 234b_sh. At least some of the shaft holes 236_h1, 236_h2, 236_h3, and 236_h4 may have diameters that are greater than those of the shafts for rotation of the shafts 231, 232, 234a_sh, and 234b_sh.

According to an embodiment, in correspondence to counterclockwise rotation of the second arm member 222 by a specific angle, the second interlocking gear 243b of FIG. 3 gear-coupled to the second main gear 233b of FIG. 3 formed in the second shaft 232 may be rotated clockwise by a specific angle, and the first interlocking gear 234a of FIG. 3 gear-coupled to the second interlocking gear 234b of FIG. 3 may be rotated counterclockwise by a specific angle. As described above, while the second interlocking gear 234b and the first interlocking gear 234a are rotated until the first shaft 231 is rotated after the second shaft 232 is rotated, gaps Gap_a and Gap_b may be formed between the gear shaft holes 236_h3 and 236_h4 formed in the basic gear bracket 236_0 and the gear shafts 234a_sh and 234b_sh. Due to the gaps, the gear shafts 234a_sh and 234b_sh may be moved while being rotated. The movements of the gear shafts 234a_sh and 234b_sh in the gear shaft holes 236_h3 and 236_h4 may be felt loosened by the user. In other words, there may be some undesirable play in the hinge mechanism, because of gaps between one or more shafts and the surface or surfaces of the gear bracket supporting the shaft or shafts.

Meanwhile, in the above description, it has been exemplified that the first shaft 231 is temporarily fixed and the second shaft 232 is rotated counterclockwise, but the disclosure is not limited thereto. For example, in the portable electronic device 99, depending on a starting point of a force applied to the housings 110 and 120 of FIG. 1, the second shaft 232 may be fixed while the portable electronic device 99 is folded, and the first shaft 231 may be rotated clockwise.

In relation to the improvement of the above-described loosening, according to an embodiment, when the portable electronic device 100 includes the gear bracket 236 (e.g., the support member or the support member of the claims) having a plurality of sub gear brackets having an elastic structure, the gear bracket 236 may restrain movement of the at least one shaft 231, 232, 234a_sh, and 234b_sh by pressing them.

As the movement is restrained according to the embodiments of the disclosure, an amount of free play or lost motion between the first housing 110 of FIG. 1 and the second housing 120 of FIG. 1 may be reduced. For example, when the housing 110 is rotated by about 2 to 8 degrees, the second housing 120 of FIG. 2 may start to be rotated. For example, the second housing 120 of FIG. 2 may start to be rotated before the first housing 110 of FIG. 2 is rotated five degrees.

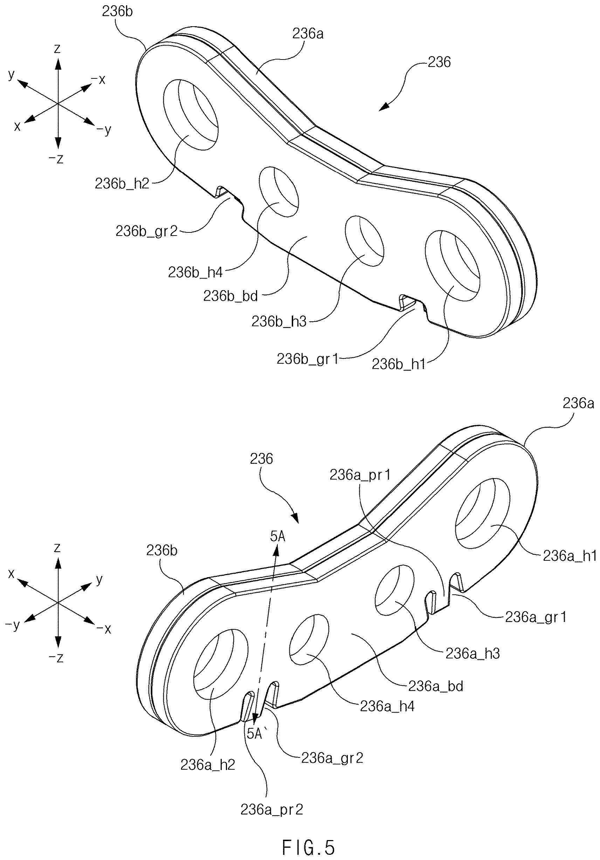

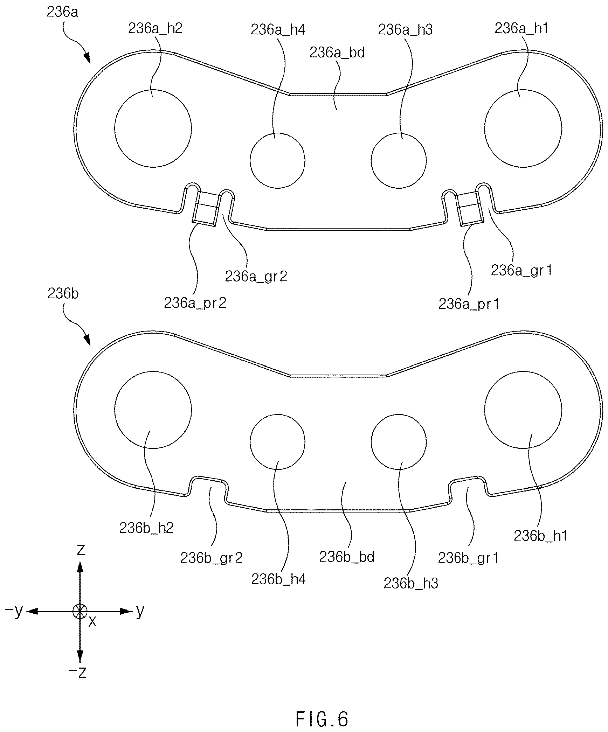

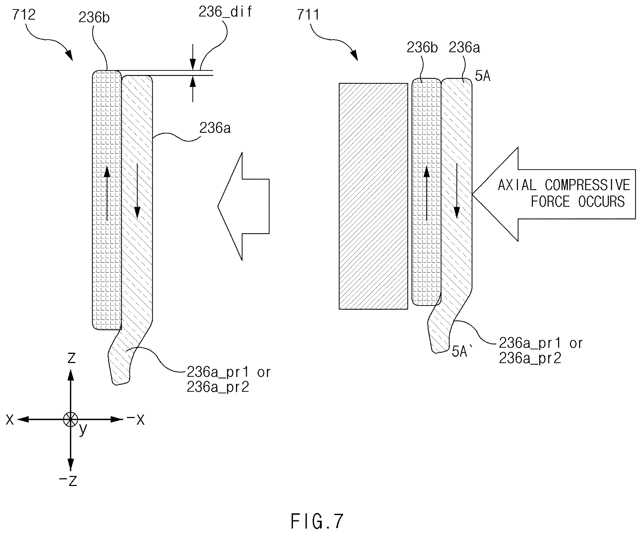

FIG. 5 is a view illustrating the gear bracket according to an embodiment. FIG. 6 is a view illustrating an example of a separated form of the gear bracket according to an embodiment. FIG. 7 is a view illustrating an example of a contact state and a pushed form of the first sub gear bracket and the second sub gear bracket. As an example, FIG. 7 is a view illustrating an example of a cross-section taken along cutting line 5A-5A' in a state, in which a first sub gear bracket 236a (e.g., the first support member or the first support member of the claims) and a second sub gear bracket 236b (e.g., the second support member or the second support member of the claims) illustrated in FIG. 5 contact each other. According to an embodiment, the portable electronic device 100 of the disclosure may include at least one display 160, a housing (e.g., 110 and 120), and a gear assembly (or the hinge structure 201), and the gear assembly may include at least one gear shaft (e.g., at least one of 234a_sh or 234b_sh), a first support member (e.g., the first sub gear bracket 236a (or a first plate) including a first opening set (e.g., the gear shaft holes 236a_h3 and 236a_h4), into which the at least one gear shaft is inserted, and a second support member (e.g., the second sub gear bracket 236b) (or a second plate) including a second opening set (e.g., the gear shaft holes 236b_h3 and 236b_h4), into which the at least one gear shaft is inserted, and that is arranged to partially overlap the first opening set, and that is disposed in parallel to (alongside) the first support member.

Referring to FIGS. 1 to 7, the gear bracket 236 according to an embodiment may include the first sub bracket 236a (or the first support member) and the second sub gear bracket 236b (or the second support member).

The first sub gear bracket 236a may include a first gear bracket body 236a_bd, a first shaft hole 236a_h1, a second shaft hole 236a_h2, a first gear shaft hole 236a_h3 (or a first hole or a first opening), and a second gear shaft hole 236a_h4 (or a second hole or a second opening). Among the first shaft hole 236a_h1, the second shaft hole 236a_h2, the first gear shaft hole 236a_h3, and the second gear shaft hole 236a_h4, at least one hole (or opening) may be included in the first opening set of the first sub gear bracket 236a (or the first support member). As an example, the first sub gear bracket 236a (or the first support member) may include the first opening set including the first gear shaft hole 236a_h3 and the second gear shaft hole 236a_h4.

A length of the first gear bracket 236a_bd in the first direction (e.g., the y-axis or -y-axis direction) may be formed to be greater than a length thereof in the second direction (e.g., the z-axis or -z-axis direction). A length (or width) of the first gear bracket body 236a_bd in the third direction (e.g., the x-axis or -x-axis direction) may be formed to be shorter than a length thereof in the first direction or the second direction. As an example, the first gear bracket body 236a_bd may have a structure that has a specific width in the second direction and is formed long in the first direction. Opposite peripheries of the first gear bracket body 236a_bd may be formed to be larger than a central portion thereof. As an example, in the first gear bracket body 236a_bd, the first shaft hole 236a_h1 may be disposed at a y-axis periphery thereof to pass in the x axis and the -x axis, and the second shaft hole 236a_h2 may be disposed in a -y-axis periphery to pass in the x axis and the -x axis. The first gear shaft hole 236a_h3 may be disposed (or formed) between the first shaft hole 236a_h1 and the second shaft hole 236a_h2. The second gear shaft hole 236a_h4 may be disposed (or formed) between the second shaft hole 236a_h2 and the first shaft hole 236a_h3. When being viewed from the z axis in the -z-axis direction (or a direction that faces a front surface of the display), the first sub gear bracket 236a may have a shape, in which a central portion of an upper end thereof is engraved or recess by a specific depth from the z axis in the -z-axis direction and opposite peripheries of the upper end thereof protrude in the z-axis direction. At least a portion of the central portion of the first sub gear bracket 236a may include a flat shape, and opposite peripheries thereof may have a round shape. When the first sub gear bracket 236a is viewed from the -z axis in the z-axis direction (e.g., a direction of the display from the rear surfaces of the housing 110 and 120 when the portable electronic device 100 is in the unfolded state), a central portion of a lower end of the first sub gear bracket 236a may protrude in the -z-axis direction as compared with the opposite peripheries of the lower end.

According to an embodiment, at least one elastic structure may be disposed at a lower end of the first gear bracket body 236a_bd. As an example, a first opening 236a_gr1 (or the first groove) may be formed in a specific space of a lower end of the first gear bracket body 236a_bd, between the first shaft hole 236a_h1 and the first gear shaft 234a_sh, and a second opening 236a_gr2 (or a second groove) may be formed in a specific space of the lower end of the first gear bracket body 236a_bd, between the second shaft hole 236a_h2 and the second gear shaft 234b-sh. The first opening 236a_gr1 (or the first groove) and the second opening 236a_gr2 (or the second groove) may have a shape that is engraved from the -z-axis direction in the z-axis direction. A first elastic protrusion 236a_pr1 (or a first elastic structure or a curved first extension part) having a specific inclination while protruding in the -z-axis direction may be disposed at a central portion of the first opening 236a_gr1, and a second elastic protrusion 236a_pr2 (or a second elastic structure or a curved second extension part) having a specific inclination while protruding in the -z-axis direction may be disposed at a central portion of the second opening 236a_gr2. As an example, at least a portion of the first elastic protrusion 236a_pr1 and the second elastic protrusion 236a_pr2 may have a shape that is curved from the -x axis in the x-axis direction. According to an embodiment, at least a portion of the first elastic protrusion 236a_pr1 and the second elastic protrusion 236a_pr2 may be disposed in a shape that protrudes in the x-axis direction (or the -x-axis direction) as compared with a surface (e.g., a zy plane) of the first gear bracket body 236a_bd. According to an embodiment, the first support member (e.g., the first sub gear bracket 236a) and the second support member (e.g., the second sub gear bracket 236b) may be coupled to each other through a pressing structure (e.g., the first elastic protrusion 236a_pr1 (or a curved first extension part) and the second elastic protrusion 236a_pr2 (or a curved second extension part) fastened to the first opening 236a_gr1 (or a first groove) and the second opening 236a_gr2 (or a second groove). The pressing structure may be configured to push the first support member (e.g., the first sub gear bracket 236a) in a direction, in which the flexible display 160 is disposed and push the second support member (e.g., the second sub gear bracket 236b) in an opposite direction to the direction, in which the flexible display 160 is disposed. In other words, the gear bracket 236 in certain embodiments is a gear bracket or support assembly 236 comprising a first support member 236a, having at least a first hole for receiving a first shaft and supporting the first shaft about (or around) a longitudinal axis of the first shaft (e.g. to support the first shaft to rotate about said longitudinal axis), a second support member 236b, having at least a first hole for receiving the first shaft and supporting the first shaft about (or around) said longitudinal axis (e.g. to support the first shaft to rotate about said longitudinal axis), and a mechanism arranged to urge the first support member 236a in a second direction (e.g. a lateral direction, such as a +Z direction) perpendicular to said longitudinal axis and urge the second support member 236b in a third direction (e.g. a lateral direction, such as a -Z direction) opposite to the second direction in response to a compressive force being applied to the support assembly 236 that urges the first and second support members 236a, 236b together in a first direction (e.g. an axial direction, such as the X direction) parallel to said longitudinal axis, such that the first and second support members 236a, 236b are urged against diagonally opposite sides of the first shaft to maintain contact with the first shaft (e.g. as it rotates). Thus, the mechanism is arranged such that the first and second support members grip (e.g. slidably grip) the first shaft, allowing it to rotate, if necessary, about the rotational axis, but maintain contact with the first shaft so as to avoid slack or play. The mechanism may, for example, take the form of at least one formation, element, or feature (e.g. a protrusion) on one of the support members arranged to engage (e.g. cooperate with) a corresponding formation, element, or feature (e.g. a sloped, ramped, or cam surface) on the other support member, to convert the axial compressive force into a lateral force or forces urging the support members apart in a direction perpendicular to the longitudinal (e.g. rotation) axis. Each of the first and second support members may be described as a movable support member, urged to remain in contact with a surface of the shaft (e.g. as the shaft rotates) by means of a resilient, elastic, or biasing member (such as the members 242a and 242b in FIG. 3).

According to an embodiment, one end of the first shaft 231 may be disposed to pass through the first shaft hole 236a_h1, and one end of the second shaft 232 may be disposed to pass through the second shaft hole 236a_h2. One end of the first gear shaft 234a_sh, at which the first interlocking gear 234a is disposed, may be disposed to pass through the first gear shaft hole 236a_h3, and one end of the second gear shaft 234b_sh may be disposed to pass through the second gear shaft hole 236a_h4. As an example, when sizes of cross-sections (e.g., z-axis cross-sections) of sides of the first shaft 231 and the second shaft 232 are larger than sizes of cross-sections (e.g., z-axis cross-sections) of sides of the first gear shaft 234a_sh and the second gear shaft 234b_sh, sizes of the first shaft hole 236a_h1 and the second shaft hole 236a_h2 may be larger than sizes of the first gear shaft hole 236a_h3 and the second gear shaft hole 236a_h4. Meanwhile, at least one of the shapes of the first sub gear bracket 236a and the second sub gear bracket 236b and the shapes, the sizes, and the disposition positions of the shaft holes 236a_h1, 236a_h2, 236a_h3, and 236a_h4 disposed in the sub gear brackets 236a, 236b may be modified into various forms.

The second sub gear bracket 236b (or the second support member) may include a second gear bracket body 236b_bd, a third shaft hole 236b_h1, a fourth shaft hole 236b_h2, and a third gear shaft hole 236b_h3, a fourth gear shaft hole 236b_h4, a first elastic holding structure 236b_gr1, and a second elastic holding structure 236b_gr2. The shape of the second gear bracket body 236b_bd may have at least one of the same size and the same shape as those of the first gear bracket body 236a_bd described above within a specific range, except for the first elastic holding structure 236b_gr1 and the second elastic holding structure 236b_gr2. Among the third shaft hole 236b_h1, the fourth shaft hole 236b_h2, the third gear shaft hole 236b_h3, and the fourth gear shaft hole 236b_h4, at least one hole (or opening) may be included in a second opening set of the second sub gear bracket 236b (or the second support member). As an example, the second sub gear bracket 236b (or the first support member) may include a second opening set including at least one of the third gear shaft hole 236b_h3 and the fourth gear shaft hole 236b_h4.

According to one embodiment, for example, the first elastic holding structure 236b_gr1 may include a groove that is opened in a direction that faces the -z axis from the z axis. For example, the first elastic holding structure 236b_gr1 may be disposed between the third shaft hole 236b_h1 and the third gear shaft hole 236b_h3 when viewed from the z axis to the -z-axis direction. A width of the first elastic holding structure 236b_gr1 may be at least larger than that of the first elastic protrusion 236a_pr1. Alternatively, at least one of a width and a shape of the first elastic holding structure 236b_gr1 may be substantially the same as at least one of a width and a shape of the first opening 236a_gr1, in which the first elastic protrusion 236a_pr1 is disposed, within a specific range. According to an embodiment, the first elastic holding structure 236b_gr1 may be physically contact the first elastic protrusion 236a_pr1. As an example, when an external force (e.g., an external force by at least one elastic body included in the hinge structure 201 of FIG. 3 or an elastic force generated from the -x axis in the x-axis direction) that is applied from the first sub gear bracket 236a to a direction of the second sub gear bracket 236b occurs as in state 711 of FIG. 7, the first elastic holding structure 236b_gr1 may contact the first elastic protrusion 236a_pr1 and act to push up the second sub gear bracket 236b in one direction (e.g., the z-axis direction) as in state 712 of FIG. 7. Correspondingly, when viewed in the z-axis direction, a height difference 236_dif between the first sub gear bracket 236a and the second sub gear bracket 236b may occur. While being disposed in parallel to each other in the first sub gear bracket 236a and the second sub gear bracket 236b (or disposed to have a specific height difference 236_dif), at least portion of the first elastic holding structure 236b_gr1 may be aligned with the first opening 236a_gr1 disposed in the gear bracket body 236a_bd.

According to an embodiment, a lower periphery (e.g., a periphery in the -z-axis direction) of the first opening (e.g., the first gear shaft hole 236a_h3) of the first opening set (e.g., the first gear shaft hole 236a_h3 or the second gear shaft hole 236a_h4) may be disposed to be closer to the flexible display 160 than a lower periphery (e.g., a periphery in the -z-axis direction) of the second opening (e.g., the second gear shaft hole 236b_h3) of the second opening set (e.g., the third gear shaft hole 236b_h3 or the fourth gear shaft hole 236b_h4), and an upper periphery (e.g., a periphery in the z-axis direction) of the third opening (e.g., the second gear shaft hole 236a_h4) may be disposed to be closer to a direction, in which the flexible display is disposed, than an upper periphery (e.g., a periphery in the z-axis direction) of the fourth opening (e.g., the fourth gear shaft hole 236b_h4).

The second elastic holding structure 236b_gr2 may include a groove that is opened in a direction that faces the -z axis from the z-axis, similar to the first elastic holding structure 236b_gr1. As an example, the second elastic holding structure 236b_gr2 may be disposed between the fourth shaft hole 236b_h2 and the fourth gear shaft hole 236b_h4 when viewed from the z-axis in the -z-axis direction. A width of the second elastic holding structure 236b_gr2 may be at least larger than that of the second elastic protrusion 236a_pr2. While the first sub gear bracket 236a and the second sub gear bracket 236b described in FIG. 6 are disposed to overlap (or to be parallel to) each other, at least a portion of the second elastic holding structure 236b_gr2 may be aligned with the second opening 236a_gr2 disposed in the first gear bracket body 236a_bd. Similar to the first elastic holding structure 236b_gr1, when an external force (e.g., an elastic force) occurs from the x axis in the -x-axis direction as in state 711 of FIG. 7, in the second elastic holding structure 236b_gr2, the elastic protrusions 236_pr1 or 236pr2 that contact the second sub gear bracket 236b at a specific inclination angle function to push up the second sub gear bracket 236b in the z-axis direction as in state 712 of FIG. 7. Correspondingly, when viewed from the z-axis, an upper end of the second sub gear bracket 236b may protrudes further in the z-axis direction than an upper end of the first sub gear bracket 236a whereby a height difference 236_dif of FIG. 7 may occur.

Meanwhile, it has been exemplified in the above description that the first gear bracket body 236a_bd includes the first elastic protrusion 236a_pr1 and the second elastic protrusion 236a_pr2, and the second gear bracket body 236b_bd includes the first elastic holding structure 236b_gr1 and the second elastic holding structure 236b_gr2, in the process of describing the structure, in which the pressing directions of the first sub gear bracket 236a and the second sub gear bracket 236b are different, but the disclosure is not limited thereto. For example, the above-described first gear bracket body 236a_bd including the first elastic protrusion 236a_pr1 and the second elastic protrusion 236a_pr2, and the second gear bracket body 236b_bd including the first elastic holding structure 236b_gr1 and the second elastic holding structure 236b_gr2 may be replaced with at least one of various embodiments described later, or may be applied together with at least one embodiment.

The holes (e.g., the first shaft hole 236a_h1, the second shaft hole 236a_h2, the first gear shaft hole 236a_h3, the second gear shaft hole 236a_h4, the third shaft hole 236b_h1, the fourth shaft hole 236b_h2, the third gear shaft hole 236b_h3, or the fourth gear shaft hole 236b_h4) according to embodiments of the disclosure may be formed in a form of a groove (or a recessed shape) that does not pass through the bracket (e.g., the first sub gear bracket 236a or the second sub gear bracket 236b).

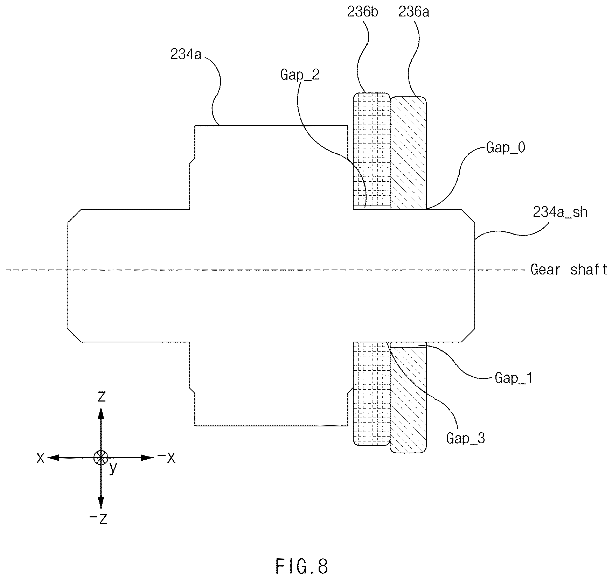

FIG. 8 is a view illustrating an example of a cross-section of the first interlocking gear and the gear bracket in a coupled state according to an embodiment.

Referring to FIGS. 1 to 8, the hinge structure (e.g., 201 of FIG. 3) according to an embodiment may include at least a first interlocking gear 234a, a first sub gear bracket 236a, and a second sub gear bracket 236b. Additionally, the hinge structure e.g., 201 of FIG. 3 may include at least one elastic body (e.g., the elastic body 242a and 242b of FIG. 3) that presses the first sub gear bracket 236a and the second sub gear bracket 236b from the - x-axis in the x-axis direction.

Referring to FIG. 8, as previously described in FIG. 7, when an external force that presses the first sub gear bracket 236a in the x-axis direction is generated by the elastic bodies 242a and 242b described in FIG. 3, the elastic structure (e.g., 236a_pr1 of FIG. 6) and the second elastic structure (e.g., 236a_pr2 of FIG. 6) disposed in the first elastic holding structure (e.g., 236b_gr1 of FIG. 6) and the second elastic holding structure (e.g., 236b_gr2 of FIG. 6) of the second sub gear bracket 236b and the first sub gear bracket 236a may perform an operation of pushing up the second sub gear bracket 236b in the z-axis direction. For example, while the first elastic structure (e.g., 236a_pr1 of FIG. 6) and the second elastic structure (e.g., 236a_pr2 of FIG. 6) contact the first elastic holding structure (e.g., 236b_gr1 of FIG. 6) and the second elastic holding structure (e.g., 236b_gr2 of FIG. 6), it may convert a horizontal external force transmitted from the elastic bodies 242a and 242b of FIG. 3, and may move the second sub gear bracket 236 in a vertical direction.

Correspondingly, with respect to a gear shaft (or an imaginary center line of the shaft), an inner wall (e.g., a ceiling of the first gear shaft hole 236a_h3 in the z-axis direction) of an upper end of the first gear shaft hole 236a_h3 of the first sub gear bracket 236a, into which the first gear shaft 234a_sh of the first interlocking gear 234a is inserted, may be in a state GAP 0, in which it contacts an upper end (e.g., an upper side in the z-axis direction) of the first gear shaft 234a_sh. According to an embodiment, an inner wall (e.g., a bottom of the first gear shaft hole 236a_h3 in the -z-axis direction) of a lower end of the first gear shaft hole 236a_h3 of the first sub gear bracket 236a, into which the first gear shaft 234a_sh of the first interlocking gear 234a is inserted, may be in a state Gap_1, in which it is spaced apart from a lower end (e.g., a lower side in the z-axis direction) of the first gear shaft 234a_sh with respect to the gear shaft.

According to an embodiment, while the first sub gear bracket 236a pushes up the second sub gear bracket 236b in the z-axis direction, an inner wall (e.g., a ceiling of the third gear shaft hole 236b_h3 in the z-axis direction) of an upper end of the third gear shaft hole 236b_h3 of the second sub gear bracket 236b, into which the first gear shaft 234a_sh of the first interlocking gear 234a is inserted, with respect to the gear shaft may be in a state Gap_2, in which it is spaced apart from an upper end (e.g., an upper side in the z-axis direction) of the second gear shaft 234b_sh with respect to the gear shaft. According to an embodiment, an inner wall (e.g., a bottom of the third gear shaft hole 236b_h3 in the -z-axis direction) of a lower end of the third gear shaft hole 236b_h3 of the second sub gear bracket 236b, into which the first gear shaft 234a_sh of the first interlocking gear 234a is inserted, may be in a state Gap_3 (a contact state without any gap), in which it contacts a lower end (e.g., a lower side in the z-axis direction) of the first gear shaft 234a_sh with respect to the gear shaft.

The above-described contact state between the first gear shaft 234a_sh, the first sub gear bracket 236a, and the second sub gear bracket 236b may be applied to the other shafts in the same way. As an example, an upper end of the second gear shaft 234b_sh in the z-axis direction may be in a state (state Gap_0 of the gear shaft 234a_sh), in which it contacts a ceiling of the second gear shaft hole 236a_h4 of the first sub gear bracket 236a in the z-axis direction, and a lower end of the second gear shaft 234b_sh in the -z-axis direction may be in a state (e.g., state Gap_1 of the first gear shaft 234a_sh), in which it is spaced apart from a bottom of the second gear shaft hole 236a_h4 of the first sub gear bracket 236a in the -z-axis direction. An upper end of the second gear shaft 234b_sh in the -z-axis direction may be in a state (e.g., state Gap_2 of the first gear shaft 234a_sh), in which it is spaced apart from a ceiling of the fourth gear shaft hole 236b_h4 of the second sub gear bracket 236b in the -z-axis direction, and a lower end of the second gear shaft 234b_sh in the -z-axis direction may be in a state (e.g., state Gap_3 of the first gear shaft 234a_sh), in which it contacts a bottom of the fourth gear shaft hole 236b_h4 of the second sub gear bracket 236b in the -z-axis direction.

Similarly, a contact relationship between the first shaft 231 and the second shaft 232 and the first shaft hole 236a_h1 and the second shaft hole 236a_h2 may be the same as the above-described contact relationship between the first gear shaft 234a_sh (or the second gear shaft 234b_sh) and the first gear shaft hole 236a_h3 (or the second gear shaft hole 236a_h4).

According to an embodiment, the first opening (e.g., any one of the first gear shaft hole 236a_h3 or the second gear shaft hole 236a_h4) included in the first opening set may have substantially the same size as that of the second opening (e.g., any one of the third gear shaft hole 236b_h3 or the fourth gear shaft hole 236b_h4) included in the second opening set, and the central portion of the first opening may be aligned such that a position is different from the central portion of the second opening. According to an embodiment, the first opening (e.g., any one of the first gear shaft hole 236a_h3 or the second gear shaft hole 236a_h4) included in the first opening set may be disposed to be spaced apart from the first gear shaft (e.g., 234a_sh) (or the second gear shaft 234b_sh) included in the at least one gear shaft in the first direction (e.g., in the -x-axis from the x axis), and may be disposed to contact it in the second direction (e.g., in the x-axis direction from the -x axis) in an opposite direction to the first direction. According to an embodiment, the second opening (e.g., any one of the third gear shaft hole 236b_h3 or the fourth gear shaft hole 236b_h4) included in the second opening set may be disposed to contact the first gear shaft (e.g., 234a_sh) (or second gear shaft 234b_sh) in the first direction, and may be disposed to be spaced apart therefrom in the second direction.

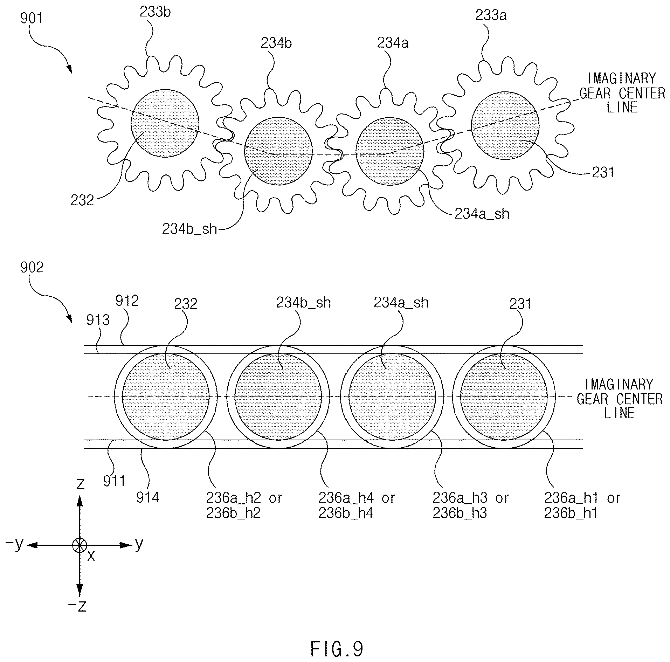

FIG. 9 is a view describing an example of a disposition state of the shafts and the gear shafts according to an embodiment.

Referring to FIG. 1 to 9, as in state 901, the hinge structure (e.g., 201 of FIG. 3) according to an embodiment may include at least the first gear shaft 234a_sh, the second gear shaft 234b_sh, the first shaft 231, the second shaft 232, the first main gear 233a, the second main gear 233b, and the first interlocking gear234a, the second interlocking gear 234b. For example, the first main gear 233a may be disposed in the first shaft 231, the second main gear 233b may be disposed in the second shaft 232, the first interlocking gear 234a may be disposed in the first gear shaft 234a_sh, and the second interlocking gear 234b may be disposed in the second gear shaft 234b_sh. The main gears 233a and 233b and the interlocking gears 234a and 234b may be rotated while being engaged with each other, and the shafts 231 and 232 and the gear shafts 234a_sh and 234b_sh may be rotated in correspondence to the rotation of the gears.

Referring to state 902, at least a portion of the first shaft 231 may be inserted into the first shaft hole 236a_h1 (or the third shaft hole 236b_h1 of the second sub gear bracket 236b). At least a portion of the second shaft 232 may be inserted into the second shaft hole 236a_h2 (or the fourth shaft hole 236b_h2 of the second sub gear bracket 236b). At least a portion of the first gear shaft 234a_sh may be inserted into the first gear shaft hole 236a_h3 (or the third gear shaft hole 236b_h3 of the second sub gear bracket 236b). At least a portion of the second gear shaft 234b_sh may be inserted into the second gear shaft hole 236a_h4 (or the fourth gear shaft hole 236b_h4 of the second sub gear bracket 236b). A gap may be formed between the shafts 231 and 232 and the shaft holes 236a_h1, 236a_h2, 236b_h1, and 236b_h2, and a gap may be formed between the gear shafts 234a_sh and 234b_sh and the gear shaft holes (e.g., 236a_h3, 236a_h4, 236b_h3, and 236b_h4) so that the shafts 231 and 232 and the gear shafts 234a_sh and 234b_sh may be rotated in correspondence to the rotation of the main gears 233a and 233b and the interlocking gears 234a, 234b.

According to an embodiment, as previously described in FIG. 7, in correspondence to an operation of the first sub gear bracket 236a and the second sub gear bracket 236b being twisted in different directions (e.g., the -z axis and z-axis directions), with respect to an imaginary gear center line (e.g., an imaginary center line with an assumption that the shafts 231 and 232 and the gear shafts 234a_sh and 234b_sh are disposed at the centers of the holes), at least a portion of the lower ends of the shafts 231 and 232 and the gear shafts 234a_sh and 234b_sh in the -z-axis direction may be in a state, in which it is adjacent to (or overlap when viewed in the x-axis direction) a first shaft limit line 911 that connects points of the bottoms of the shaft holes 236a_h1 and 236a_h2 and the gear shaft holes 236a_h3 and 236a_h4, which are formed in the first sub gear bracket 236a, and at least a portion of the upper ends of the shafts 231 and 232 and the gear shafts 234a_sh and 234b_sh in the z-axis direction may be in a state, in which points of the ceilings of the shaft holes 236a_h1 and 236a_h2 and the gear shaft holes 236a_h3 and 236a_h4, which are formed in the first sub gear bracket 236a, are spaced apart from a second shaft limit line 912.

According to an embodiment, while the first sub gear bracket 236a and the second sub gear bracket 236b are operated not to match up with each other by an external force, with respect to an imaginary gear center line, at least a portion of the upper ends of the shafts 231 and 232 and the gear shafts 234a_sh and 234b_sh in the z-axis direction may be in a state, in which it is adjacent to (or overlap when viewed in the x-axis direction) a third shaft limit line 913 that connects points of the ceilings of the shaft holes 236b_h1 and 236b_h2 and the gear shaft holes 236b_h3 and 236b_h4, which are formed in the second sub gear bracket 236b, and at least a portion of the lower ends of the shafts 231 and 232 and the gear shafts 234a_sh and 234b_sh in the -z-axis direction may be spaced apart from a fourth shaft limit line 914 that connects points of the bottoms of the shaft holes 236b_h1 and 236b_h2 and the gear shaft holes 236b_h3 and 236b_h4, which are formed in the second sub gear bracket 236b.

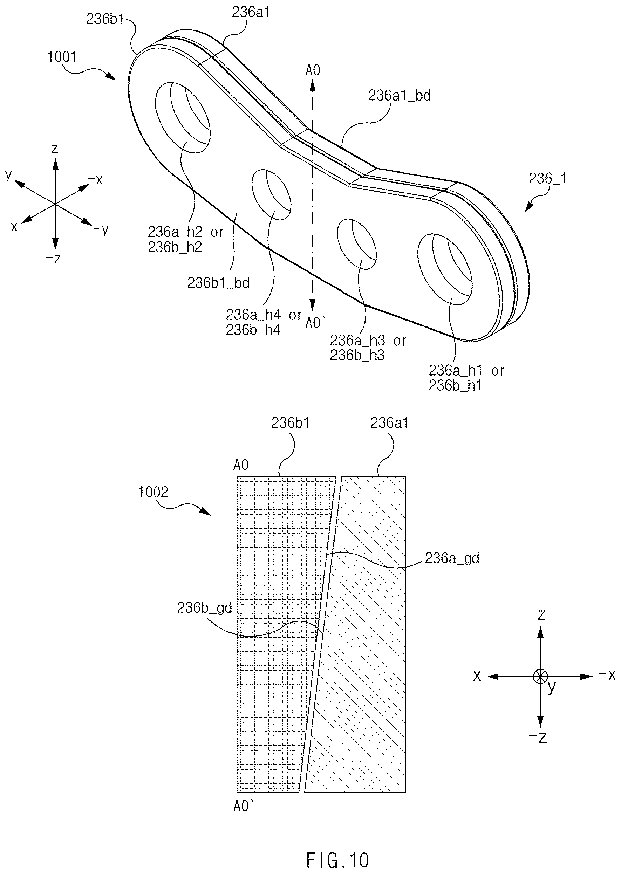

FIG. 10 is a view illustrating an example of a modified gear bracket according to an embodiment. In FIG. 10, state 1001 corresponds to a perspective view illustrating an example of a first modified gear bracket 236_1, and state 1002 corresponds to a cross-section taken along cutting line A0-A0', viewed from the y-axis direction.

Referring to FIGS. 1 to 10, the first modified gear bracket 236_1 according to an embodiment may include a first modified sub gear bracket 236a1 and a second modified sub gear bracket 236b1.

The first modified sub gear bracket 236a1 may include a first modified gear bracket body 236a1_bd, a first shaft hole 236a_h1, a second shaft hole 236a_h2, a first gear shaft hole 236a_h3, and a second gear shaft hole 236a_h4. The first shaft hole 236a_h1, the second shaft hole 236a_h2, the first gear shaft hole 236a_h3, and the second gear shaft hole 236a_h4 may have the same or similar structures to those of the shaft holes and gear shaft holes, which have been previously described in FIGS. 5 and 6, and at least a portion of the first shaft 231, the second shaft 232, the first gear shaft 234a_sh, and the second gear shaft 234b_sh may be inserted thereinto. Alternatively, the holes 236a_h1, 236a_h2, 236a_h3, and 236a_h4 included in the first modified sub gear bracket 236a1 may have different depths from those of the holes 236a_h1, 236a_h2, 236a_h3, and 236a_h4 previously described in FIGS. 5 and 6. As an example, the depths of the holes 236a_h1, 236a_h2, 236a_h3, and 236a_h4 included in the first modified sub gear bracket 236a1 may be different depending on the positions thereof on the z-axis.

The first modified gear bracket body 236a1_bd may be formed such that a length thereof in the first direction (e.g., the y axis or -y axis) is greater than a length in the second direction (e.g., the z axis or -z axis). A length (or width) of the first modified gear bracket body 236a1_bd in the third direction (e.g., the x-axis or -x-axis direction) may be formed to be shorter than a length thereof in the first direction or the second direction. As an example, compared to the first gear bracket body 236a_bd previously described in FIG. 5 or 6, at least one of a shape and a size of a surface of the first modified gear bracket body 236a1_bd, which faces the -x axis, may have the same size and the same shape in a specific error range, except for the first elastic protrusion 236a_pr1 and the second elastic protrusion 236a_pr2. At least a portion of a surface of the first modified gear bracket body 236a1_bd, which faces the x-axis direction, may include a first inclined surface 236a_gd having a first inclination. According to an embodiment, an x-axis thickness of the first modified gear bracket body 236a1_bd may be different depending on the position thereof in the z axis (or the -z axis). As an example, an x-axis thickness of a z-axis periphery of the first modified gear bracket body 236a1_bd may be different from an x-axis thickness of a -z-axis periphery thereof. For example, the x-axis thickness of the z-axis periphery of the first modified gear bracket body 236a1_bd may be smaller than the x-axis thickness of the -z-axis periphery. Alternatively, the x-axis thickness of the first modified gear bracket body 236a1_bd may gradually become smaller (or larger) as it goes to the z-axis periphery, or may gradually become larger (or smaller) as it goes to the -z-axis periphery.

According to one embodiment, one surface (e.g., a surface that faces the x axis) of a second modified gear bracket body 236b1_bd may have a shape and a size that are the same as or similar to a shape and a size of a surface of the first modified gear bracket body 236a1_bd, which faces the -x axis. For example, a length of the second modified gear bracket body 236b1_bd in the first direction (e.g., the y-axis or -y axis) may be formed to be greater than a length in the second direction (e.g., the z-axis or -z axis), and a length (or width) thereof in the third direction (e.g., the x-axis or -x-axis direction) may be formed to be smaller than the length thereof in the first direction or the second direction. At least a portion of a surface of the second modified gear bracket body 236b1_bd, which faces the -x-axis direction, may include a second inclined surface 236b_gd having a second inclination. According to an embodiment, a magnitude of the first inclination may be the same as a magnitude of the second inclination and the directions thereof may be opposite to each other. Correspondingly, the inclination of the second inclined surface 236b_gd may be the same as the inclination of the first inclined surface 236a_gd, and at least a portion of the second inclined surface 236b_gd may be disposed to face the first inclined surface 236a_gd. According to an embodiment, an x-axis thickness of the second modified gear bracket body 236b1_bd may vary depending on the position thereof the z axis (or -z axis). As an example, an x-axis thickness of a z-axis periphery of the second modified gear bracket body 236b1_bd may be different from an x-axis thickness of a -z-axis periphery thereof. For example, the x-axis thickness of the z-axis periphery of the second modified gear bracket body 236b1_bd may be greater than the x-axis thickness of the -z-axis periphery. Alternatively, the x-axis thickness of the second modified gear bracket body 236b1_bd may gradually become larger (or smaller) as it goes to the z-axis periphery, or may gradually become smaller (or larger) as it goes to the -z-axis periphery. The first inclined surface 236a_gd and the second inclined surface 236b_gd may have an inclined surface that is smaller or larger than 90 degrees when viewed in the z-axis direction.

According to one embodiment, the first inclined surface 236a_gd of the first modified gear bracket body 236a1_bd and the second inclined surface 236b_gd of the second modified gear bracket body 236b1_bd, which have been described above, may be disposed to face each other, and as previously described in FIG. 7, the external force generated by the elastic body included in the hinge structure (e.g., 201 of FIG. 3) may press the first modified gear bracket body 236a1_bd in the x-axis direction. Correspondingly, the first modified gear bracket body 236a1_bd may be pressed in the -z-axis direction, and the second modified gear bracket body 236b1_bd may be pressed in the z-axis direction. Before an external force is applied, the first and second shaft holes 236a_h1, 236a_h2 and the first and second gear shaft holes 236a_h3, 236a_h4 of the first modified gear bracket body 236a1_bd, and the third and fourth shaft holes 236b_h1 and 236b_h2 and the third and fourth gear shaft holes 236b_h3 and 236b_h4 of the second modified gear bracket body 236b1_bd may be aligned on the zy plane. There may be a state, in which the first shaft 231 previously described in FIG. 3 is inserted into the first shaft hole 236a_h1 and the third shaft hole 236b_h1, the second shaft 232 is inserted into the second shaft hole 236a_h2 and the fourth shaft hole 236b_h2, the first gear shaft 234a_sh is inserted into the first gear shaft hole 236a_h3 and the third gear shaft hole 236b_h3, and the second gear shaft 234b_sh is inserted into the second gear shaft hole 236a_h4 and the fourth gear shaft hole 236b_h4. When an external force is applied by the elastic body included in the hinge structure (e.g., 201 of FIG. 3), the second modified gear bracket body 236b1_bd may be pushed in the z-axis direction and the first modified gear bracket body 236a1_bd may be pushed in the -z-axis direction whereby movement of the shafts 231, 232, 234a_sh, and 234b_sh may be prevented by pressing the shafts 231, 232, 234a_sh, and 234b_sh inserted into the holes 236a_h1, 236a_h2, 236a_h3, 236a_h4, 236b_h1, 236b_h2, 236b_h3, and 236b_h4 in the z-axis direction and -z-axis direction, respectively. Meanwhile, in FIG. 10, the directions of the first inclined surface 236a_gd and the second inclined surface 236b_gd may be opposite to each other. The first modified gear bracket 236_1 described above may convert the external force applied in the x-axis direction (e.g., a horizontal external force or elastic force) into a force (e.g., a force that faces a vertical direction) in the z-axis or -z-axis direction. The magnitude of the external force described above may vary depending on the folded state of the hinge structure (e.g., 201 of FIG. 3). For example, a magnitude of an external force at a specific angle (e.g., a flex mode section, or a specific angle between 30 degrees and 160 degrees) of the hinge structure (e.g., 201 of FIG. 3), which is greater than 0 degrees and smaller than 180 degrees, may be greater than in a state (or the folded or unfolded state) of 0 degrees or 180 degrees. Correspondingly, when the hinge structure (e.g., 201 of FIG. 3) is in an angle state in the flex mode section (or an angle state, in which the angle between the first housing 110 and the second housing 120 is greater than 0 degrees and smaller than 180 degrees), the pressure applied by the first modified gear bracket 236_1 to the shafts 231, 232, 234a_sh, and 234b_sh may be greater than in other states (e.g., the folded state or the unfolded state). Alternatively, according to an embodiment, the hinge structure (or the gear assembly) (e.g., 201 of FIG. 3) of the portable electronic device 100 may further include a cam structure (e.g., the cams of the cam member 241 and the arm members 221 and 222 described in FIG. 3), and a pressure applied by the first modified gear bracket 236_1 to the shafts 231, 232, 234a_sh, and 234b_sh in a section, in which the first cam nose (e.g., the cam nose of the cam member 241) and the second cam nose (e.g., the cam noses formed on the arm members 221 and 222) of the cam structure face each other (or in a state, in which the mountain of the cam member 241 and the mountains of the cam structures formed on the arm members 221 and 222 contact each other) may be higher than a pressure applied by the first modified gear bracket 236_)1 to the shafts 231, 232, 234a_sh, and 234b_sh while an inclination of the cam member 241 and an inclination of the cam structure formed on the arm members 221 and 222 meet each other (or while the first cam nose and the second cam nose of the cam structure do not match up with each other). According to an embodiment, the pressure applied to the above-described first modified gear bracket 236_1 may vary depending on a degree of compression of the elastic body of the hinge structure (e.g., 201 of FIG. 3).

According to an embodiment, the hinge structure (e.g., 201 of FIG. 3) (or a gear assembly) may further include a cam structure (e.g., the cams formed on the cam member 241 and the arm members 221 and 222), and a first size of a portion, at which the first opening set (e.g., the first gear shaft hole 236a_h3 or the second gear shaft hole 236a_h4) and the second opening set (e.g., the third gear shaft hole 236b_h3 or the fourth gear shaft hole 236b_h4) overlap each other in a section, in which the first cam nose (e.g., a mountain or a protrusion formed in of the cam member 241) and the second cam noses (e.g., mountains or protrusions of the cams formed on the arm members 221 and 222) of the cam structure do not match up with each other, may be larger than a second size of a portion, at which the first opening set and the second opening set overlap each other in the section, in which the first cam nose and the second cam nose are located to face each other.

According to an embodiment, the hinge structure (e.g., 201 of FIG. 3) (or a gear assembly) may further include a cam structure (e.g., the cams formed on the cam member 241 and the arm members 221 and 222), and a first size of a portion, at which the first support member (or the first sub gear bracket 236a), in which the first opening set is formed, and the second support member (or the second sub gear bracket 236b), in which the second opening set (e.g., the first gear shaft hole 236b_h3 or the fourth gear shaft 236b_h4) is formed, overlap each other, in a section, in which the first cam nose (e.g., a mountain or a protrusion formed in of the cam member 241) and the second cam noses (e.g., mountains or protrusions of the cams formed on the arm members 221 and 222) of the cam structure do not match up with each other, may be larger than a second size of a portion, at which the first support member and the second support member overlap each other in the section, in which the first cam nose and the second cam nose are located to face each other.

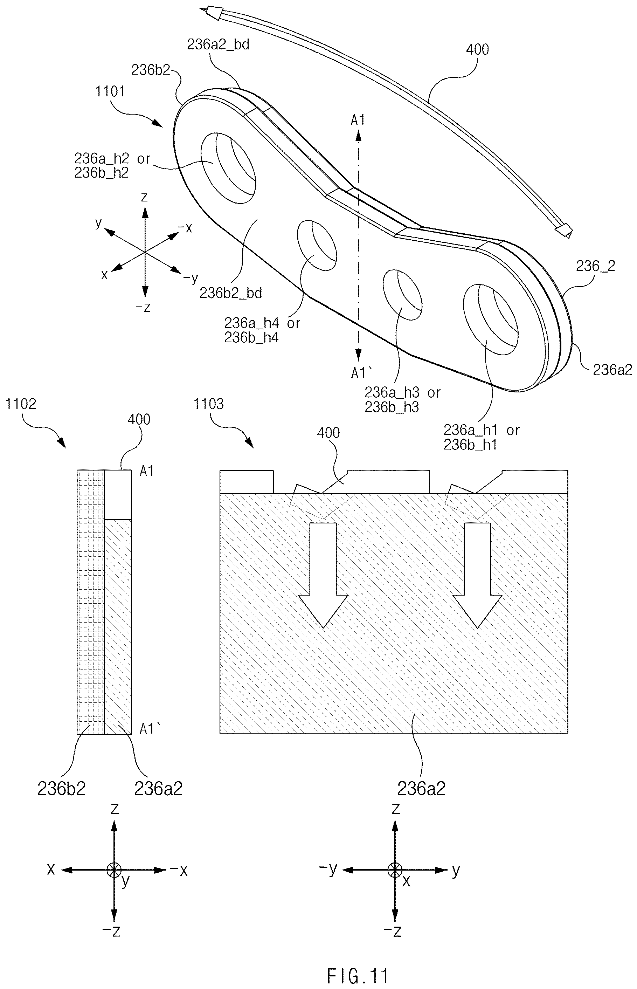

FIG. 11 is a view illustrating an example of another structure of a gear bracket according to an embodiment. In FIG. 11, state 1101 corresponds to a perspective view illustrating an example of the second modified gear bracket 236_2, and state 1102 corresponds to a cross-section taken along cutting line A1-A1' viewed from the y-axis direction, and state 1103 corresponds to a simplified illustration of the shape, viewed in the x-axis direction.

Referring to FIGS. 1 to 11, the second modified gear bracket 236_2 according to an embodiment may include a third modified sub gear bracket 236a2 (or a third modified support member) and a fourth modified sub gear bracket 236b2 (or a fourth modified support member).

The third modified sub gear bracket 236a2 may include a third modified gear bracket body 236a2_bd, a first shaft hole 236a_h1, a second shaft hole 236a_h2, a first gear shaft hole 236a_h3, and a second gear shaft 236a_h4. The first shaft hole 236a_h1, the second shaft hole 236a_h2, the first gear shaft hole 236a_h3, and the second gear shaft hole 236a_h4 may have the same or similar structures to those of the shaft holes and gear shaft holes, which have been previously described in FIGS. 5 and 6, and at least a portion of the first shaft 231, the second shaft 232, the first gear shaft 234a_sh, and the second gear shaft 234b_sh may be inserted thereinto.

The third modified gear bracket body 236a_bd2 may be formed such that a length thereof in the first direction (e.g., the y-axis or -y axis) is greater than a length in the second direction (e.g., the z-axis or -z axis). A length (or width) of the third modified gear bracket body 236a2_bd in the third direction (e.g., the x-axis or -x-axis direction) may be formed to be shorter than a length thereof in the first direction or the second direction. As an example, at least one of the shape and the size of a surface of the third modified gear bracket body 236a2_bd, which faces the -x axis, may have the same size and the same shape as a portion, of which the length in the z-axis direction is shorter, in a specific error range, except for the form, in which the first elastic protrusion 236a_pr1 and the second elastic protrusion 236a_pr2 described in FIG. 5 or 6 are removed, compared to the first gear bracket body 236a_bd described above in FIG. 5 or 6.

A first bracket elastic body 400 may be disposed in the z-axis direction of the above-described third modified gear bracket body 236a2_bd, and the first bracket elastic body 400 may press the third modified gear bracket body 236a2_bd in the -z-axis direction. For example, the first bracket elastic body 400 may be supported by a bracket extension part 213p that is formed on the fixed bracket 213. Alternatively, the first bracket elastic body 400 may be disposed between the third modified gear bracket body 236a2_bd and the bracket extension part 213p to press the third modified gear bracket body 236a2_bd in the -z-axis direction. Correspondingly, the third modified gear bracket body 236a2_bd may press the shafts 231, 232, 234a_sh, and 234b_sh disposed in the holes 236a_h1, 236a_h2, 236a_h3, and 236a_h4 to prevent the movement of shafts 231, 232, 234a_sh, and 234b_sh while being pushed in the -z-axis direction.

The fourth modified sub gear bracket 236b2 may include a fourth modified gear bracket body 236b2_bd, a third shaft hole 236b_h1, a fourth shaft hole 236b_h2, a third gear shaft hole 236b_h3, and a fourth gear shaft hole 236b_h4. The third shaft hole 236b_h1, the fourth shaft hole 236b_h2, the third gear shaft hole 236b_h3, and the fourth gear shaft hole 236b_h4 may have the same or similar structures to those of the shaft holes and gear shaft holes formed in the second gear bracket body 236d_bd previously described in FIGS. 5 and 6, and at least a portion of the first shaft 231, the second shaft 232, the first gear shaft 234a_sh, and the second gear shaft 234b_sh may be inserted thereinto. According to an embodiment, the fourth modified gear bracket body 236b2_bd may have at least one of the same structure and the same size compared to the second gear bracket body 236b_bd previously described in FIG. 5 or 6, except for the first elastic holding structure 236b_gr1 and the second elastic holding structure 236b_gr2. The fourth modified gear bracket body 236b2_bd may function to support the shafts 231, 232, 234a_sh, and 234b_sh while pressing the shafts 231, 232, 234a_sh, and 234b_sh while the third modified gear bracket body 236a2_bd is pushed in the -z-axis direction.

The first bracket elastic body 400 may include a leaf spring that is convex in the -z-axis direction. Opposite peripheries of the first bracket elastic body 400 may be disposed to press the third modified gear bracket body 236a2_bd in the -z-axis direction. According to an embodiment, the first bracket elastic body 400 may include a leaf spring that is convex in the -z-axis direction. The first bracket elastic body 400 that is convex in the -z-axis direction may contact at least a portion of an upper end of the third modified gear bracket body 236a2_bd in the z-axis direction to press the third modified gear bracket body 236a2_bd in the -z-axis direction.

Meanwhile, in the above description, a form, in which the first bracket elastic body 400 presses the third modified sub gear bracket 236a2 in the -z-axis direction, is exemplified, but the position of the first bracket elastic body 400 and the position of the third modified sub gear bracket 236a2 may be changed. According to an embodiment, the first bracket elastic body 400 may be disposed to press the fourth modified sub gear bracket 236b2 in the -z-axis direction. In this case, the fourth modified sub gear bracket 236b2 may have the same shape and the same size as those of the third modified sub gear bracket 236a2 described above. As an example, when the first bracket elastic body 400 is disposed to press the fourth modified sub gear bracket 236b2, a z-axis height of the fourth modified sub gear bracket 236b2 may be formed to be smaller than a z-axis height of the third modified sub gear bracket 236a2. According to an embodiment, the z-axis heights of the third modified sub gear bracket 236a2 and the fourth modified sub gear bracket 236b2 may be the same

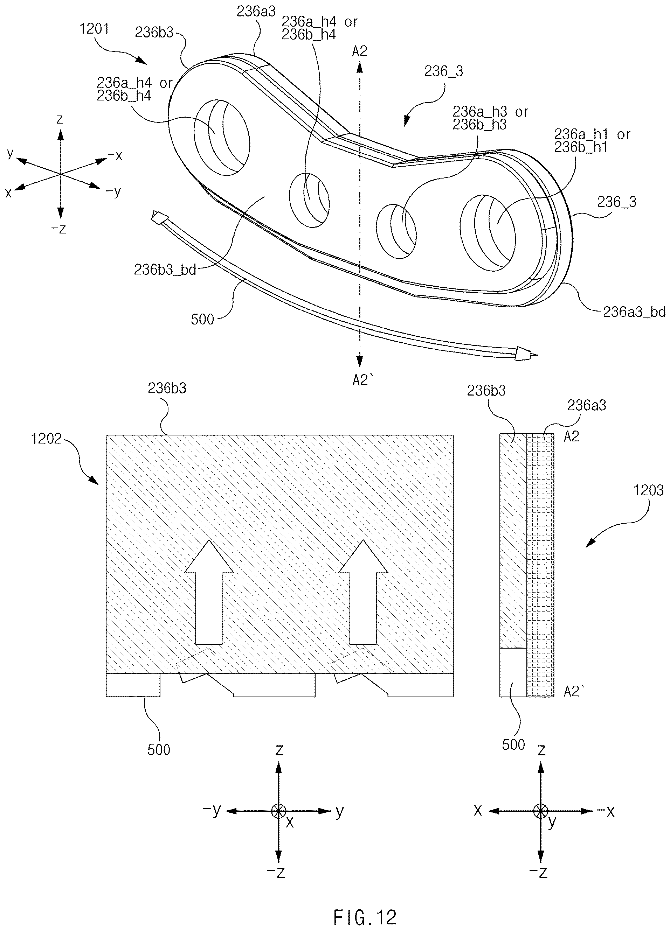

FIG. 12 is a view illustrating another example of another structure of a gear bracket according to an embodiment. In FIG. 12, state 1201 corresponds to a perspective view illustrating an example of the third modified gear bracket 236_3, state 1202 corresponds to a simplified shape viewed from the x-axis direction, and state 1203 correspond to cutting line A2-A2' taken along the y-axis direction in the y-axis direction.

Referring to FIGS. 1 to 12, the third modified gear bracket 236_3 according to an embodiment may include a fifth modified sub gear bracket 236a3 (or a fifth modified support member) and a sixth modified sub gear bracket 236b3 (a sixth modified support member).

The fifth modified sub gear bracket 236a3 may include a fifth modified gear bracket body 236a3_bd, a first shaft hole 236a_h1, a second shaft hole 236a_h2, a first gear shaft hole 236a_h3, and a second gear shaft hole 236a_h4. The first shaft hole 236a_h1, the second shaft hole 236a_h2, the first gear shaft hole 236a_h3, and the second gear shaft hole 236a_h4 may have the same or similar structures to those of the shaft holes and gear shaft holes, which have been previously described in FIG. 11, and at least a portion of the first shaft 231, the second shaft 232, the first gear shaft 234a_sh, and the second gear shaft 234b_sh may be inserted thereinto. According to an embodiment, the fifth modified sub gear bracket 236a3 may have the same or similar structure as that of the fourth modified sub gear bracket 236b2 previously described in FIG. 11.

The sixth modified sub gear bracket 236b3 may include a sixth modified gear bracket body 236b3_bd, a third shaft hole 236b_h1, a fourth shaft hole 236b_h2, a third gear shaft hole 236b_h3, and a fourth gear shaft hole 236b_h4. The sixth modified gear bracket body 236b3_bd may be formed such that a length thereof in the first direction (e.g., the y-axis or -y axis) is greater than a length in the second direction (e.g., the z-axis or -z axis). A length (or width) of the sixth modified gear bracket body 236b3_bd in the third direction (e.g., the x-axis or -x-axis direction) may be formed to be shorter than a length thereof in the first direction or the second direction. As an example, the length of the sixth modified gear bracket body 236b3_bd in the z-axis direction may be smaller than the length of the fifth modified gear bracket body 236a3_bd in the z-axis direction. A second bracket elastic body 500 may be disposed at a lower portion of the sixth modified gear bracket body 236b3_bd in the -z-axis direction. According to an embodiment, a sum of the z-axis length of the sixth modified gear bracket body 236b3_bd and the z-axis height of the second bracket elastic body 500 may be the same as or similar to the z-axis length of the fifth modified gear bracket body 236a3_bd.

For example, the second bracket elastic body 500 may be supported on one side of the hinge structure (e.g., 201 of FIG. 3) or the hinge housing 150 of FIG. 1 or 2. Alternatively, the second bracket elastic body 500 may be disposed between the sixth modified gear bracket body 236b3_bd and the hinge housing 150 of FIG. 1 or FIG. 2 to press the sixth modified gear bracket body 236b3_bd in the z-axis direction. Correspondingly, the sixth modified gear bracket body 236b3_bd may press the shafts 231, 232, 234a_sh, and 234b_sh disposed in the holes 236b_h1, 236b_h2, 236b_h3, and 236b_h4 to prevent the movement of shafts 231, 232, 234b_sh, and 234b_sh while being pushed in the z-axis direction. The second bracket elastic body 500 may have the same or similar size and the same or similar shape to that of the first bracket elastic body 400. As an example, the second bracket elastic body 500 may include a leaf spring that is convex in the z-axis direction or a leaf spring that is convex in the -z-axis direction.

Meanwhile, in the above description, a form, in which the second bracket elastic body 500 presses the sixth modified sub gear bracket 236b3 in the z-axis direction, is exemplified, but the position of the second bracket elastic body 500 and the position of the sixth modified sub gear bracket 236b3 may be changed. According to an embodiment, the second bracket elastic body 500 may be disposed to press the fifth modified sub gear bracket 236a3 in the -z-axis direction. In this case, the fifth modified sub gear bracket 236a3 may have the same shape and the same size as those of the sixth modified sub gear bracket 236b3 described above. As an example, when the second bracket elastic body 500 is disposed to press the fifth modified sub gear bracket 236a3, a z-axis height of the fifth modified sub gear bracket 236a3 may be formed to be smaller than a z-axis height of the sixth modified sub gear bracket 236b3. According to an embodiment, the z-axis heights of the fifth modified sub gear bracket 236a3 and the sixth modified sub gear bracket 236b3 may be the same.

FIGS. 11 to 12 above illustrate a structure, in which two sub gear brackets are disposed, but the disclosure is not limited thereto. For example, the hinge structure may include only one sub gear bracket that is pressed by the bracket elastic body 400 or 500. Furthermore, FIGS. 10 and 11 illustrate a form, in which the openings and the elastic structures described in FIGS. 5 and 6 have been removed, but the disclosure is not limited thereto. For example, the openings and elastic structures described in FIGS. 5 and 6 may be applied to at least one of FIGS. 10 to 12.

According to an embodiment, the shapes of the above-described holes may have shapes other than circles. For example, a first opening (e.g., the first gear shaft hole 236a_h3) that is included in the first opening set (e.g., the first gear shaft hole 236a_h3 or the second gear shaft hole 236a_h4) and is substantially circular (or non-circular) may partially overlap the second opening 236b_h3 that is included in the second opening set (e.g., the third gear shaft hole 236b_h3 or the fourth gear shaft hole 236b_h4) and is substantially non-circular (or circular). As an example, the third opening (e.g., the second gear shaft hole 236a_h4) that is included in the first opening set and is substantially non-circular may partially overlap the fourth opening (e.g., the fourth gear shaft hole 236b_h) that is included in the second opening set and is substantially circular. The first to fourth orders defining the sequence of the above-mentioned openings may vary depending on the priorities of the defined configurations. Accordingly, expressions related to the openings or holes have to be understood with reference to the reference numerals indicated in the drawing. Meanwhile, at least one of the embodiments of the disclosure exemplifies a structure, in which four holes (or openings) are disposed in one support member, but the disclosure is not limited thereto, and the disclosure may suggest a support member including only at least two holes (or openings) (or a larger number of holes (or openings) than four holes). When the support member has fewer (or more) holes (or openings) than four, the hinge structure (or the hinge assembly) may include a number of shafts corresponding to the number of holes.

According to an embodiment, with no separate elastic structure, the sub gear brackets (e.g., 236a and 236b of FIG. 5) may provide a structure that may press the gear shafts (e.g., 234a_sh and 234b_sh of FIG. 3) based on the differences between the positions of the shaft holes (e.g., 236a_h3, 236a_h4, 236b_h3, and 236b_h4 of FIG. 5) that are disposed in the sub gear brackets (e.g., 236a and 236b of FIG. 5). For example, in a state, in which the sub gear brackets (e.g., 236a and 236b of FIG. 5) overlap each other, the positions of the shaft holes (e.g., 236a_h3, 236a_h4, 236b_h3, and 236b_h4 of FIG. 5) formed in the first sub gear bracket (e.g., 236a of FIG. 5) may be formed on an upper side of the positions of the shaft holes (e.g., 236a_h3. 236a_h4, 236b_h3, and 236b_h4 of FIG. 5) formed in the second sub gear bracket (e.g., 236b of FIG. 5) in the z axis or a lower side in the -z axis with respect to a horizontal line. Correspondingly, when the gear shafts (e.g., 234a_sh and 234b_sh of FIG. 3) are inserted into the sub gear brackets (e.g., 236a and 236b of FIG. 5), there may be a state, in which it contacts an inner wall of the shaft hole of any one sub gear bracket. According to an embodiment, in the sub gear brackets (e.g., 236a and 236b of FIG. 5), the shapes of the shaft holes, the sizes of the shaft holes, or the positions of the shaft holes may be formed to asymmetrical, and thus, with no elastic structure, the gear shafts may be attached to the shaft holes (e.g., 236a_h3, 236a_h4, 236b_h3, and 236b_h4 of FIG. 5) of the sub gear brackets (e.g., 234a and 234b of FIG. 5) not to match up with each other. The above-mentioned shaft pressing or attaching structure may be applied in the same way or similar to the shafts (e.g., 231 and 232 of FIG. 3) and the shaft holes (e.g., 236a_h1, 236a_h2, 236b_h1, and 236b_h2 of FIG. 5), in which the main gears (e.g., 233a and 233b of FIG. 3) are disposed, in addition to the gear shafts 234a_sh and 234b_sh of FIG. 3.

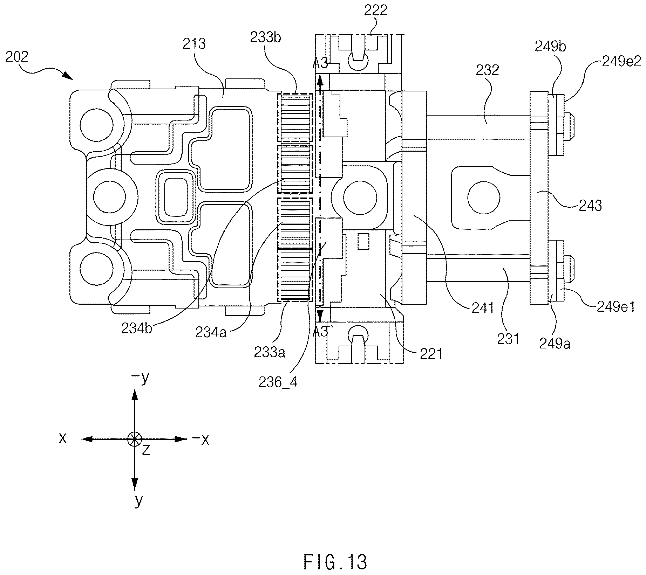

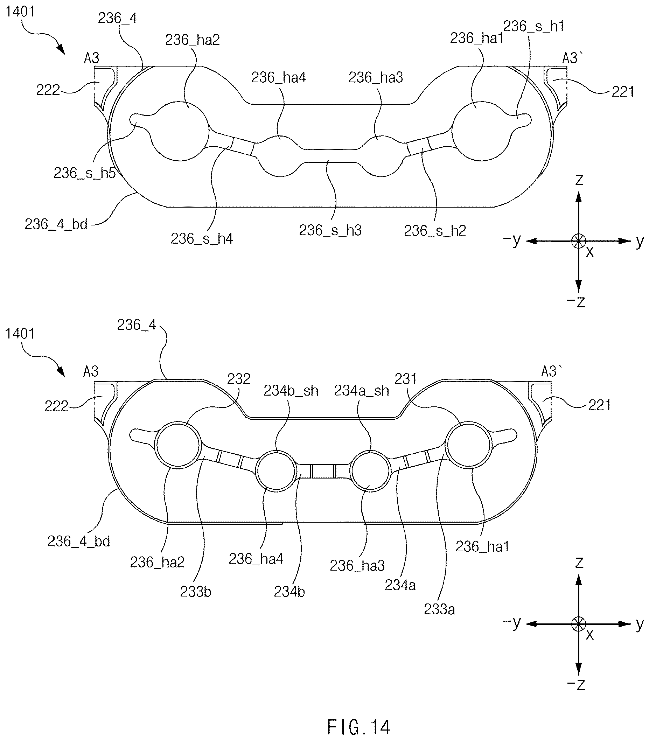

FIG. 13 is a view illustrating an example of at least a partial configuration of a hinge structure according to an embodiment. FIG. 14 is a view illustrating an example of a cross-section taken along line A3-A3' of FIG. 13. In FIG. 14, state 1401 illustrates a surface of the fourth modified gear bracket 236_4 in one direction in which, the shafts 231, 232, 234a_sh, and 234b_sh are removed, and state 1402 illustrates a surface of the fourth modified gear bracket 236_4 in a state, in which the shafts 231, 232, 234a_sh, and 234b_sh are coupled.

Referring to FIG. 1 to 14, the hinge structure 202 may include at least a fixed bracket 213, a first arm member 221, a second arm member 222, a cam member 241, a shaft fixing part 243, a first shaft 231, a second shaft 232, a first washer ring 249a, a second washer ring 249b, first and second engagement members 249e1 and 249e2, a fourth modified gear bracket 236_4, a first main gear 233a, a second main gear 233b, a first interlocking gear 234a, and a second interlocking gear 234b. The first interlocking gear 234a may be formed in (or fixed to) on the first gear shaft (e.g., 234a_sh of FIG. 3), and the second interlocking gear 234b may be formed in (or fixed to) the second gear shaft (e.g., 234b_sh of FIG. 3). Meanwhile, the configuration of the hinge structure 202 illustrated in FIG. 13 may correspond to a part thereof, and may further include the configuration of the hinge structure 201 previously described in FIG. 3. As an example, FIG. 13 illustrates a form, in which a separate elastic body is removed, but the disclosure is not limited thereto. For example, at least one elastic body may be mounted on each of the first shaft 231 and the second shaft 232 to press the cam member 241 in the x-axis direction. At least one of, among the components of the hinge structure 202, the remaining components except for the fourth modified gear bracket 236_4, for example, the fixed bracket 213, the first arm member 221, the second arm member 222, the cam member 241, the shaft fixing part 243, the first shaft 231, the second shaft 232 , the first washer ring 249a, the second washer ring 249b, the first and second engagement members 249e1 and 249e2, the fourth modified gear bracket 236_4, the first main gear 233a, the second main gear 233b, the first gear shaft 234a_sh, the second gear shaft 234b_sh, the first interlocking gear 234a, and the second interlocking gear 234b may correspond to the same configurations as the components of the hinge structure 201 described in FIG. 3.

Referring to Figure 14, the fourth modified gear bracket 236_4 may include a gear bracket body 236_4_bd, a first modified shaft hole 236_ha1 that passes through the gear bracket body 236_4_bd in the x-axis direction, a second modified shaft hole 236_ha2, a first modified gear shaft hole 236_ha3, a second modified gear shaft hole 236_ha4, a first extension hole 236_s_h1 that is connected to the first modified shaft hole 236_ha1 and extends in the y-axis direction while passing in the x-axis direction, a second extension hole 236_s_h2 that connects the first modified shaft hole 236_ha1 and the first modified gear shaft hole 236_ha3, a third extension hole 236_s_h3 that connects the first modified gear shaft hole 236_ha3 and the second modified gear shaft hole 236_ha4, a fourth extension hole 236_s_h4 that connects the second modified gear shaft hole 236_ha4 and the second modified shaft hole 236_ha2, and a fifth extension hole 236_s_h5 that is connected to the second modified shaft hole 236_ha2 and extends in the -y-axis direction while passing in the x-axis direction.

A diameter of the first modified shaft hole 236_ha1 may be formed to be smaller than a diameter of the inserted first shaft 231. A diameter of the second modified shaft hole 236_ha2 may be formed to be smaller than a diameter of the inserted second shaft 232. A diameter of the first modified gear shaft hole 236_ha3 may be formed to be smaller than a diameter of the inserted first gear shaft 234a_sh. A diameter of the second modified gear shaft hole 236_ha4 may be formed to be smaller than a diameter of the inserted second gear shaft 234b_sh. While the first shaft 231 is inserted into the first modified shaft hole 236_ha1, the first shaft 231 is inserted while a size of the first modified shaft hole 236_ha1 is temporarily enlarged by the first extension hole 236_s_h1 and the second extension hole 236_s_h2, and a peripheral portion of the first modified shaft hole 236_ha1 may press the inserted first shaft 231 by the elasticity of the gear bracket body 236_4_bd. Similarly, a peripheral portion of the second modified shaft hole 236_ha2 may be operated to press an outer peripheral portion of the second shaft 232, a peripheral portion of the first modified gear shaft hole 236_ha3 may be operated to press an outer peripheral portion of the first gear shaft 234a_sh, and a peripheral portion of the second modified gear shaft hole 236_ha4 may be operated to press an outer peripheral portion of the second gear shaft 234b_sh. Through the above-described operation, the movement of the shafts 231, 232, 234a_sh, and 234b_sh may be reduced or prevented while the hinge structure 202 performs a hinge operation.

Meanwhile, in the above description, at least one of the extension holes 236_s_h1, 236_s_h2, 236_s_h3, 236_s_h4, and 236_s_h5 may be removed. As an example, the first extension hole 236_s_h1 and the second extension hole 236_s_h2 may be removed. Alternatively, the third extension hole 236_s_h3 may be removed. An area, in which the extension hole is removed, may be filled with at least a portion of the metallic gear bracket body. The extension holes 236_s_h1, 236_s_h2, 236_s_h3, 236_s_h4, and 236_s_h5 do not connect the shaft holes 236_ha1, 236_ha2, 236_ha3, and 236_ha4, but may be provided in a form that protrudes in one direction from the shaft holes 236_ha1, 236_ha2, 236_ha3, and 236_ha4. For example, the shapes of the extension holes 236_s_h1, 236_s_h2, 236_s_h3, 236_s_h4, and 236_s_h5 may be disposed in polygonal shapes with respect to the centers of the shaft holes 236_ha1, 236_ha2, 236_ha3, and 236_ha4.

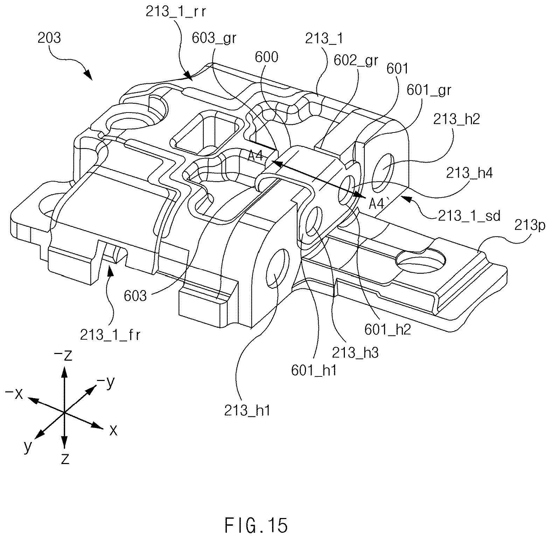

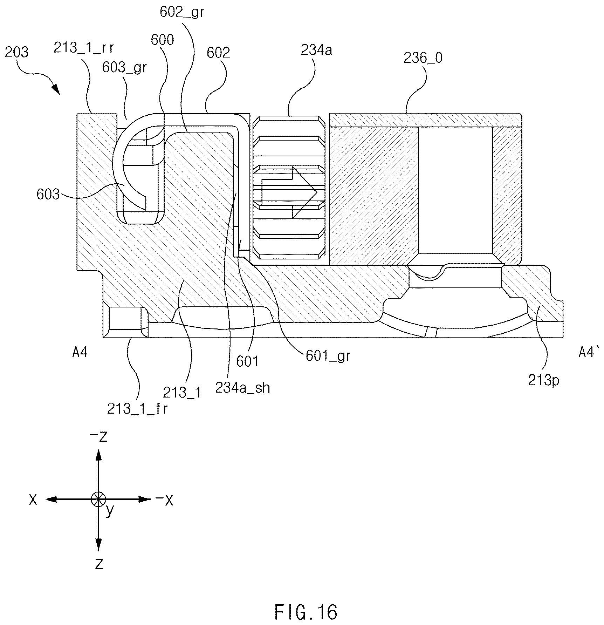

FIG. 15 is a view illustrating an example of the shaft pressing structure according to an embodiment. FIG. 16 is a view illustrating an example of a cross-section taken along line A4-A4' of FIG. 15.

Referring to FIGS. 1 to 3, 15, and 16, the hinge structure 203 according to an embodiment may include a first modified fixed bracket 213_1 of FIG. 15 or 16, a third bracket elastic body 600 of FIG. 15 or 16, a first interlocking gear 234a of FIG. 3 that is disposed in the first gear shaft 234a_sh of FIG. 3, and a basic gear bracket 236_0 of FIG. 16. Furthermore, the hinge structure 203 may further include a first main gear, a second main gear, a second interlocking gear, and a second gear shaft, which are disposed between the first modified fixed bracket 213_1 and the basic gear bracket 236_0. FIGS. 15 and 16 illustrate only some components of the hinge structure 203 of the portable electronic device 100 by way of example, and the disclosure is not limited thereto. For example, the hinge structure 203 may further include at least some of the components of the hinge structure 201 previously described in FIG. 3.

The first modified fixed bracket 213_1 may further include a space, in which the third bracket elastic body 600 may be disposed in a rear part 213_1_rr (e.g., a part that faces the -z-axis direction or a part that faces an inner surface of the hinge housing 150). As an example, the first modified fixed bracket 213_1 may include grooves 601_gr, 602_gr, and 603_gr corresponding to the shape of the third bracket elastic body 600. For example, the first modified fixed bracket 213_1 may include a first elastic groove 601_gr, in which the first elastic portion 601 of the third bracket elastic body 600 is disposed (or seated, adjacent to), a second elastic groove 602_gr, in which the second elastic portion 602 of the third bracket elastic body 600 is disposed (or seated, adjacent to), and a third elastic groove 603_gr, in which the third elastic portion 603 of the third bracket elastic body 600 is disposed (or seated, adjacent to).

According to one embodiment, a rail or a rail structure, into which the first rotation member 211 and the second rotation member 212 described in FIG. 3 may be inserted, may be included in a front part 213_1_fr of the first modified fixed bracket 213_1. A side part 213_1_sd (e.g., a surface that faces the x axis) of the first modified fixed bracket 213_1 may include a first groove 213_h1, into which one side of the first shaft 231 is inserted, a second groove 213_h2, into which one side of the second shaft 232 is inserted, a third groove 213_h3, into which one side of the first gear shaft 234a_sh is inserted, and a fourth groove 213_h4, into which one side of the second gear shaft 234b_sh is inserted. The first to fourth grooves 213_h1, 213_h2, 213_h3, and 213_h4 may include a shape that is engraved in the -x-axis direction on a side surface of the first modified fixed bracket 213_1 in the x-axis direction. The first modified fixed bracket 213_1 may include a bracket extension part 213p. The bracket extension part 213p may be disposed to protrude in the x-axis direction from an x-axis periphery of an upper end of the first modified fixed bracket 213_1 in the z-axis direction. While the hinge structure 203 including the first modified fixed bracket 213_1 is at least partially disposed in the hinge housing 150 of FIG. 1 or 2, the bracket extension part 213p may be disposed to cover at least a portion of the first interlocking gear 234a and the second interlocking gear 234b.

When the third bracket elastic body 600 is viewed from the z-axis direction in the -z-axis direction, at least a portion (or at least a portion of the rear part 213_1_rr) of a cross-section thereof in the z-axis direction may include a U-shape. As an example, the third bracket elastic body 600 may include a first elastic portion 601 that is disposed on an x-axis side part 213_1_sd of the first modified fixed bracket 213_1, a second elastic portion 602 that is disposed on a bottom (e.g., one surface in the -z-axis direction) of the first modified fixed bracket 213_1, and a third elastic portion 603 that is disposed in parallel to the first elastic portion 601. The first elastic portion 601 may be disposed inside a first elastic groove 601_gr that is formed in the first modified fixed bracket 213_1. The first elastic portion 601 may include a first elastic body hole 601_h1 and a second elastic body hole 601_h2 that are aligned with the first gear shaft hole 236a_h3 and the second gear shaft hole 236a_h4, respectively. One side of the first gear shaft 234a_sh may be inserted into the first elastic body hole 601_h1, and one side of the second gear shaft 234b_sh may be inserted into the second elastic body hole 601_h2. The first elastic portion 601 may function to press the first interlocking gear 234a and the second interlocking gear 234b, which are held, in the -x-axis direction. The second elastic portion 602 may function to connect the first elastic portion 601 and the third elastic portion 603, and may support the first elastic portion 601 in the x-axis direction. At least a portion of the third elastic portion 603 may be formed as a curved surface. As an example, the third elastic portion 603 may include a shape that is convex in the x-axis direction (or convex in the -x-axis direction). An x-axis width of the third elastic portion 603 may be greater than a width of the third elastic groove 603_gr. Correspondingly, when the third elastic portion 603 is inserted into the third elastic groove 603_gr, the third elastic portion 603 may be in a compressed state. The repulsive force against the compressed state of the third elastic portion 603 may be transmitted to the first elastic portion 601 through the second elastic portion 602, and the first elastic portion 601 may provide the transmitted repulsive force to the side surfaces of the first interlocking gear 234a and the second interlocking gear 234b to press the first gear shaft 234a_sh and the second gear shaft 234b_sh that are connected to the first interlocking gear 234a and the second interlocking gear 234b, respectively, in the -x-axis direction.

Additionally, referring to FIG. 3 described above, the hinge structure 203 may further include at least one elastic body (e.g., the cam elastic bodies 242a and 242b of FIG. 3) that supports the cam member 241, and the at least one elastic body may exert an elastic force to press the basic gear bracket 236_0 in the x-axis direction. Correspondingly, the basic gear bracket 236_0 may press the first interlocking gear 234a and the second interlocking gear 234b in the x-axis direction. Considering the above-described structure, the first interlocking gear 234a and the first gear shaft 234a_sh, and the second interlocking gear 234b and the second gear shaft 234b_sh may be in a pressed state in a sandwich form by an external force in the x-axis direction (e.g., an elastic force of the third bracket elastic body 600) and an external force in the -x-axis direction (e.g., elastic forces of the cam elastic bodies 242a and 242b of FIG. 3), and may reduce or prevent movement during a gear operation depending on the pressed state.

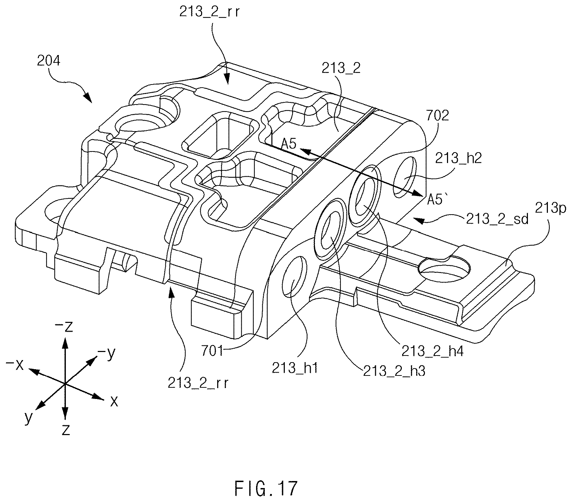

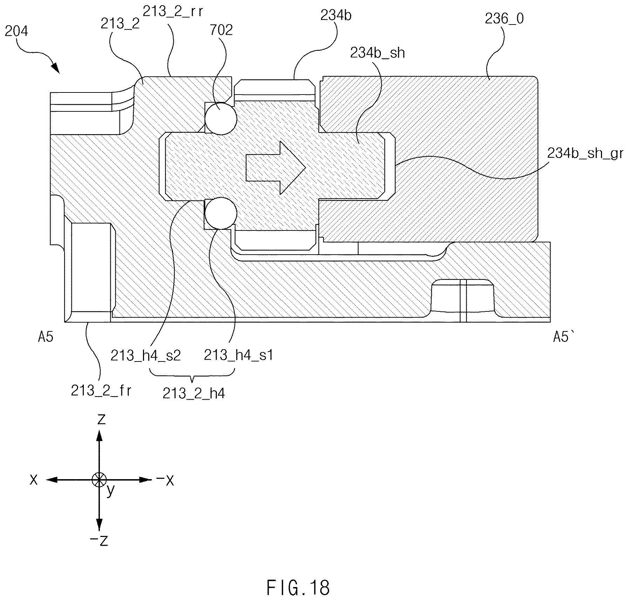

FIG. 17 is a view illustrating another example of the shaft pressing structure according to an embodiment. FIG. 18 is a view illustrating an example of a cross-section cut along the line A5-A5' of FIG. 17.

Referring to FIGS. 1 to 3 and 15 to 17, the hinge structure 204 according to an embodiment may include a second modified fixed bracket 213_2 of FIGS. 17 or 18, fourth bracket elastic bodies 701 and 702 of FIGS. 17 or 18, a second interlocking gear 234b of FIG. 3 that is disposed on the second gear shaft 234b_sh of FIG. 3, and a basic gear bracket 236_0 of FIG 18. Furthermore, the hinge structure 204 may further include a first main gear, a second main gear, a first interlocking gear, and a first gear shaft, which are disposed between the second modified fixed bracket 213_2 and the basic gear bracket 236_0. It may further include a first shaft and a second shaft, sides of which are inserted into the first groove 213_h1 and the second groove 213_h2 of the second modified fixed bracket 213_2, respectively. FIGS. 17 and 18 illustrate only some components of the hinge structure 204 of the portable electronic device 100 by way of example, and the disclosure is not limited thereto. For example, the hinge structure 204 may further include at least some of the components of the hinge structure 201 previously described in FIG. 3.

The second modified fixed bracket 213_2 may include a rear part 213_2_rr, at least a portion of which is disposed in the hinge housing 150 of FIG. 1 or FIG. 2, a front part 213_2_fr including a rail or rail structure, to which at least a portion of the first rotation member 211 and the second rotation member 212 of FIG. 3 is coupled, and a side part 213_2_sd that is formed between the rear part 213_2_rr and the front part 213_2_fr, and into which at least a portion of the first shaft 231, the second shaft 232, the first gear shaft 234a_sh, and the second gear shaft 234b_sh of FIG. 3 is inserted. Additionally, the second modified fixed bracket 213_2 may further include other side parts that define the rear part 213_2_rr and the front part 213_2_fr together with the side part 213_2_sd, into which the shafts are inserted.

According to an embodiment, a side part 213_2_sd (e.g., a surface that faces the x axis) of the second modified fixed bracket 213_2 may include a first groove 213_h1, into which one side of the first shaft 231 is inserted, a second groove 213_h2, into which one side of the second shaft 232 is inserted, a third modified groove 213_2_h3 (or the third groove), into which one side of the first gear shaft 234a_sh is inserted, and a fourth modified groove 213_2_h4 (or the fourth groove), into which one side of the second gear shaft 234b_sh is inserted. The first groove 213_h1, the second groove 213_h2, the third modified groove 213_2_h3, and the fourth modified groove 213_2_h4 may include a shape that is engraved in the -x-axis direction from a side surface of the second modified fixed bracket 213_2 in the x-axis direction. The second modified fixed bracket 213_2 may include a bracket extension part 213p. The bracket extension part 213p may be disposed to protrude in the x-axis direction from an x-axis periphery of an upper end of the second modified fixed bracket 213_2 in the z-axis direction. While the hinge structure 204 including the second modified fixed bracket 213_2 is at least partially disposed in the hinge housing 150 of FIG. 1 or 2, the bracket extension part 213p may be disposed to cover at least a portion of the first interlocking gear 234a and the second interlocking gear 234b.

The fourth bracket elastic bodies 701 and 702 may include a first sub elastic body 701 (or a first elastic body) that is disposed in the third modified groove 213_2_h3, and a second sub elastic body 702 (or a second elastic body) that is disposed in the fourth modified groove 213_2_h4. The first sub elastic body 701 and the second sub elastic body 702 may have at least one of the same structure and the same size within a specific error range. In a description of an example of the second sub elastic body 702, the second sub elastic body 702 may include a ring-shaped elastic body. Alternatively, the second sub elastic body 702 may have a ring shape, one side of which is broken, and a shape, an end of which is twisted with respect to the z-axis direction. Alternatively, the second sub elastic body 702 may include at least one node of a spring. The second sub elastic body 702 has a size that is similar to that of the fourth modified groove 213_2_h4, and a hole that passes in the x-axis may be formed at a central portion thereof. At least a portion of the second gear shaft 234b_sh may be inserted into the central portion of the second sub elastic body 702. According to an embodiment, at least one of the fourth bracket elastic bodies 701 and 702 may include an elastic material, and may include at least one of rubber, resin, fiber, or a composite. Additionally or alternatively, the first groove 213_h1 and the second groove 213_h2 may be are provided in the same or similar forms to those of the third modified groove 213_2_h3 and the fourth modified groove 213_2_h4, and the elastic bodies that are the same or similar to the fourth bracket elastic bodies 701 and 702 may be disposed in the grooves modified from the first groove 213_h1 and the second groove 213_h2.

The fourth modified groove 213_2_h4 (or the third modified groove 213_2_h3) may be configured in multiple steps. For example, the fourth modified groove 213_2_h4 may include a first sub groove 213_h4_s1, in which the second sub elastic body 702 is held, and a second sub groove 213_h4_s2, into which one side of the second gear shaft 234b_sh is inserted (or held). The first sub groove 213_h4_s1 and the second sub groove 213_h4_s2 are connected to each other, and a diameter of the second sub groove 213_h4_s2 may be smaller than a diameter of the first sub groove 213_h4_s1. As an example, a diameter of the hole of the central portion of the second sub elastic body 702 may be the same as or smaller than a length (or diameter) of a z-axis cross-section of the second sub groove 213_h4_s2 in one direction. Depending on a change in design, a diameter of the central portion hole of the second sub elastic body 702 may be formed to be greater than a diameter of the second sub groove 213_h4_s2. The third modified groove 213_2_h3 may have the same or similar structure as that of the fourth modified groove 213_2_h4. For example, at least part of the third modified groove 213_2_h3 may include a first sub groove, into which the first sub elastic body 701 is inserted (or held), and a second sub groove, a portion of which is connected to the first sub groove, and into which one side of the first gear shaft 234a_sh is inserted (or held).

One side (e.g., a periphery in the x-axis direction) of the second gear shaft 234b_sh may be disposed in (or adjacent to, held in, or seated on) the fourth modified groove 213_2_h4, and an opposite side (e.g., a periphery in the -x-axis direction) of the second gear shaft 234b_sh may be disposed in (or adjacent to, held in, or seated on) the groove 234_sh_gr that is formed in the basic gear bracket 236_0. Similarly, when the first gear shaft 234a_sh described in FIG. 3 is applied to FIG. 17, one side (e.g., a periphery in the x-axis direction) of the first gear shaft 234a_sh is disposed in (or adjacent to, held in, or seated on) in the third modified groove 213_2_h3, and an opposite side (e.g., a periphery in the -x-axis direction) of the first gear shaft 234a_sh may be disposed in (or adjacent to, held in, or seated on) in another groove formed in the basic gear bracket 236_0.

In the above-described structure, the first sub elastic body 701 may press the first gear shaft 234a_sh (or the first interlocking gear 234a) in the -x-axis direction, and the second sub elastic body 702 may press the second gear shaft 234b_sh (or the second interlocking gear 234b) in the -x-axis direction. Additionally, referring to FIG. 3 described above, the hinge structure 204 may further include at least one elastic body (e.g., the cam elastic bodies 242a and 242b of FIG. 3) that supports the cam member 241, and the at least one elastic body may exert an elastic force that presses the basic gear bracket (236_0) in the x-axis direction. Correspondingly, the basic gear bracket 236_0 may press the first interlocking gear 234a and the second interlocking gear 234b in the x-axis direction. Considering the above-described structure, the first interlocking gear 234a and the first gear shaft 234a_sh, and the second interlocking gear 234b and the second gear shaft 234b_sh have a pressed state in a sandwich form due to the external force in the x-axis direction, which corresponds to the elastic force from the fourth bracket elastic bodies 701 and 702, and the external force in the -x-axis direction, which corresponds to the elastic force of the cam elastic bodies 242a and 242b of FIG. 3, and may reduce or prevent movement during a gear operation depending on the pressed state.

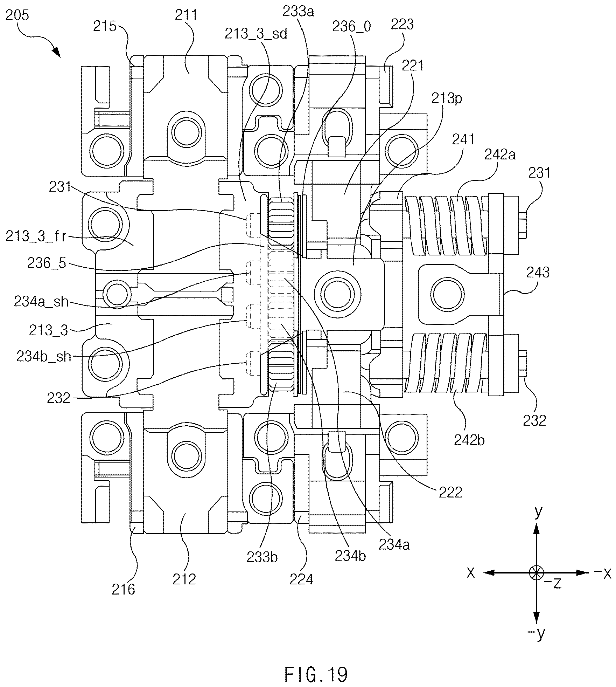

FIG. 19 is a view illustrating an example of another disposition form of the gear bracket according to an embodiment.

Referring to FIGS. 1 to 19, the hinge structure 205 may include a third modified fixed bracket 213_3, a first rotation member 211, a second rotation member 212, a first arm member 221, a second arm member 222, a first link member 215, a second link member 216, a third link member 223, a fourth link member 224, a first shaft 231, a second shaft 232, a first cam elastic body 242a, a second cam elastic body 242b, a cam member 241, a shaft fixing part 243, a first main gear 233a, a second main gear 233b, a first interlocking gear 234a, a second interlocking gear 234b, a first gear shaft 234a_sh, a second gear shaft 234b_sh, a basic gear bracket 236_0, and a fifth modified gear bracket 236_5. The remaining configuration of the hinge structure 205, except for the third modified fixed bracket 213_3, the basic gear bracket 236_0, and the fifth modified gear bracket 236_5 may correspond to (or may have the same structure and the same size within a specific error range) the configuration of the hinge structure 201, which has been previously described in FIG. 3.

The third modified fixed bracket 213_3 may include a front part 213_3_f that has a rail or rail structure, in which at least the first rotation member 211 and the second rotation member 212 are coupled to each other, and a side part 213_3_sd, on which sides of the first shaft 231, the second shaft 232, the first gear shaft 234a_sh, and the second gear shaft 234b_sh are held. Additionally, the third modified fixed bracket 213_3 may further include a rear part that corresponds to an opposite direction to the front part 213_3_fr, and at least a portion of which is disposed in the hinge housing 150 of FIG. 1 or FIG. 2, and other side parts between the front part 213_3_fr and the rear part except for the side part 213_3_sd. As previously described in FIG. 3, a first shaft hole, into which one side of the first shaft 231 is inserted, a second shaft hole, into which one side of the second shaft 232 is inserted, a first gear shaft hole, into which one side of the first gear shaft 234a_sh is inserted, a second shaft hole, into which the second gear shaft (234b_sh) is inserted, may be disposed in the side part 213_3_sd. According to an embodiment, an elastic holding structure (e.g., 236b_gr1 or 236b_gr2 of FIG. 5 or 6) or openings (236a_gr1 or 236a_gr2 of FIG. 5 or 6), and elastic structures (e.g., 236a_pr1 and 236a_pr2 of FIG. 5 or 6), which have been previously described in FIGS. 5 and 6, may be formed at a lower end (e.g., a -z-axis periphery) of the side part 213_3_sd. According to an embodiment, the shape of the side part 213_3_sd may be formed as an inclined surface (e.g., the first inclined surface 236a_gd or the second inclined surface 236b_gd of FIG. 10) previously described in FIG. 10.

The basic gear bracket 236_0 may include holes, into which sides of the first shaft 231 and the second shaft 232 may be inserted, and holes, into which sides of the first gear shaft 234a_sh and the second gear shaft 234b_sh may be inserted, and may be disposed to contact sides of the first arm member 221 and the second arm member 222. The basic gear bracket 236_0 may function as a stopper to prevent the first arm member 221 and the second arm member 222 from being rotated by a specified angle or more, in this regard, may include steps that support sides of the first arm member 221 and the second arm member 222.

The fifth modified gear bracket 236_5 may be disposed between the side part 213_3_sd of the third modified fixed bracket 213_3 and the gears (e.g., the first main gear 233a, the second main gear 233b, the first interlocking gear 234a, and the second interlocking gear 234b). At least some shapes of the above-described various gear brackets may be applied to the fifth modified gear bracket 236_5. According to an embodiment, when the elastic holding structure 236b_gr1 or 236b_gr2 of FIG. 5 or FIG. 6 is formed at a lower end (e.g., a -z-axis periphery) of the side part 213_3_sd of the third modified fixed bracket 213_3, the fifth modified gear bracket 236_5 may include the openings 236a_gr1 and 236a_gr2 and the elastic structures 236a_pr1 and 236a_pr2 of FIG. 5 or 6 at the lower end (the -z-axis periphery) thereof. Alternatively, when the openings 236a_gr1 and 236a_gr2 and the elastic structures 236a_pr1 and 236a_pr2 are formed at the lower end of the side part 213_3_sd, the fifth modified gear bracket 236_5 may include elastic holding structures 236b_gr1 and 236b_gr2. According to an embodiment, when the side part 213_3_sd includes the first inclined surface 236a_gd (or the second inclined surface 236b_gd) of FIG. 10, the fifth modified gear bracket 236_5 may include a second inclined surface 236b_gd (or a first inclined surface 236a_gd). According to an embodiment, when the first bracket elastic body 400 described in FIG. 11 is disposed below the bracket extension part 213p (e.g., between the bracket extension part 213p and the fifth modified gear bracket 236_5), the fifth modified gear bracket 236_5 may have the same or similar structure and size as that of the third modified sub gear bracket 236a2 described in FIG. 11. According to an embodiment, when the second bracket elastic body 500 described in FIG. 12 is disposed at an upper portion of the hinge housing 150 (e.g., between the hinge housing 150 and the fifth modified gear bracket 236_5), the fifth modified gear bracket 236_5 may have the same or similar structure and size as that of the sixth modified sub gear bracket 236b3 described in FIG. 12. According to an embodiment, the fifth modified gear bracket 236_5 may have a structure including the extension holes 236_s_h1, 236_s_h2, 236_s_h3, 236_s_h4, and 236_s_h5) and the modified shaft holes 236_ha1, 236_ha2, 236_ha3, and 236_ha4, which have been previously described in FIGS. 13 and 14.

As described above, various embodiments described in the disclosure may provide a structure that may press at least one of the shafts 231, 232, 234a_sh, and 234b_sh based on various positions and shapes to prevent or reduce the movement of at least one of the first shaft 231, the second shaft 232, the first gear shaft 234a_sh, and the second gear shaft 234b_sh. Here, the disclosure is not limited to the above-described embodiments, and a combination of at least two of the above-described embodiments may be applied.

According to an embodiment, a structure, in which the gear bracket includes two sub gear brackets, has been previously exemplified in FIGS. 5 to 12, but the disclosure is not limited thereto. For example, the portable electronic device 100 according to an embodiment of the disclosure may include only one gear bracket that is adjacent to the arm members (e.g., 221 and 222 of FIG. 3), or may include three or more sub gear brackets. When the hinge structure (e.g., 201) includes only one gear bracket (or a sub gear bracket), the hinge structure may include at least one elastic structure that presses one gear bracket in one direction. Additionally or alternatively, the hinge structure of the portable electronic device 100 of the disclosure may include at least one of the gear brackets (e.g., 236, 236_1, 236_2, 236_3, and 236_4 described in FIGS. 5 to 14) and the gear bracket (e.g., 236_5) described in FIG. 19. In the hinge structure according to an embodiment, with respect to a direction that is parallel to a folding axis, along which the display is folded, at least one of the gear brackets (e.g., 236, 236_1, 236_2, 236_3) described in FIGS. 5 to 12 may be disposed on a right side (or a left side) of the gears (e.g., 233a, 233b, 234a, and 234b), and at least one gear bracket (e.g., 236_5) described in FIG. 19 may be disposed on a left side (or a right side) of the gears (e.g., 233a, 233b, 234a, and 234b). According to an embodiment, at least some of the gear brackets disposed in the right side or the left side of the gears (e.g., 233a, 233b, 234a, and 234b) may be replaced with the gear bracket structure described in FIGS. 13 and 14.

According to an embodiment, in FIGS. 5 to 12, it is exemplified that sizes of holes of the sub gear brackets are the same or similar within a specific range, but the disclosure is not limited thereto. For example, the sizes of a width (e.g., a y-axis or -y-axis length) of the first gear shaft hole 236a_h3 (or the second gear shaft hole 236a_h4) and the third gear shaft hole 236b_h3 (or the fourth gear shaft hole 236b_h4)) may be formed to be the same, and the heights (e.g., a z-axis or -z-axis length) thereof may be formed to be different. As an example, the height (or width) of the first gear shaft hole 236a_h3 (or the second gear shaft hole 236a_h4) may be formed to be greater (or smaller) than the height of the third gear shaft hole 236b_h3 (or the fourth gear shaft hole 236b_h4). In this process, the sizes of the first gear shaft hole 236a_h3 (or the second gear shaft hole 236a_h4) and the third gear shaft hole 236b_h3 (or the fourth gear shaft hole 236b_h4) may be the same as or larger than those of the first and second gear shafts 234a_sh and 234b_sh.

According to an embodiment, when two or more sub gear brackets (e.g., 236, 236_1, 236_2, and 236_3) applied to FIG. 5 or FIG. 2 and the gear bracket (e.g., 236_5) applied to FIG. 19 are applied, at least one of the thicknesses, the sizes, and the shapes of the sub gear brackets may be different. As an example, the sizes of at least some of the shaft holes 236a_h1, 236a_h2, 236a_h3, 236a_h4, 236b_h1, 236b_h2, 236b_h3, and 236b_h4 of the sub gear brackets may be the same or similar.

According to an embodiment, the upper and lower sides of the fourth modified gear bracket 236_4 described in FIG. 14 may be separated, and at least one of the first bracket elastic body 400 previously described in FIG. 11 or the second bracket elastic body 500 described in FIG. 12 may be disposed on the upper side or the lower side (e.g., the z axis or the -z axis) of the fourth modified gear bracket 236_4. The structure of the vertically separable fourth modified gear bracket 236_4 may have a structure, in which the first extension hole 236_s_h1 extends to a y-axis periphery of the fourth modified gear bracket 236_4, and the fifth extension hole 236_s_h5 extends to a -y-axis periphery of the fourth modified gear bracket 236_4.

According to an embodiment, idle gears 234a and 234b that are applied to the hinge structure (e.g., 201) may be removed and helical gears may be applied to replace the idle gears 234a and 234b. When a helical gear is applied to the hinge structure, in a state, in which at least a portion of the hinge structure is adjacent to an interior of the hinge housing of the portable electronic device 100, the helical gear may be disposed horizontally in the xy plane, and the gear shape of the helical gear may be disposed diagonally with respect to the z-axis. Correspondingly, the first main gear 233a and the second main gear 233b of the hinge structure may be formed in a diagonal gear direction, in which they may be rotated while being engaged with the helical gear. When the above-mentioned hinge structure is applied, in relation to fixing the shaft formed at a central portion of the helical gear, an elastic structure (e.g., the bracket elastic body 400 or 500 described in FIG. 11 or 12) that presses the shaft of the helical gear disposed in the z-axis direction in a lateral direction (e.g., a direction of the xy plane direction) may be disposed. A magnitude of the external force that presses the shafts (at least one of 231, 232, 234a_sh, and 234b_sh) with the above-mentioned gear brackets (at least one of 236, 236_1, 236_2, 236_3, 236_4, and 236_5) may be greatest in a flex-mode (a mode, in which a portable electronic device 100 forms a holding angle that greater than 0 degrees and smaller than 180 degrees), and may be formed to be smallest when the portable electronic device 100 is in the unfolded state or the folded state. Embodiments of the disclosure may improve an inaccurate device movement due to the movement of the shaft in a specific section (a section, in which it may be rotated by the gravitational force without any external pressure, or within a specific range of movement after the folding operation is started in the unfolded state, or within a specific range of movement after the unfolding operation is started in the folded state) of the portable electronic device 100.

According to an embodiment, although the above description exemplifies the foldable electronic device including only two housings, the shaft pressing structure of the disclosure may also be applied to a foldable electronic device that allows a plurality of in-folding operations or a foldable electronic device (e.g., a structure including three or more housings) that allow an in-folding operation and an out-folding operation. In this process, the foldable electronic device may have a larger number of shafts than the four shafts 231, 232, 234a_sh, and 234b_sh described in FIG. 3, and correspondingly, the number of the shaft holes 236a_h1, 236a_h2, 236a_h3, 236a_h4, 236b_h1, 236b_h2, 236b_h3, and 236b_h4 formed in the gear bracket (at least one of 236, 236_1, 236_2, 236_3, 236_4, and 236_5) may increase, and the magnitude of the external force that applies a pressure may increase.

According to an embodiment, it has been exemplified that the above-described shafts 231, 232, 234a_sh, and 234b_sh are cylindrical, but the disclosure is not limited thereto. For example, a z-axis cross-section of at least one of the shafts 231, 232, 234a_sh, and 234b_sh may have a polygonal shape, and the size of the z-axis cross-section may vary depending on the position thereof.

According to an embodiment, although it has been exemplified in the portable electronic device 100 of the disclosure that the hinge structure (e.g., 201 of FIG. 3) has a form, in which the shafts 231, 232, 234a_sh, and 234b_sh are integrally formed with the gears 233a, 233b, 234a, and 234b, the hinge structure of the disclosure is not limited thereto. For example, the shafts 231, 232, 234a_sh, and 234b_sh may be provided in a separate form from the gears 233a, 233b, 234a, and 234b, and then may be fastened thereto.

A portable electronic device according to one of the above-described embodiments may include a flexible display, a housing accommodating the flexible display, and a gear assembly functionally coupled to the housing, and the gear assembly may include a first support member including at least one gear shaft, and a first opening set, into which the at least one gear shaft is inserted, and a second support member including a second opening set, into which the at least one gear shaft is inserted and arranged to partially overlap the first opening set, and disposed to be parallel to (alongside) the first support member.

According to an embodiment, a first opening included in the first opening set may have substantially the same size as that of a second opening included in the second opening set, and a central portion of the first opening may be aligned such that a position thereof is different from a position of a central portion of the second opening.

According to an embodiment, the first opening included in the first opening set may be disposed to be spaced apart from a first gear shaft included in the at least one gear shaft in a first direction, and may be disposed to contact it in a second direction being an opposite direction to the first direction.

According to an embodiment, the second opening included in the second opening set may be disposed to contact the first gear shaft in the first direction, and may be disposed to be spaced apart therefrom in the second direction.

According to an embodiment, the gear assembly may further include a cam structure, and a first size of a portion of the first opening set, which overlaps the second opening set in a section, in which a first cam nose and a second cam nose of the cam structure do not match up with each other, may be larger than a second size of a portion of the first opening set, which overlaps the second opening set in a section, in which the first cam nose and the second cam nose are located to face each other.

According to an embodiment, the first opening included in the first opening set and being substantially circular may partially overlap the second opening included in the second opening set and being substantially non-circular.

According to an embodiment, a third opening included in the first opening set and being substantially non-circular may partially overlap a fourth opening included in the second opening set and being substantially circular.

According to an embodiment, the first support member and the second support member may be coupled to each other through the elastic protrusions and the elastic holding structures (or openings) of FIG. 6 in a state, in which the pressing structures (e.g., the first support member and the second support member) overlap each other.

According to an embodiment, the pressing structure may be configured to push the first support member in a direction, in which the flexible display is disposed, and push the second support member in an opposite direction to the direction, in which the display is disposed.

According to an embodiment, the pressing structure may include an extension part extending from the first support member to be curved.

According to an embodiment, the pressing structure may include a groove included in the second support member and coupled to the extension part.

According to an embodiment, an elastic material may be disposed in at least one opening of the first opening set.

According to an embodiment, the housing may include a first housing, a second housing coupled to the first housing to be foldable, and a third housing coupled to the second housing to be foldable, the gear assembly may include a third support member disposed between the first housing and the second housing, and in which another gear assembly disposed substantially between the second housing and the first housing includes a third opening set, and the number of the openings included in the third opening set may be greater than the number of the openings included in the first opening set.

According to an embodiment, facing surfaces of the first support member and the second support member may have an inclined surface that is smaller than or greater than 90 degrees.

An electronic device of the disclosure according to one of the above-described embodiments may include a flexible display 160, a housing 110 and 120 accommodating the flexible display, and a hinge assembly 201 coupled to the housing, the hinge assembly may include a first gear shaft 234a_sh, a second gear shaft 234b_sh, a first support member 236a including a first opening 236a_h3 and a second opening 236a_h4, and a second support member 236b including a third opening 236b_h3 and a fourth opening 236b_h4, the first support member and the second support member may be disposed to be adjacent to the first gear shaft inserted through the first opening and the third opening and the second gear shaft inserted through the second opening and the fourth opening, the first opening may partially overlap the third opening such that the first gear shaft contacts a periphery of the first opening and a periphery of the third opening in a first direction, and the second opening may partially overlap the fourth opening such that the second gear shaft contacts a periphery of the second opening and a periphery of the fourth opening in a second direction being different from the first direction.

An electronic device of the disclosure according to one of the above-described embodiment may include a flexible display 160, a housing 110 and 120 accommodating the flexible display, and a hinge assembly 201 coupled to the housing, the hinge assembly may include a first gear shaft 234a_sh, a second gear shaft 234b_sh, a first support member 236a including a first opening 236a_h3 and a second opening 236a_h4, and a second support member 236b including a third opening 236b_h and a fourth opening 236b_h4, the first support member and the second support member may be disposed to be adjacent to each other in a state, in which the first gear shaft is inserted through the first opening and the third opening, and a state, in which the second gear shaft inserted through the second opening and the fourth opening, the first opening partially may overlap the third opening whereby the first gear shaft contacts a peripheral portion defining the first opening in a first direction and contacts a peripheral portion defining the third opening in a second direction being different from the first direction, and the second opening may partially overlap the fourth opening whereby the second gear shaft contacts a peripheral portion defining the second opening in the first direction and partially contacts a periphery defining the fourth opening in the second direction.

According to an embodiment, the first opening may have substantially the same size as that of the third opening, and a central portion of the first opening may be aligned such that a position thereof is different from a central portion of the third opening.

According to an embodiment, the hinge assembly may further include a cam structure, and a first size corresponding to a portion, at which the first opening and the third opening overlap each other, in a section, a first cam nose and a second cam nose of the cam structure are located not to match up with each other, may be greater than a second size corresponding to a portion, at which the first opening and the third opening overlap each other, in a section, in which the first cam nose and the second cam nose face each other.

According to an embodiment, the first opening being circular may partially overlap the third opening being non-circular.

According to an embodiment, the second opening being circular may partially overlap the fourth opening being non-circular.

According to an embodiment, the first support member and the second support member may be coupled to each other through a pressing structure.

According to an embodiment, at least a portion of the pressing structure may include an elastic body that presses the second support member toward the first support member, and the second support member may be configured to push the first support member in a direction, in which the flexible display is disposed, in correspondence to pressing of the elastic body, and the second support member may be configured to be pushed in an opposite direction to a direction, in which the flexible display is disposed, in correspondence to the pressing of the elastic body.

According to an embodiment, the pressing structure may include an extension part extending from the support member to be curved.

According to an embodiment, the pressing structure may include a groove included in the second support member and coupled to the extension part.

According to an embodiment, an elastic material may be disposed in at least one of the first opening or the second opening.

According to an embodiment, the housing may include a first housing, a second housing coupled to the first housing to be foldable, and a third housing coupled to the second housing to be foldable, the hinge assembly may be disposed between the first housing and the second housing, and another hinge assembly disposed between the second housing and the third housing may include a third support member including at least one opening, and the number of the at least one opening included in the third support member is greater than the number of the openings included in the first support member.

According to an embodiment, each of surfaces of the first support member and the second support member, which face each other, may have an inclined surface having an angle of less than or more than 90 degrees.

A portable electronic device of the disclosure according to one of the above-described embodiment may include a flexible display 160, a first housing 110 accommodating a first part of the flexible display, a second housing 120 accommodating a second part of the flexible display, and a hinge structure (or a hinge assembly) functionally coupled to the first housing and the second housing, the hinge structure 201 (or the hinge assembly) may include a first main gear 233a rotated in a first rotational direction, a second main gear 233b interlocking with movement of the first main gear and rotated in a second rotational direction being an opposite direction to the first rotational direction, a first interlocking gear 234a disposed between the first main gear and the second main gear, and enmeshed with the first main gear to transmit the movement of the first main gear to the second main gear, a second interlocking gear 234b disposed between the first interlocking gear and the second main gear, and enmeshed with the second main gear to transmit the movement of the first main gear to the second main gear, a first plate 236a including a first opening 236a_h1 accommodating a first shaft 231 rotated in the same direction as that of the first main gear, and a second opening 236a_h3 accommodating a second shaft 234a_sh rotated in the same direction as that of the first interlocking gear, and a second plate 236b including a third opening 236b_h1 having substantially the same shape as that of the first plate and partially overlapping the first opening, and a fourth opening 236b_h3 partially overlapping the second opening.

According to an embodiment, a lower periphery of the first opening may be disposed to be closer to a direction, in which the flexible display is disposed, than a lower periphery of the second opening, and a periphery of an upper end of the third opening may be disposed to be closer to the direction, in which the flexible display is disposed, than a periphery of an upper end of the fourth opening.

According to an embodiment, the portable electronic device may further include at least one pressing structure that presses the first plate in at least one direction.

According to an embodiment, the hinge structure may further include a cam structure, and an area of a portion of the first opening, which overlaps the third opening, in a section, in which a first cam nose and a second cam nose of the cam structure do not match up with each other, may have a first size, and an area of a portion of the first opening, which overlaps the third opening, in a section, in which a first cam nose and a second cam nose of the cam structure face each other, has a second size that is smaller than the first size.

According to an embodiment, the second opening may be disposed to be spaced apart from the second shaft in a first direction and is disposed to contact the second shaft in a second direction being an opposite to the first direction, and the fourth opening may be disposed to contact the second shaft in the first direction and is disposed to be spaced apart from the second shaft in the second direction.

A portable electronic device of the disclosure according to one of the above-described embodiment may include a flexible display 160, a housing 110, 120 accommodating the flexible display, and a hinge assembly functionally coupled to the housing, wherein the hinge assembly 201 may include a first gear 233a, a second gear 234a functionally coupled to the first gear, a first support member 236a including a first opening 236a_h1 accommodating the first shaft 231 rotated in the same direction as that of the first gear, and a second opening 236a_h3 accommodating a second shaft 234a_sh rotated in the same direction as that of the second gear, a second support member 236b including a third opening 236b_h1 disposed in a first direction of the first support member, and at least a portion of which overlaps the first opening, and a fourth opening 236b_h3, at least a portion of which overlaps the second opening, and a pressing structure 236a_pr1 and 236_gr1 that pushes the first support member in a second direction being perpendicular to the first direction.

According to an embodiment, the first opening and the third opening may have substantially the same size, and a central portion of the first opening is aligned such that a position thereof is different from that of a central portion of the third opening by the pressing structure.

According to an embodiment, the second direction may be perpendicular to the first direction.

According to an embodiment, the first opening and the third opening have substantially the same size, and a central portion of the first opening may be aligned such that a position thereof is different from that of a central portion of the third opening by the pressing structure.

According to an embodiment, the first support member and the second support member may be disposed on opposite sides while the first gear and the second gear being interposed therebetween.

A portable electronic device (or a foldable electronic device) according to one of the above-described embodiments may include a first housing, a second housing, a hinge structure (or a gear assembly or a hinge assembly) connecting the first housing and the second housing, and a display (a flexible display), at least a portion of which is positioned on the first housing and the second housing, and the hinge structure may include a first rotation member rotated about a first axis, a second rotation member rotated about a second axis, a first arm member rotated about a third axis in correspondence to rotation of the first rotation member, a second arm member rotated about a fourth axis in correspondence to rotation of the second rotation member, a first shaft fastened to the first arm member, a second shaft fastened to the second arm member, a first main gear disposed in the first shaft, a second main gear disposed in the second shaft, a first idle gear fastened to the first main gear and having a first gear shaft, a second idle gear fastened between the first idle gear and the second main gear, and having a second gear shaft, first and second shaft holes, into which sides of the first and second shafts are inserted, a gear bracket including first and second gear shaft holes, into which sides of the first and second gear shafts are inserted, and an elastic structure that presses the gear bracket in at least one of the same direction as or an opposite to a direction, into which the first and second shafts and the first and second gear shafts are inserted.

According to an embodiment, the gear bracket may include a first sub gear bracket, in which the first and second shaft holes and or the first and second gear shaft holes are formed, and a second sub gear bracket having third and fourth shaft holes and third and fourth gear shaft holes disposed at the same or similar positions to those of the first to fourth shaft holes.

According to an embodiment, the elastic structure may include a holding groove formed such that one side of the first sub gear bracket is inclined by a specific angle with respect to a vertical direction, and in which the elastic structure is held in the second sub gear bracket.

Meanwhile, the orders of the openings (e.g., the orders of the first to fourth openings) described in the process of describing the above-described embodiment may vary depending on the sequence of defining the support member. Accordingly, the orders described in the claims may be redefined to correspond to the orders described in the detailed description and the drawings of the disclosure. Moreover, at least a portion of the structure of the embodiment depicted in the drawings may be omitted or modifications may be made in a form, in which the configuration of an embodiment may be added to the configuration of another embodiment. Accordingly, one embodiment may not include all the forms depicted in one drawing, but may include only some configurations, and a combination of some configurations with some configurations of other embodiments may also be considered.

According to an embodiment, a portable electronic device (or a foldable electronic device) comprises include a first housing, a second housing, a hinge structure (or a gear assembly or a hinge assembly) connecting the first housing and the second housing and enabling a state of the device to be changed between a folded and an unfolded state, and a display (e.g. a flexible display, at least a portion of which is positioned on at least one of the first housing and the second housing). The hinge structure comprises at least one shaft (e.g. a gear shaft), at least one shaft support member, and biasing means arranged to urge a surface of the shaft support member against a surface of the shaft and maintain contact between said surfaces (and so maintain contact between the shaft and the shaft support member) while a state of the device is changed between the folded and the unfolded states. One or more features of any of the above-described embodiments, and in any combination, may be incorporated in variants of this embodiment, with corresponding advantage. For example, the at least one shaft support member may comprise a first shaft support member or plate 236a comprising a first hole arranged to receive a first shaft and support that shaft about (or around) the shaft's longitudinal axis. The biasing means may then be arranged to urge the first shaft support member in a lateral direction, perpendicular to the longitudinal direction (or axis), to maintain a portion of an internal, or side-wall, surface of the first hole in contact a portion of the cylindrical shaft outer surface. The internal surface of the first hole may also be described as a shaft-facing or shaft-engaging surface, and it may be cylindrical, for example having a diameter slightly larger than a diameter of the shaft (or of a portion of the shaft received by the hole). Certain embodiments may comprise first and second shaft support members, each comprising first holes aligned with each other to receive and support a first shaft. In such embodiments, the biasing means may be arranged to urge the first and second shaft support members in opposite lateral directions, such that their respective first hole internal surfaces are urged into contact with diagonally opposite portions of the shaft's external surface, and effectively grip and/or support the shaft from opposite sides. The biasing means may comprise at least one resilient, elastic, or biasing member arranged to compress the first and second shaft support members together (i.e. apply a compressive force) in a direction parallel to the shaft's longitudinal axis, and conversion means (e.g. a conversion structure or mechanism, for example comprising cooperating structures, features, members, and/or formations on the support members) arranged to convert that compressive force into a lateral force or forces urging the shaft support members apart in a lateral direction. The conversion means may, for example, comprise at least one resilient member or portion (e.g. an integral portion) of the first shaft support member arranged in contact with a surface (e.g. a corner, or inclined surface) of the second shaft support member. The conversion means may additionally, or alternatively, comprise a first sloped, ramp, ramped, or inclined surface of the first shaft support member and a second sloped, ramp, ramped, or inclined surface of the second shaft support members, these first and second sloped surfaces being arranged in contact with each other so as to convert the compressive, axial force, into lateral relative movement of the first and second shaft support members. In certain embodiments, the device may comprise a plurality of shafts, and the or each shaft support member may comprise a plurality of shaft-receiving holes, each hole being arranged to receive and support a respective one of said shafts. In such embodiments. Each shaft may be gripped simultaneously, by means of the or each shaft support member being urged laterally by the biasing means.

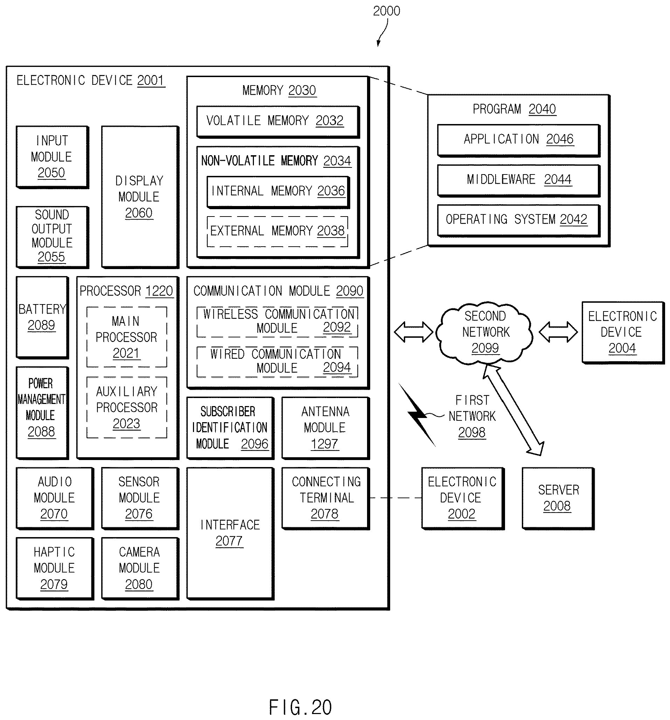

FIG. 20 is a block diagram illustrating an electronic device 2001 in a network environment 2000 according to various embodiments.

Referring to FIG. 20, the electronic device 2001 in the network environment 2000 may communicate with an electronic device 2002 via a first network 2098 (e.g., a short-range wireless communication network), or at least one of an electronic device 2004 or a server 2008 via a second network 2099 (e.g., a long-range wireless communication network). According to an embodiment, the electronic device 2001 may communicate with the electronic device 2004 via the server 2008. According to an embodiment, the electronic device 2001 may include a processor 2020, a memory 2030, an input module 2050, a sound output module 2055, a display module 2060, an audio module 2070, a sensor module 2076, an interface 2077, a connecting terminal 2078, a haptic module 2079, a camera module 2080, a power management module 2088, a battery 2089, a communication module 2090, a subscriber identification module (SIM) 2096, or an antenna module 2097. In some embodiments, at least one (e.g., the connecting terminal 2078) of the components may be omitted from the electronic device 2001, or one or more other components may be added in the electronic device 2001. In some embodiments, some of the components may be implemented as single integrated circuitry. For example, some (e.g., the sensor module 2076, the camera module 2080, or the antenna module 2097) of the components may be implemented as embedded in the display module 2060 (e.g., a display).

The processor 2020 may execute, for example, software (e.g., a program 2040) to control at least one other component (e.g., a hardware or software component) of the electronic device 2001 coupled with the processor 2020, and may perform various data processing or computation. According to one embodiment, as at least part of the data processing or computation, the processor 2020 may load a command or data received from another component (e.g., the sensor module 2076 or the communication module 2090) in a volatile memory 2032, process the command or the data stored in the volatile memory 2032, and store resulting data in a non-volatile memory 2034. According to an embodiment, the processor 2020 may include a main processor 2021 (e.g., a central processing unit (CPU) or an application processor (AP)), and an auxiliary processor 2023 (e.g., a graphics processing unit (GPU), a neural processing unit (NPU), an image signal processor (ISP), a sensor hub processor, or a communication processor (CP)) that is operable independently from, or in conjunction with, the main processor 2021. When the electronic device 2001 includes the main processor 2021 and the auxiliary processor, the auxiliary processor 2023 may be adapted to consume less power than the main processor 2021, or to be specific to a specified function. The auxiliary processor 2023 may be implemented as separate from, or as part of the main processor 2021.

The auxiliary processor 2023 may control at least some of functions or states related to at least one component (e.g., the display module 2060, the sensor module 2076, or the communication module 2090) among the components of the electronic device 2001, instead of the main processor 2021 while the main processor 2021 is in an inactive (e.g., sleep) state, or together with the main processor 2021 while the main processor 2021 is in an active state (e.g., executing an application). According to an embodiment, the auxiliary processor 2023 (e.g., an image signal processor or a communication processor) may be implemented as part of another component (e.g., the camera module 2080 or the communication module 2090) functionally related to the auxiliary processor 2023. According to an embodiment, the auxiliary processor 2023 (e.g., a neural network processing device) may include a hardware structure specified for processing an artificial intelligence (AI) model. The AI model may be generated through machine learning. The learning may be performed by the electronic device 2001 performing the AI model, and may be performed through an additional server (e.g., the server 2008). A learning algorithm may include, for example, a supervised learning algorithm, an unsupervised learning algorithm, a semi-supervised learning algorithm, or a reinforcement learning algorithm, but the disclosure is not limited thereto. The AI model may include a plurality of artificial neural network (ANN) layers. The ANN may include a deep neural network (DNN), a convolutional neural network (CNN), a recurrent neural network (RNN), a restricted boltzman machine (RBM), a deep belief network (DBN), a bidirectional recurrent deep neural network (BRDNN), a deep Q-networks or the combination of the above networks, but the disclosure is not limited thereto. The AI model may additionally or alternatively include a software structure, in addition to a hardware structure.

The memory 2030 may store various data used by at least one component (e.g., the processor 2020 or the sensor module 2076) of the electronic device 2001. The various data may include, for example, software (e.g., the program 2040) and input data or output data for a command related thererto. The memory 2030 may include the volatile memory 2032 or the non-volatile memory 2034.

The program 2040 may be stored in the memory 2030 as software, and may include, for example, an operating system (OS) 2042, middleware 2044, or an application 2046.

The input module 2050 may receive a command or data to be used by other component (e.g., the processor 2020) of the electronic device 2001, from the outside (e.g., a user) of the electronic device 2001. The input module 2050 may include, for example, a microphone, a mouse, a keyboard, a key (e.g., a button), or a digital pen (e.g., a stylus pen).

The sound output module 2055 may output sound signals to the outside of the electronic device 2001. The sound output module 2055 may include, for example, a speaker or a receiver. The speaker may be used for general purposes, such as playing multimedia or playing record, and the receiver may be used for an incoming call. According to an embodiment, the receiver may be implemented as separate from, or as part of the speaker.

The display module 2060 may visually provide information to the outside (e.g., a user) of the electronic device 2001. The display module 2060 may include, for example, a display, a hologram device, or a projector and control circuitry to control a corresponding one of the display, hologram device, and projector. According to an embodiment, the display module 2060 may include touch sensor adapted to detect a touch, or a pressure sensor adapted to measure the intensity of force incurred by the touch.

The audio module 2070 may convert a sound into an electrical signal and vice versa. According to an embodiment, the audio module 2070 may obtain the sound via the input module 2050, or output the sound via the sound output module 2055 or an external electronic device (e.g., the electronic device 2002) (e.g., speaker of headphone) directly (e.g., by wire) or wirelessly coupled with the electronic device 2001.

The sensor module 2076 may detect an operational state (e.g., power or temperature) of the electronic device 2001 or an environmental state (e.g., a state of a user) external to the electronic device 2001, and then generate an electrical signal or data value corresponding to the detected state. According to an embodiment, the sensor module 2076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2077 may support one or more specified protocols to be used for the electronic device 2001 to be coupled with the external electronic device (e.g., the electronic device 2002) directly (e.g., by wire) or wirelessly. According to an embodiment, the interface 2077 may include, for example, a high definition multimedia interface (HDMI), a universal serial bus (USB) interface, a secure digital (SD) card interface, or an audio interface.

A connecting terminal 2078 may include a connector via which the electronic device 2001 may be physically connected with the external electronic device (e.g., the electronic device 2002). According to an embodiment, the connecting terminal 2078 may include, for example, a HDMI connector, a USB connector, a SD card connector, or an audio connector (e.g., a headphone connector).

The haptic module 2079 may convert an electrical signal into a mechanical stimulus (e.g., a vibration or a movement) or electrical stimulus which may be recognized by a user via his tactile sensation or kinesthetic sensation. According to an embodiment, the haptic module 2079 may include, for example, a motor, a piezoelectric element, or an electric stimulator.

The camera module 2080 may capture a still image or moving images. According to an embodiment, the camera module 2080 may include one or more lenses, image sensors, image signal processors, or flashes.

The power management module 2088 may manage power supplied to the electronic device 2001. According to one embodiment, the power management module 2088 may be implemented as at least part of, for example, a power management integrated circuit (PMIC).

The battery 2089 may supply power to at least one component of the electronic device 2001. According to an embodiment, the battery 2089 may include, for example, a primary cell which is not rechargeable, a secondary cell which is rechargeable, or a fuel cell.

The communication module 2090 may support establishing a direct (e.g., wired) communication channel or a wireless communication channel between the electronic device 2001 and the external electronic device (e.g., the electronic device 2002, the electronic device 2004, or the server 2008) and performing communication via the established communication channel. The communication module 2090 may include one or more communication processors that are operable independently from the processor 2020 (e.g., the application processor (AP)) and supports a direct (e.g., wired) communication or a wireless communication. According to an embodiment, the communication module 2090 may include a wireless communication module 2092 (e.g., a cellular communication module, a short-range wireless communication module, or a global navigation satellite system (GNSS) communication module) or a wired communication module 2094 (e.g., a local area network (LAN) communication module or a power line communication (PLC) module). The corresponding communication module among the communication modules may communicate with the external electronic device 2004 via the first network 2098 (e.g., a short-range communication network, such as Bluetooth^{™}, wireless-fidelity (WiFi) direct, or infrared data association (IrDA)) or the second network 2099 (e.g., a long-range communication network, such as a legacy cellular network, 5G network, next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2092 may identify or authenticate the electronic device 2001 in a communication network, such as the first network 2098 or the second network 2099, using subscriber information (e.g., international mobile subscriber identity (IMSI)) stored in the subscriber identification module 2096.

The wireless communication module 2092 may support a 5G network and a next-generation communication technology, for example, a new radio (NR) access technology after a 4G network. The NR access technology may support high-speed transmission for high capacity data (enhanced mobile broadband; eMBB), terminal power minimizing and multiple terminal access (massive machine type communication; mMTC), or ultra-reliable and low-latency communications (URLLC). The wireless communication module 2092 may support a high-frequency band (e.g., mmWave band) to achieve, for example, a higher data rate. The wireless communication module 2092 may support various technologies, for example, beamforming, massive multiple-input and multiple-output (MIMO), Full-dimensional MIMO, an array antenna, analog beam-forming, or a large-scale antenna, to secure performance in high frequency bands. The wireless communication module 2092 may support various requirements defined in the electronic device 2001, the external electronic device (e.g., the electronic device 2004) or the network system (e.g., the second network 2099). According to one embodiment, the wireless communication module 2092 may support a peak data rate (e.g., 20Gbps or more) for eMBB realization, loss coverage (e.g., 164 dB or less) for mMTC realization, or U-plane latency (e.g., 0.5 ms or less, or the round trip of 1 ms or less in each of a downlink (DL) and an uplink (UL)) for URLCC realization.

The antenna module 2097 may transmit or receive a signal or power to or from the outside (e.g., the external electronic device) of the electronic device 2001. According to an embodiment, the antenna module 2097 may include an antenna including a radiating element composed of a conductive material or a conductive pattern formed in or on a substrate (e.g., PCB). According to an embodiment, the antenna module 2097 may include a plurality of antennas (e.g., an array antenna). In such a case, at least one antenna appropriate for a communication scheme used in the communication network, such as the first network 2098 or the second network 2099, may be selected, for example, by the communication module 2090 from the plurality of antennas. The signal or the power may then be transmitted or received between the communication module 2090 and the external electronic device via the selected at least one antenna. According to an embodiment, another component (e.g., a radio frequency integrated circuit (RFIC)) other than the radiating element may be additionally formed as part of the antenna module 2097.

According to various embodiments, the antenna module 2097 may form an mmWave antenna module. According to an embodiment, the mmWave antenna module may include a printed circuit board, an RFIC disposed on a first surface (e.g., a bottom surface) of the printed circuit board, or disposed adjacent to the first surface to support the specific high frequency band (e.g., mmWave band), and a plurality of antennas (e.g., an array antenna) disposed on a second surface (e.g., a top surface or a side surface) of the printed circuit board or disposed adjacent to the second surface to transmit or receive a signal having the specified high frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2001 and the external electronic device 2004 via the server 2008 coupled with the second network 2099. Each of the external electronic devices 2002 or 2004 may be a device of a same type as, or a different type, from the electronic device 2001. According to an embodiment, all or some of operations to be executed at the electronic device 2001 may be executed at one or more of the external electronic devices 2002, 2004, or 2008. For example, when the electronic device 2001 should perform a function or a service automatically, or in response to a request from a user or another device, the electronic device 2001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2001. The electronic device 2001 may provide the outcome, with or without further processing of the outcome, as at least part of a reply to the request. To that end, a cloud computing, distributed computing, mobile edge computing (MEC), or client-server computing technology may be used, for example. The electronic device 2001 may provide an ultra-latency service by using, for example, distributed computing or mobile edge computing. According to various embodiments, the external electronic device 2004 may include the Internet of things (IoT). The server 2008 may be an artificial server using machine learning and/or a neural network. According to an embodiment, the external electronic device 2004 or the server 2008 may be included in the second network 2099. The electronic device 2001 may be applied to an artificial intelligence service (e.g., a smart home, a smart city, a smart car, or healthcare service) based on the 5G communication technology and the loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B**,** or C," "at least one of A, B**,** and C," and "at least one of A, B**,** or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2040) including one or more instructions that are stored in a storage medium (e.g., internal memory 2036 or external memory 2038) that is readable by a machine (e.g., the electronic device 2001). For example, a processor (e.g., the processor 2020) of the machine (e.g., the electronic device 2001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities and some of multiple entities may be separately disposed on the other components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a flexible display (160);
a housing (110, 120) accommodating the flexible display; and
a hinge assembly (201) coupled to the housing, wherein the hinge assembly includes:
a first gear shaft (234a_sh);
a second gear shaft (234b_sh);
a first support member (236a) including a first opening (236a_h3) and a second opening (236a_h4); and
a second support member (236b) including a third opening (236b_h) and a fourth opening (236b_h4),
wherein the first support member and the second support member are disposed to be adjacent to each other in a state, in which the first gear shaft is inserted through the first opening and the third opening, and a state, in which the second gear shaft is inserted through the second opening and the fourth opening,
wherein the first opening partially overlaps the third opening whereby the first gear shaft contacts a peripheral portion defining the first opening in a first direction and contacts a peripheral portion defining the third opening in a second direction being different from the first direction, and
wherein the second opening partially overlaps the fourth opening whereby the second gear shaft contacts a peripheral portion defining the second opening in the first direction and partially contacts a periphery defining the fourth opening in the second direction.

2. The electronic device of claim 1, wherein the first opening has substantially the same size as that of the third opening, and a central portion of the first opening is aligned such that a position thereof is different from a central portion of the third opening.

3. The electronic device of claim 1, wherein the hinge assembly further includes a cam structure, and
wherein a first size corresponding to a portion, at which the first opening and the third opening overlap each other, in a section, a first cam nose and a second cam nose of the cam structure are located not to match up with each other, is greater than a second size corresponding to a portion, at which the first opening and the third opening overlap each other, in a section, in which the first cam nose and the second cam nose face each other.

4. The electronic device of claim 1, wherein the first opening being circular partially overlaps the third opening being non-circular.

5. The electronic device of claim 4, wherein the second opening being circular partially overlaps the fourth opening being non-circular.

6. The electronic device of claim 1, wherein the first support member and the second support member are coupled to each other through a pressing structure.

7. The electronic device of claim 6, wherein at least a portion of the pressing structure includes:
an elastic body configured to press the second support member toward the first support member, and
wherein the second support member is configured to push the first support member in a direction, in which the flexible display is disposed, in correspondence to pressing of the elastic body, and the second support member is configured to be pushed in an opposite direction to a direction, in which the flexible display is disposed, in correspondence to the pressing of the elastic body.

8. The electronic device of claim 7, wherein the pressing structure includes an extension part extending from the support member to be curved.

9. The electronic device of claim 8, wherein the pressing structure includes a groove included in the second support member and coupled to the extension part.

10. The electronic device of claim 1, wherein an elastic material is disposed in at least one of the first opening or the second opening.

11. The electronic device of claim 1, wherein the housing includes a first housing, a second housing coupled to the first housing to be foldable, and a third housing coupled to the second housing to be foldable,
wherein the hinge assembly is disposed between the first housing and the second housing, and
wherein another hinge assembly disposed between the second housing and the third housing includes a third support member including at least one opening, and the number of the at least one opening included in the third support member is greater than the number of the openings included in the first support member.

12. The electronic device of claim 1, wherein each of surfaces of the first support member and the second support member, which face each other, has an inclined surface having an angle of less than or more than 90 degrees.

13. A portable electronic device comprising:
a flexible display (160);
a housing (110, 120) accommodating the flexible display; and
a hinge assembly functionally coupled to the housing, wherein the hinge assembly (201) includes:
a first gear (233a);
a second gear (234a) functionally coupled to the first gear;
a first support member (236a) including a first opening (236a_h1) accommodating the first shaft (231) rotated in the same direction as that of the first gear, and a second opening (236a_h3) accommodating a second shaft (234a_sh) rotated in the same direction as that of the second gear;
a second support member (236b) including a third opening (236b_h1) disposed in a first direction of the first support member, and at least a portion of which overlaps the first opening, and a fourth opening (236b_h3), at least a portion of which overlaps the second opening; and
a pressing structure (236a_pr1, 236_gr1) configured to push the first support member in a second direction being perpendicular to the first direction.

14. The portable electronic device of claim 13, wherein the first opening and the second opening have substantially the same size, and a central portion of the first opening is aligned such that a position thereof is different from that of a central portion of the third opening by the pressing structure.

15. The portable electronic device of claim 13, wherein the second direction is perpendicular to the first direction.
